(19) **Europäisches Patentamt**

**European Patent Office**

**Office européen des brevets**

(11) **EP 1 562 187 A2**

(12) **EUROPEAN PATENT APPLICATION**

(43) Date of publication:
**10.08.2005 Bulletin 2005/32**

(51) Int Cl.7: **G11B 7/135**

(21) Application number: **05250597.1**

(22) Date of filing: **03.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **09.02.2004 JP 2004032127**
 **12.03.2004 JP 2004070808**
 **09.04.2004 JP 2004115472**

(71) Applicant: **Konica Minolta Opto, Inc.**
 **Hachioji-shi, Tokyo 192-8505 (JP)**

(72) Inventors:
 • **Kimura, Tohru**
  **Hachioji-shi Tokyo, 192-8505 (JP)**
 • **Mori, Nobuyoshi**
  **Hachioji-shi Tokyo, 192-8505 (JP)**

 • **Hashimura, Junji**
  **Hachioji-shi Tokyo, 192-8505 (JP)**
 • **Atarashi, Yuichi**
  **Hachioji-shi Tokyo, 192-8505 (JP)**
 • **Kojima, Toshiyuki**
  **Hachioji-shi Tokyo, 192-8505 (JP)**
 • **Ikenaka, Kiyono**
  **Hachioji-shi Tokyo, 192-8505 (JP)**
 • **Mimori, Mitsuru**
  **Hachioji-shi Tokyo, 192-8505 (JP)**

(74) Representative: **Nicholls, Michael John**
 **J.A. KEMP & CO.**
 **14, South Square**
 **Gray's Inn**
 **London WC1R 5JJ (GB)**

(54) **Optical pick-up apparatus and optical information recording and/or reproducing apparatus**

(57) An optical pickup apparatus comprising: a first, second and third light sources emitting first, second and third light flux having first wavelength of $\lambda 1$, second wavelength of $\lambda 2$ and third wavelength of $\lambda 3$, respectively; and an objective optical system converging the first, second and third light fluxes onto an information recording surface of a first, second and third optical disk, respectively, wherein the objective optical system has a phase structure, and wherein when a first, second and third magnifications of the objective optical system for conducting reproducing information from and/or recording information on the first, second and third optical disks are represented by M1, M2, and M3, respectively, $|d_{M1-M2}|$, which represents an absolute value of a difference between M1 and M2, satisfies the following relation.

$$|d_{M1-M2}| < 0.02$$

FIG. 5

**Description**

**RELATED APPLICATIONS**

This application is based on patent applications Nos. 2004-32127, 2004-70808, and 2004-115472 filed in Japan, the entire contents of which are hereby incorporated by reference.

**TECHNICAL FIELD**

The present invention relates to an optical pick-up apparatus and optical information recording and/or reproducing apparatus.

**TECHNICAL BACHGROUND**

Recently, in the optical pick-up apparatus, the shortening of the wavelength of a laser light source used as a light source for reproducing of the information recorded in an optical disk, or for recording of the information in the optical disk, is advanced, for example, a laser light source of wavelength 405 nm such as a blue violet semiconductor laser or a blue violet SHG laser by which the wavelength conversion of the infrared semiconductor laser is conducted by using the second harmonics generation, is put to practical use. When these blue violet laser light sources are used, in the case where an objective lens of the same numerical aperture (NA) as DVD (digital versatile disk) is used, the information of 15 - 20 GB can be recorded in an optical disk of diameter 12 cm, and in the case where NA of the objective lens is increased to 0.85, the information of 23 - 25 GB can be recorded in the optical disk of diameter 12 cm. Hereinafter, the optical disk and photo-magnetic disk for which the flue violet laser light source is used, are generally referred as "high density optical disk".

Hereupon, in the high density optical disk using the objective lens of NA 0.85, because the coma generated due to the skew of the optical disk is increased, a protective layer is designed thinner than a case in DVD, (0.1 mm to 0.6 mm of DVD), and the coma amount due to the skew is reduced.

However, by only saying that the information can be adequately recorded/reproduced for such a high-density optical disk, it cannot be said that a value as a product of the optical disk player/recorder is enough. In the present time, when the actuality that DVD or CD (compact disk) in which various information are recorded is put in a market, is based on, by only a case where the information can be recorded/reproduced for the high-density optical disk, it is insufficient, and for example, a fact that the information can be adequately recorded/reproduced also for a user-own DVD or CD, introduces to a fact that a commercial value as the optical disk player/recorder is increased. From such a background, it is desirable that the optical pick-up apparatus mounted in the optical disk player/recorder for the high-density optical disk has a performance by which the information is adequately recorded/reproduced while the compatibility is being kept with also any one of the high-density optical disk and DVD, furthermore, CD.

As a method by which the information is adequately recorded/reproduced while the compatibility is being kept with also any one of the high-density optical disk and DVD, furthermore, CD, a method by which an optical system for the high-density optical disk and the optical system for DVD or CD are selectively switched corresponding to the recording density of the optical disk for which the information is recorded/reproduced, can be considered, however, because a plurality of optical systems are necessary, it is disadvantageous for down-sizing, further, the cost is increased.

Accordingly, for the purpose to intend that the structure of the optical pick-up apparatus is simplified and the cost is reduced, even in the optical pick-up apparatus having the compatibility, it is preferable that the optical system for the high-density optical disk and the optical system for DVD or CD are made to be in common and the number of parts structuring the optical pick-up apparatus are reduced at most. Then, it is most advantageous that objective optical system arranged in opposite to the optical disk is made to be in common with each other, in the simplification of the structure of the optical pick-up apparatus and the cost reduction. Hereupon, to obtain the objective optical system common to a plurality kinds of optical disks whose recording/reproducing wavelengths are different from each other, it is necessary that the phase structure having the wavelength dependency of the spherical aberration is formed in the objective optical system.

In European Patent Application Publication No. 1304689 (hereinafter, Patent Document 1), the optical pick-up apparatus in which the objective optical system which has a diffractive structure as the phase structure and can be commonly used for the high-density optical disk and the conventional DVD and CD, and this objective optical system is mounted, is written.

However, the objective optical system written in the above Patent Document 1, because a magnification difference when the information is recorded/reproduced for each of optical disks, is large, it is difficult that, in the optical pick-up apparatus, optical parts other than the objective optical system are made to be in common with each other, or the light source module into which a plurality of kinds of light sources are integrated, is used, and there is a problem that the simplification of the structure of the optical pick-up apparatus, and the cost reduction of it can not be realized.

**SUMMARY**

An object of the present invention is one in which the above problem is considered, and is to provide an optical pick-up apparatus in which an objective optical system which can adequately conduct the recording and/or reproducing of the information for 3 different kinds of optical disks is mounted, and an optical pick-up apparatus which can realize the simplification of its structure and the cost reduction of it, and an optical information recording reproducing apparatus.

In the present specification, the optical disk using the blue violet semiconductor laser or blue violet SHG laser as the light source for recording/reproducing of the information is generally referred as "high-density optical disk", and other than the optical disk (for example, blue ray disk) of the standard in which the recording/reproducing of the information is conducted by the objective optical system of NA 0.85, and whose thickness of the protective layer is about 0.1 mm, the optical disk (for example, HD, DVD) of the standard in which the recording/reproducing of the information is conducted by the objective optical system of NA 0.65 to 0.67, and whose thickness of the protective layer is about 0.6 mm, is also included therein. Further, other than the optical disk having such a protective layer on its recording surface, the optical disk having the protective layer of the thickness of about several - several tens nm on the information recording surface, or the optical disk whose thickness of the protective layer or protective film is 0, is also included therein. Further, in the present specification, in the high-density optical disk, the photoelectromagnetic disk using the blue violet semiconductor laser or blue violet SHG laser as the light source for the recording/reproducing of the information is also included.

In the present specification, DVD is a general name of the optical disks of DVD series such as DVD-ROM, DVD-Video, DVD-Audio, DVD-RAM, DVD-R, DVD-RW, DVD+R, DVD+RW, and CD is a general name of the optical disks of CD series such as CD-ROM, CD-Audio, CD-Video, CD-R, CD-RW.

The first mode of the present invention to solve the above problem is an optical pick-up apparatus comprising: a first light source to emit first light flux of first wavelength $\lambda 1$; a second light source to emit second light flux of second wavelength $\lambda 2$ ($\lambda 2 > \lambda 1$); a third light source to emit third light flux of third wavelength $\lambda 3$ ($\lambda 3 > \lambda 2$); and an objective optical system to converge the first light flux onto the information recording surface of the first optical disk, the second light flux onto the information recording surface of the second optical disk, and the third light flux onto the information recording surface of the third optical disk. Further, the objective optical system has a phase structure. Still further, in the first mode of the optical pick-up apparatus, when the recording and/or reproducing of the information is conducted for the first optical disk, the magnification of the objective optical system is the first magnification M1, when the recording and/or reproducing of the information is conducted for the second optical disk, the magnification of the objective optical system is the second magnification M2, when the recording and/or reproducing of the information is conducted for the third optical disk, the magnification of the objective optical system is the third magnification M3, $|d_{M1-M2}|$, which is the absolute value of the difference between M1 and M2 is not larger than 0.02.

**BRIEF DESCRIPTION OF THE DRAWINGS**

Figs. 1(a) and 1(b) are side views showing examples of a phase structure.
Figs. 2(a) and 2(b) are side views showing examples of a phase structure.
Figs. 3(a) and 3(b) are side views showing examples of a phase structure.
Figs. 4(a) and 4(b) are side views showing examples of a phase structure.
Fig. 5 is a main part plan view showing a structure of an optical pick-up apparatus.
Figs. 6(a), 6(b) and 6(c) are respectively a front view, side view, and rear view showing a aberration compensating element.
Fig. 7 is a main part plan view showing the structure of the optical pick-up apparatus.
Fig. 8 is a main part plan view showing the structure of the optical pick-up apparatus.
Fig. 9 is a main part plan view showing the structure of the optical pick-up apparatus.
Fig. 10 is a main part plan view showing the structure of the optical pick-up apparatus.
Fig. 11 is a main part plan view showing the structure of the optical pick-up apparatus.
Fig. 12 is a main part plan view showing the structure of the optical pick-up apparatus.
Fig. 13 is a main part plan view showing the structure of the optical pick-up apparatus.
Fig. 14 is a longitudinal spherical aberration view in Example 1.

**DETAILED DESCRIPTION OF THE INVEENTION**

As written in the first mode, when $|d_{M1-M2}|$, which is the absolute value of the difference between the first magnification M1 and the second magnification M2, is made to be not larger than 0.02, in the optical pick-up apparatus in which this objective optical system is mounted, because the optical parts other than the objective optical system can be made to be in common with each other, or the light source module into which a plurality of kinds of light sources are integrated can be used, the simplification of the structure of the optical pick-up apparatus and the cost reduction become possible.

The phase structure formed on the optical surface of the objective optical system is not limited as long as it is the structure to compensate the chromatic aberration due to the wavelength difference of the first wavelength $\lambda 1$ and the second wavelength $\lambda 2$, and/or the spherical aberration due to the difference of the thickness between the protective layer of the first optical disk and the protective layer of the second optical disk. The chromatic aberration referred herein indicates the difference of the paraxial image point positions due to the wavelength difference, and/or the spherical aberration due to the wavelength difference.

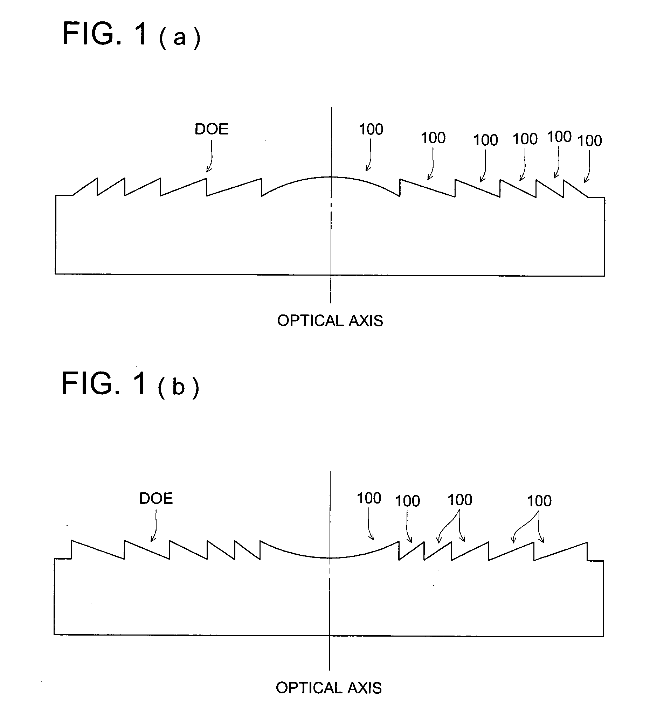

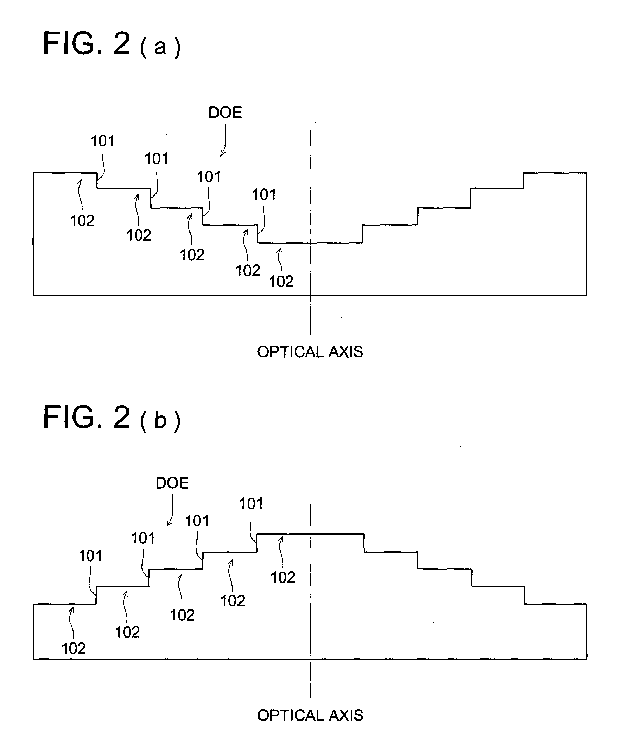

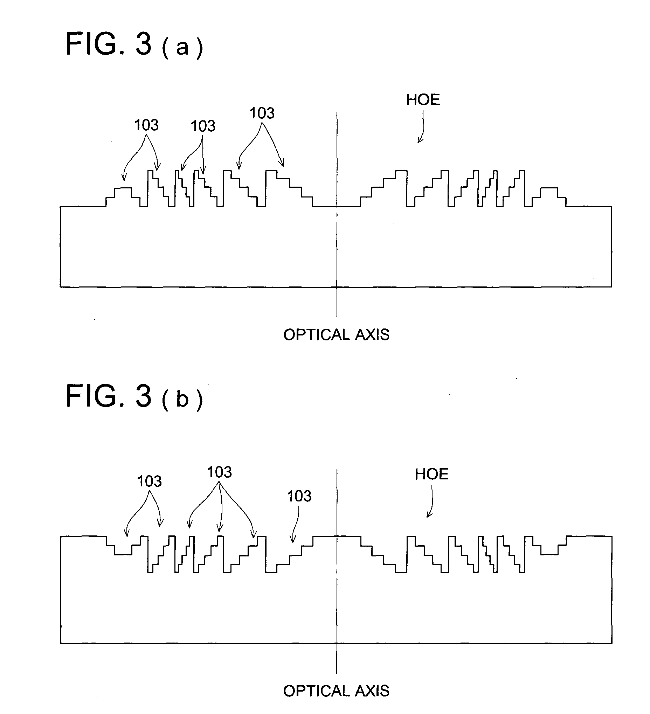

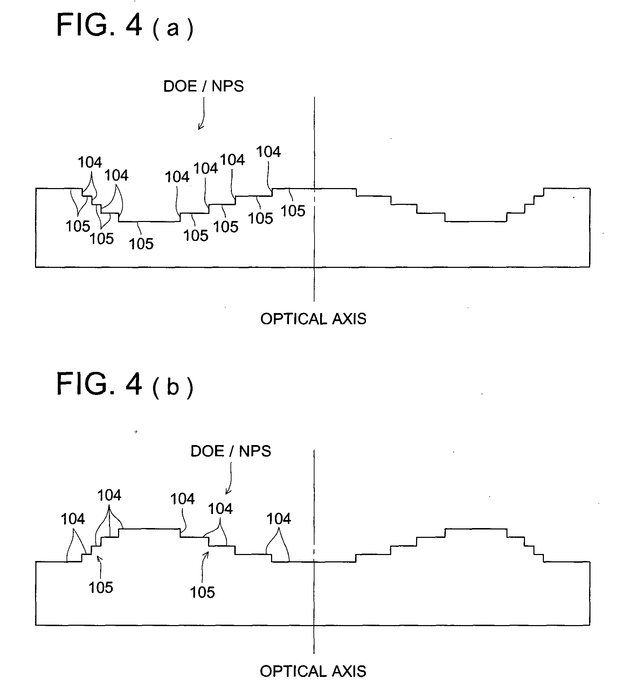

As the phase structure, as typically shown in Figs. 1(a) and 1(b), a structure, which is structured by a plurality of ring-shaped zones 100, and whose sectional shape including the optical axis is a saw-toothed shape, or as typically shown in Figs. 2(a) and 2(b), a structure, which is structured by a plurality of ring-shaped zones 102 in which the direction of step difference 101 is the same within an effective diameter, and whose sectional shape including the optical axis is stepwise shape, or as typically shown in Figs. 3(a) and 3(b), a structure which is structured by a plurality of ring-shaped zones 103 and a stepwise structure is formed on each of the ring-shaped zones, or as typically shown in Figs. 4(a) and 4(b), a structure, which is structured by a plurality of ring-shaped zones 105 in which the direction of the step difference 104 is switched on the midway of the effective diameter, and whose sectional shape including the optical axis is the stepwise shape, are preferably utilized.

The phase structure is not limited as long as it has the chromatic aberration and/or spherical aberration compensating function as described above. The phase structure may be a diffractive structure, which generates diffractive action to the light flux passing through the diffractive structure, and may be a optical path difference-generating structure, which generates a optical path difference to the light flux passing through the optical path difference-generating structure, and does not generates diffractive action to the light flux. Accordingly, the structure typically shown in Figs. 4(a) and 4(b) may be a case of a diffractive structure, or a case of an optical path difference-generating structure. Hereupon, Fig. 1(a) to Fig. 4(b) are typically shown as a case where each of phase structure is formed on the plane, however, each of phase structures may also be formed on the spherical surface or aspheric surface.

Further, in the present specification, "objective optical system" indicates an optical system arranged opposing to the optical disk in the optical pick-up apparatus, and at least including the light converging element having a function to light converge the light fluxes whose wavelengths emitted from the light source are different from each other, on respective information recording surfaces of optical disks whose recording densities are different from each other. The objective optical system may also be structured only by the light converging element, and in such a case, the phase structure is formed on the optical surface of the light converging element.

Furthermore, when there is an optical element, which conducts the tracking and focusing by an actuator being integrated with the light converging element, an optical system structured by these optical elements and light converging element is the objective optical system. When the objective optical system is structured by such a plurality of optical elements, the phase structure may also be formed on the optical surface of the light converging element, however, for the purpose that the influence of eclipse of the light flux by the step difference parts of the phase structure is reduced, it is preferable that the phase structure is formed on the optical surface of the optical element other than the light converging element.

Further, the light converging element may be formed of a plastic lens or a glass lens.

When the light converging element is formed of a plastic lens, it is preferable that a cyclic olefin series plastic material is used, and in the cyclic olefin series materials, it is more preferable that a plastic material whose refractive index $N_{405}$ at the temperature 25 °C for the wavelength 405 nm, is within a range of 1.54 to 1.60, and the refractive index changing rate $dN_{405}/dT$ ($°C^{-1}$) to the wavelength 405 nm following the temperature change in a temperature range of -5 °C to 70 °C, is within a range of $-10 \times 10^{-5}$ to $-8 \times 10^{-5}$, is used.

Further, in the case where the light converging element is formed of a glass lens, when a glass material whose glass transition point Tg is not larger than 400 °C is used, because the molding at the comparatively low temperature becomes possible, a life of molding die can be extended. As such a glass material whose glass transition point Tg is low, for example, there is K-PG 325 or K-PG 375 (both are trade names) by Sumita Optical Glass Co.

Hereupon, because a glass lens has, generally, a specific weight larger than a plastic lens, when the light converging element is formed of a glass lens, the weight becomes large, and it is a burden on an actuator to drive the objective optical system. Therefore, when the light converging element is formed of the glass lens, it is preferable to use a glass material whose specific weight is small. Specifically, it is preferable that the specific weight is not larger than 3.0, and more preferable that it is not larger than 2.8.

Further, as the material of the light converging element, a material in which a particle whose diameter is not larger than 30 nm is dispersed, may also be used. In the plastic material in which, when the temperature rises, the refractive index is lowered, when an inorganic material in which, when the temperature rises, the refractive index rises, is uniformly mixed, it becomes possible that the temperature dependency of the refractive indexes of both is cancelled out. Hereby, while keeping the molding property of the plastic material, the optical material whose refractive index change following the temperature change is small, (hereinafter, such an optical material is referred as "athermal resin"), can be obtained.

Herein, the temperature change of the refractive index of the light converging element will be described. The changing rate of the refractive index to the temperature change is based on the formulation of Lorentz-Lorenz, expressed by A of the following mathematical equation (Math-1) when the refractive index n is differentiated by the temperature T.

(Math-1)

$$A = \frac{(n^2 + 2)(n^2 - 1)}{6n} \{(-3\alpha) + \frac{1}{[R]} \frac{\partial [R]}{\partial T}\}$$

Where, n is refractive index of the light converging element to the wavelength of the laser light source, $\alpha$ is a liner expansion coefficient, and [R] is a molecular refractive power of the light converging element.

In the case of general plastic materials, because the contribution of the second term is small comparing to the first term, the second term can be almost disregarded. For example, in the case of acrylic resin (PMMA), a linear expansion coefficient $\alpha$ is $7 \times 10^{-5}$, and when it is substituted into the above equation, A becomes A = $-12 \times 10^{-5}$ and almost coincides with the observation value. Herein, in the athermal resin, when it is dispersed in a minute particle plastic material whose diameter is not larger than 30 nm, the contribution of the second term of the above equation is practically made large, and cancelled with the change by the liner expansion of the first term. Specifically, it is preferable that the changing rate of the refractive index to the temperature change which is conventionally almost $-12 \times 10^{-5}$ is suppressed to an absolute value which is not larger than $10 \times 10^{-5}$. More preferably, to suppress to not larger than 8 $\times 10^{-5}$, further preferably, not larger than $6 \times 10^{-5}$, is preferable in a reason that the spherical aberration change following the temperature change of the light converging element is reduced.

For example, when the minute particle of niobium oxide ($Nb_2O_5$) is dispersed in acrylic resin (PMMA), the dependency of the refractive index change on such a temperature change can be dissolved. The plastic material, which is a base material, is 80 in a volumetric ratio, and the niobium oxide is a ratio of about 20, and they are uniformly mixed. Although there is a problem that minute particles are easily flocculated, a technology that electric charges are given onto the particle surface and flocculation is dispersed, is well known, and necessary dispersion condition can be generated.

Hereupon, this volumetric ratio can be appropriately increased and decreased for controlling the ratio of change of the refractive index to the temperature change, and plural kinds of nano-size inorganic particles are blended and can also be dispersed.

The volumetric ratio, although in the above example, it is 80: 20, can be appropriately adjustable between 90: 10 - 60: 40. When the volumetric ratio is smaller than 90: 10, the effect of the refractive index change suppression becomes small, inversely, when it exceeds 60: 40, it is not preferable because a problem generates in the moldability of athermal resin.

It is preferable that the minute particle is an inorganic material, further, it is preferable that it is an oxide. Then, it is preferable that the oxidation condition is saturated, and the oxide, which is not oxidized more than that state, is preferable. It is preferable that it is an inorganic material, for the purpose that the reaction to the plastic material which is a high polymer organic compound is suppressed low, or by a fact that it is an oxide, the transmission deterioration or the wave-front aberration deterioration following the long time irradiation of the blue violet laser can be prevented. Particularly, in a severe condition that the blue violet laser is irradiated under the high temperature, the oxidation is easily accelerated, however, when it is such an inorganic oxide, the transmission deterioration or the wave-front aberration deterioration by the oxidation can be prevented.

Hereupon, when the diameter of the minute particle dispersed in the plastic material is large, the scattering of the incident light flux is easily generated, and the transmission of the light converging element is lowered. In the high density optical disk, in the present condition that the output of the blue violet laser used for the recording/reproducing of the information is not so high, when the transmission to the blue violet laser light flux of the light converging element is low, it becomes disadvantageous from a view point of speeding-up of the recording speed, the multi-layer disk-correspondence. Accordingly, it is preferable that the diameter of the minute particle dispersed in the plastic material is preferably not larger than 20 nm, further preferably, not larger than 10 - 15 nm, for a reason to prevent the lowering of the transmission of the light converging element.

In the optical pick-up apparatus of the present invention, it is one of preferable modes that the phase structure is the diffractive structure.

When, as the phase structure, the diffractive structure is used, it can more increase the characteristic of the compatible objective optical system for 3 kinds of optical disks.

In the optical pick-up apparatus of the present invention, it is preferable that $|d_{M1-M3}|$, which represents an absolute value of a difference between M1 and M3 and $|d_{M2-M3}|$, which represents an absolute value of a difference between M2 and M3, satisfy the following relations.

$$0.02 < |d_{M1-M3}|$$

$$0.02 < |d_{M2-M3}|$$

When the difference between the first magnification M1 and the second magnification M2 is made to be smaller than 0.02, and only the third magnification M3 is made different, because the optical parts for the first light flux and the optical parts for the second light flux can be communized, the reduction of the number of parts of the optical pick-up apparatus, and the simplification of the structure become possible, as the result, the manufacturing cost of the optical pick-up apparatus can be reduced.

For example, when the first optical disk is a blue ray disk (the thickness of the protective layer is 0.1 mm), the second optical disk is DVD (the thickness of the protective layer is 0.6 mm), and third optical disk is CD (the thickness of the protective layer is 1.2 mm), the difference between the first magnification M1 and the second magnification M2 are made to be smaller than 0.02, and by the action of the phase structure, the spherical aberration due to the difference of the thickness of the protective layer between the first optical disk and the second optical disk is corrected. The spherical aberration due to the difference of thickness of the protective layer between the first optical disk and third optical disk is corrected when the first magnification M1 and the third magnification M3 are made different from each other.

Further, it is preferable that the optical pick-up apparatus has a chromatic aberration-compensating element in the common optical path of the first light flux and the absolute value of the difference between the first magnification M1 and the second magnification M2 is smaller than 0.02.

When the difference between the first magnification M1 and the second magnification M2 are made to be smaller than 0.02, and the optical parts for the first light flux and optical parts for the second light flux are communized, the degrees of the divergence of the first light flux and the second light flux incident on the objective optical system are different from each other by the influence of the chromatic aberration of the common optical parts. When the first light flux and the second light flux of which the divergent angles are different from each other, are incident on the objective optical system being optimized in the relations $|d_{M1-M2}| < 0.02$, $|d_{M1-M3}| > 0.02$ and $|d_{M2-M3}| > 0.02$, the spherical aberration is generated for any one of light fluxes. When the chromatic aberration-compensating element having a function to compensate the chromatic aberration of the common optical parts is arranged in the common optical path of the first light flux and the second light flux, the difference in the divergent angles of the first light flux and the second light flux can be made to be small. As such a chromatic aberration-compensating element, it may also be a doublet lens composed of a positive lens and a negative lens, whose wavelength dispersions are different from each other, or may also be a diffraction optical element.

Further, it is preferable that such a chromatic aberration-compensating element is integrated with an optical part having other functions, hereby, the number of parts can be reduced. For example, a function as the chromatic aberration-compensating element may also be given to the collimator lens by which the divergent light flux projected from the light source is converted into a parallel light flux, and guided to the objective optical system, or a function as the chromatic aberration-compensating element may also be given to the coupling lens by which the degree of the divergence of the divergent light flux projected from the light source is converted into a small one, and guided to the objective optical system, or a function as the chromatic aberration-compensating element may also be given to the beam expander used for forming an optimum spot on each of information recording surfaces of the first optical disk having a plurality of information recording surfaces.

In the optical pick-up apparatus of the present invention, it is one of preferable modes that the chromatic aberration-compensating element is a diffraction optical element.

When the diffraction optical element is used, because, by a single lens composition, the chromatic aberration can be corrected, it becomes advantageous for the reduction of the number of parts, and the cost reduction.

As the diffractive structure formed on the optical surface of the diffraction optical element, it may also be a structure whose sectional shape including the optical axis is a saw-toothed shape as shown in Fig. 1, or a structure whose sectional shape including the optical axis is a stepwise shape as shown in Fig. 2, or a structure structured by a plurality of ring-shaped zones inside of which a stepwise structure is formed as shown in Fig. 3. Particularly, when the diffractive structure as shown in Fig. 1 or Fig. 2 is used, it is preferable that a step difference of the ring-shaped zone is determined so that the diffraction order of the diffraction light generated when the second light flux is incident on the diffractive structure is lower-order than the diffraction order of the diffraction light generated when the first light flux is incident on the diffractive structure.

In the optical pick-up apparatus of the present invention, it is preferable that at least one of the first magnification M1 and the second magnification M2 is zero, and the third magnification M3 satisfies the following expression.

$$-0.17 < M3 < -0.025$$

A structure is most preferable in which the first light flux and the second light flux are made incident on the objective optical system under a condition of parallel light flux or substantially parallel light flux, and the third light flux is made incident on the objective optical system under a condition of a divergent light flux, and it becomes advantageous for the simplification of the structure of the optical pick-up apparatus, and an increase of the recording/reproducing characteristic for each of 3 kinds of optical disks whose recording densities are different.

In the optical pick-up apparatus of the present invention, it is preferable that the first light source and the second light source are integrated.

When the light source unit into which the first light source and the second light source are integrated, is used, more simplification of the structure of the optical pick-up apparatus becomes possible. Herein, the light source unit into which the first light source and the second light source are integrated, may also be a light source unit in which a light emitting point to generate the first light flux and a light emitting point to generate the second light flux are formed on the same substrate, or a light source unit in which a semiconductor chip to generate the first light flux and a semiconductor chip to generate the second light flux are housed in a casing. Further, as the light source unit for the third optical disk, it is preferable that the light source unit into which the third light source and an optical detector for the third light flux are integrated, is used.

In the optical pick-up apparatus of the present invention, it is one of preferable modes that the first light source and the second light source are integrated and the following expressions are practically satisfied.

$$M1 = 0$$

$$-0.015 < M2 < 0$$

$$-0.17 < M3 < -0.025$$

When the light source unit into which the first light source and the second light source are integrated is used, because the light emitting point position of the first light flux and the light emitting point position of the second light flux are almost coincident to each other, the degrees of divergence of the first light flux and the second light flux, incident on the objective optical system, are different from each other by the influence of the chromatic aberration of optical parts arranged in the optical path between the light source unit and the objective optical system. For the purpose to absorb the difference between degrees of the divergence of the first light flux and the second light flux due to such a chromatic aberration and to suppress the generation of the spherical aberration, it is preferable that the difference between the first magnification M1 to the first light flux of the objective optical system and the second magnification M2 of the second light flux of the objective optical system, is made a predetermined amount corresponding to the difference between degrees of the divergence of the first light flux and the second light flux.

For example, when the spherical aberration to the first light flux of the objective optical system is optimized to the loose convergent light, it is preferable that the spherical aberration to the second light flux of the objective optical system is optimized to the parallel light flux or the loose divergent light flux. It is more preferable, as described above, that the spherical aberration to the first light flux of the objective optical system is optimized to the parallel light flux, and that the spherical aberration to the second light flux of the objective optical system is optimized by the second magnification M2 which satisfies the expression -0.015 < M2 < 0.

In this case, it is preferable that the spherical aberration to the third light flux of the objective optical system is optimized by the third magnification M3 which satisfies the expression -0.17 < M3 < -0.025.

In the optical pick-up apparatus of the present invention, it is preferable that the first light source and the second light source are integrated, and the optical pick-up apparatus has a movable element which can be moved in the optical axis direction by an actuator in the common optical path of the first light flux and the second light flux.

When the light source unit into which the first light source and the second light source are integrated, is used, for the purpose that the light emitting point position of the first light flux and the light emitting point position of the second light flux are almost coincident with each other, the degrees of the divergence of the first light flux and the second light flux become different from each other by the influence of the chromatic aberration of the optical parts arranged in the optical path between the light source unit and the objective optical system. For the purpose to absorb the difference of the degree of the divergence of the first light flux and the second light flux due to such a chromatic aberration and to suppress the generation of the spherical aberration, as described above, it is preferable that a movable element which can be moved in the optical axis direction by an actuator is arranged in the common optical path of the first light flux and the second light flux. When the movable element is moved in the optical axis direction corresponding to the difference of the degree of the divergence of the first light flux and the second light flux, the degree of the divergence of the light flux incident on the objective optical system is changed. Hereby, the generation of the spherical aberration due to a case where the using magnification of the objective optical system is different from the designed magnification can be suppressed.

Further, it is preferable that the moveable element is any one of a collimator lens, coupling lens, or beam expander.

As the movable element, it may also be the collimator lens which converts the divergent light flux projected from the light source into the parallel light flux and guides it to the objective optical system, the coupling lens which converts the degree of divergence of the divergent light flux projected from the light source small, and guides it to the objective optical system, or the beam expander which is used for forming the optimum spot to respective information recording surfaces of the first optical disk having a plurality of information recording surface. Further, as the actuator to move the movable element in the optical axis direction, a stepping motor, voice coil actuator, or an actuator using the piezo-electric element can be used. Because a technology to move the optical element in the optical axis direction by the stepping motor or voice coil actuator is publicly known, herein, the detailed description will be omitted. Further, as the actuator using the piezo-electric element, as written in the following document, a small-sized linear actuator using the piezo-electric element can be used.

OPTICS DESIGN, No.26, 16-21(2002)

In the optical pick-up apparatus of the present invention, it is preferable that the objective optical system has at least one plastic lens. Further, the optical pick-up apparatus has the diffraction optical element having the diffractive structure structured by a plurality of ring-shaped zones having the step structure in its inside, in the common optical path of the first light flux and the second light flux. When the diffraction optical element does not give the phase difference to one of light flux of the first light flux and the second light flux, but gives the phase difference to the other light flux, it is preferable that the temperature characteristic of the objective optical system to the light flux to which the phase difference is given by the diffraction optical element is compensated, and the temperature characteristics of the objective optical system to the light flux to which the phase difference is not given by the diffraction optical element is compensated by the objective optical system itself.

In the objective optical system for compatibly conducting the recording/reproducing on a plurality of kinds of optical disks whose recording densities are different from each other, when a plastic lens is used as its component, it is necessary to consider the change of light converging performance following the temperature change to a plurality of light fluxes whose wavelength are different (in the present specification, it is referred to as "temperature characteristics"). However, for the objective optical system of the optical pick-up apparatus, an optical system of a simple structure whose number of components are small, is used. Therefore, in the design work of the objective optical system, when the limited degree of freedom of the design work is used for the temperature characteristics of a plurality of light fluxes whose wavelengths are different, there is a possibility that it becomes the optical system in which the other characteristics such as the image height characteristics is deteriorated, or the allowance for the manufacturing error is very narrow, and the mass production of the optical pick-up apparatus or objective optical system is not realized.

Accordingly, as written above, when the diffraction optical element which adds the phase difference only to any one light flux is arranged in the common optical path of the first light flux and the second light flux, and the temperature characteristics of the objective optical system to the light flux to which the phase difference is given by this diffraction optical element is corrected, and the temperature characteristics of the objective optical system to the other light flux is compensated by the objective optical element itself, while the image height characteristics of the objective optical system or the manufacturing error characteristics is maintained good, as the whole of optical system of the optical pick-up apparatus, the temperature characteristics to both light fluxes can be compensated.

The diffractive structure formed on the optical surface of the diffraction optical element, as typically shown in Fig. 3, is a structure structured by a plurality of ring-shaped zones inside of which the step structure is formed. It is preferable that this diffraction optical element is integrated with the other optical part having the other function, hereby, the reduction of the number of parts becomes possible. For example, a function as the diffraction optical element may also be given to the collimator lens which converts the divergent light flux emitted from the light source into the parallel light flux and guides it to the objective optical system, a function as the diffraction optical element may also be given to the coupling lens which converts the degree of divergence of the divergent light flux emitted from the light source small and guides it to the objective optical system, or a function as the diffraction optical element may also be given to the beam expander used for forming the optimum spots on respective information recording surfaces of the first optical disk having a plurality of information recording surfaces.

Hereupon, when the phase structure as typically shown in Fig. 1 to Fig. 4, is formed on the optical surface of the objective optical system, the temperature characteristics of the objective optical system to the light flux to which the phase difference is not practically given by the diffraction optical element, can be compensated by the objective optical system itself. Or when the objective optical system is structured by a plurality of optical elements and the power distribution of these optical elements are adequately set, the temperature characteristics to the light flux to which the phase difference is not practically given by the diffraction optical element, may also be compensated by the objective optical system itself.

In the optical pick-up apparatus of the present invention, it is one of preferable modes that the objective optical system has at least one plastic lens, the optical pick-up apparatus has the diffraction optical element having the diffractive structure structured by a plurality of ring-shaped zones having inside the step structure in the common optical path of the first light flux and the second light flux. Further, when the diffraction optical element does not practically give the phase difference to any one light flux in the first light flux and the second light flux, but gives the phase difference to the other light flux, the temperature characteristics of the objective optical system to the light flux to which the phase difference is given by the diffraction optical element is compensated, and the optical pick-up apparatus has a temperature characteristics-compensating element to compensate the temperature characteristics of the objective optical system to the light flux to which the phase difference is not practically given by the diffraction optical element.

When the temperature characteristics of the objective optical system to compatibly conduct the recording/reproducing on a plurality of kinds of optical disks whose recording densities are different from each other, is corrected, as described above, it may also be a structure in which the diffraction optical element, which adds the phase difference only to any one light flux is positioned in the common optical path of the first light flux and the second light flux, and corrects the temperature characteristics of the objective optical system to the light flux to which the phase difference is given by this diffraction optical element, and the temperature characteristics of the objective optical system to the other light flux is compensated by the temperature characteristics-compensating element positioned in the optical path between the first light source and the objective optical system.

When such a structure is applied, because the degree of the freedom of the design work of the objective optical system can be increased, the other characteristics such as the image height characteristics can be increased, or the allowance for the manufacturing error can be expanded.

An element, which is preferable as the temperature characteristics-compensating element, is a plastic collimator lens or a plastic coupling lens. Because, in the plastic collimator lens or the plastic coupling lens, the focal distance is changed following the temperature change, the degree of the divergence of the light flux projected from these plastic lenses is changed. Because this corresponds to a fact that the magnification of the objective optical system is changed, in the objective optical system, the spherical aberration is generated. When the focal distance of the plastic collimator lens or the plastic coupling lens is adequately set to the temperature characteristic of the objective optical system, the spherical aberration and the temperature characteristic following the magnification change can be cancelled.

Further, the diffraction optical element and this temperature characteristics-compensating element can be integrated. For example, when, on the optical surface of the plastic collimator lens or the plastic coupling lens having a function as the temperature characteristics-compensating element, the diffractive structure as shown in Fig. 3 is formed, the integration can be realized.

Further, it is preferable that a sign of the temperature characteristics of the objective optical system to the first light flux and a sign of the temperature characteristics of the objective optical system to the second light flux are different from each other.

When the temperature characteristics-compensating element is the plastic collimator lens or the plastic coupling lens, it is particularly effective that a sign of the temperature characteristics of the objective optical system to the first light flux and a sign of the temperature characteristics of the objective optical system to the second light flux are reversed to each other. For example, when, to compensate the temperature characteristics of the objective optical system to any one light flux of the first light flux and the second light flux, the plastic collimator lens or the plastic coupling lens is used as the temperature characteristics-compensating element, the temperature characteristics of the objective optical system to the other light flux is deteriorated inversely. In such a case, when the diffractive structure as shown in Fig. 3, is formed on the optical surface of the plastic collimator lens or the plastic coupling lens, the temperature characteristics of the objective optical system to the other light flux can be corrected.

Further, in the optical pick-up apparatus, it is preferable that, in the diffractive structure, the number of divisions P of each ring-shaped zone, depth of step difference D ($\mu$m) formed in each ring-shaped zone, the first wavelength $\lambda$1 ($\mu$m), the second wavelength $\lambda$2 ($\mu$m), refractive index N of the diffraction optical element for the first wavelength $\lambda$1, practically satisfy the following expressions.

$$0.35 \; \mu\text{m} < \lambda1 < 0.45 \; \mu\text{m}$$

$$0.63 \; \mu\text{m} < \lambda2 < 0.68 \; \mu\text{m}$$

$$D \cdot (N\text{-}1)/\lambda1 = 2 \cdot q$$

Where, q is natural number, and P is any one of 4, 5, 6.

It is preferable that the diffractive structure formed on the optical surface of the diffraction optical element has the structure as described above. In the case where the first wavelength $\lambda$1 is the blue violet wavelength, and the second wavelength $\lambda$2 is the red wavelength, when the number of divisions P in each ring-shaped zone of the diffractive structure is set to any one of 4, 5, 6, and the optical length of the depth D of the step difference is made equivalent to even number-times of the first wavelength $\lambda$1 so that the expression $D \cdot (N\text{-}1)/\lambda1 = 2 \cdot q$ is satisfied, the phase difference is not practically added to the first light flux by the diffractive structure, and the flux is transmitted as it is, and because the phase difference corresponding to about one wavelength is given to the second light flux in the mutual adjoining ring-shaped zones, the flux can be projected as the 1st-order diffraction light. To secure the transmission of both wavelengths high, it is particularly preferable that the number of divisions P in each ring-shaped zone is made into 5.

In the optical pick-up apparatus of the present invention, it is one of preferable modes that it has the spherical aberration-compensating element in the optical path of the first light flux. Because the change of the spherical aberration which is generated due to the error of the optical system of the optical pick-up apparatus, of the spot formed on the information recording surface is determined by the numerical aperture NA of the objective optical system and the wavelength $\lambda$ of the light source and increased in proportion to $NA^4/\lambda$, when the numerical aperture of the objective optical system is increased for the high densification of the optical disk or the wavelength of the light source is decreased, there is a possibility that the spherical aberration change is increased and the stable recording/reproducing characteristics can not be obtained.

As described above, when the spherical aberration-compensating element for compensating the spherical aberration change is arranged in the optical path of the first light flux, stable recording/reproducing characteristics for the first optical disk can be obtained.

As factors of generation of the spherical aberration change to be compensated by such a spherical aberration-compensating element, there are a deviation of the wavelength by the manufacturing error of the first light source, refraction index change of the objective optical system following the temperature change or a refraction index distribution, a focus-jump between layers at the time of recording/reproducing for multi-layer disk such as 2-layer disk, 4-layer disk, the thickness deviation or thickness distribution by the manufacturing error of the protective layer of the first optical disk.

Furthermore, it is further preferable that the spherical aberration-compensating element is a movable element which can be moved in the optical axis direction by the actuator.

As such a spherical aberration-compensating element, when the movable element which can be moved in the optical axis direction, is used, because the spherical aberration can be compensated in proportion to the movement amount in the optical axis direction, there is an advantage that a range of compensation of the spherical aberration is wide.

Further, it is preferable that the movable element is any one of the collimator lens, coupling lens, or beam expander.

As such a movable element, it may also be the collimator lens which converts the divergent light flux projected from the light source into the parallel light flux and guides it to the objective optical system, the coupling lens which converts the degree of divergence of the divergent light flux projected from the light source small and guides it to the objective optical system, or the beam expander which is used for forming the optimum spot on respective information recording surfaces of the first optical disk having a plurality of information recording surface. Further, as the actuator to move the movable element in the optical axis direction, a stepping motor, voice coil actuator, or an actuator using the piezo-electric element can be used.

It is one of preferable modes that the spherical aberration-compensating element is a liquid crystal phase controlling element.

Because the liquid crystal phase-controlling element does not require any mechanical movable part, when the liquid crystal phase-controlling element is used, the size reduction of the optical pick-up apparatus becomes possible. A technology by which the liquid crystal phase controlling element is used and the spherical aberration is compensated, is written in the following document and because it is a publicly known technology, a detailed description will be omitted herein.

OPTICS DESIGN, No. 21, 50-55 (2000)

In the optical pick-up apparatus of the present invention, it is one of preferable modes that it has a spherical aberration-detecting device for detecting the spherical aberration of the spot formed on the information recording surface of the first optical disk, and when, on the basis of the detection result of the spherical aberration-detecting device, the spherical aberration-compensating element is actuated, the spherical aberration change of the spot formed on the information recording surface of the first disk is compensated.

For the purpose to finely compensate the spherical aberration by the spherical aberration-compensating element, it is preferable that the spherical aberration of the spot on the information recording surface of the first optical disk is detected by the spherical aberration-detecting device, and on the basis of the detection result, the spherical aberration-compensating element is actuated so that the spherical aberration signal generated by a spherical aberration signal generation device is decreased. Because a technology relating to such a spherical aberration-detecting device or a spherical aberration signal generation device, is written in the following document, and is a publicly known technology, the detailed description will be omitted herein.

OPTICS DESIGN, No. 26, 4-9 (20002)

Further, in the optical pick-up apparatus described above, it is preferable that the objective optical system has at least one plastic lens, the optical pick-up apparatus has a temperature-detecting device for detecting the temperature in the vicinity of the objective optical system and/or the temperature in the optical pick-up apparatus, and when, on the basis of the detection result of the temperature-detecting device, the spherical aberration-compensating element is actuated, the spherical aberration change of the plastic lens following the temperature change is compensated.

The spherical aberration change of the plastic lens generated following the temperature change is determined by a numerical aperture NA of the plastic lens and the wavelength $\lambda$ of the light source, and is increased in proportion to $NA^4/\lambda$. Accordingly, when the light converging element included in the objective optical system is made the plastic lens, the spherical aberration change following the temperature change is increased, and the light converging performance of the objective optical system is deteriorated. This deterioration of the light converging performance is more conspicuous when the numerical aperture of the objective optical system is increased for the high-densification of the optical disk, or the wavelength of the light source is shortened.

Because, when, based on the detection result of the temperature-detecting device, the spherical aberration-compensating element is actuated, the spherical aberration change of the plastic lens, that is, the deterioration of light converging performance of the objective optical system can be compensated, a stable recording/reproducing for the first optical disk can be conducted always.

It is further preferable that the spherical aberration-compensating element described above is arranged in the optical path common to the first light flux and the second light flux.

For the purpose to increase the reliability of the optical pick-up apparatus for a plurality of kinds of optical disks whose recording densities are different, it is preferable that a structure in which the spherical aberration-compensating element is arranged in the optical path common to the first light flux and the second light flux, and the spherical aberration is corrected not only at the time of the recording/reproducing for the first optical disk, but also at the time of the recording/reproducing for the second optical disk, is applied.

In the optical pick-up apparatus of the present invention, it is one of preferable modes that, after at least one light flux in the first light flux to the third light flux, transmits two or more diffractive structures, it is emitted from the objective optical system, and the optical pick-up apparatus has a light intensity distribution-converting element having a function by which the light intensity distribution of the incident light flux is converted and the flux is emitted.

For the purpose to improve the characteristics of the optical pick-up apparatus for a plurality of kinds of optical disks whose recording densities are different, it is preferable that 2 or more diffractive structures are provided in its optical path. However, the eclipse of the ray by the step difference part of the diffractive structure, or by the manufacturing error of the diffractive structure, in the light flux transmitted the diffractive structure, the light amount of the periphery of the effective diameter becomes lower than that of the vicinity of the optical axis. When 2 or more diffractive structures exist in the optical path, because such a lowering of the peripheral light amount becomes conspicuous, there is a possibility that a desired spot diameter can not be obtained by the apodization.

When the light intensity distribution-converting element having a function by which the light intensity distribution of the incident light flux is converted and the flux is projected, is arranged, the lowering of the peripheral light amount of the transmission light flux of the diffractive structure can be compensated. For the reduction of the number of parts of the optical pick-up apparatus, it is preferable that this light intensity distribution-converting element is integrated with the optical element having the other function. For example, a function as the light intensity distribution-converting element may also be given to the collimator lens by which the divergent light flux emitted from the light source is converted into the parallel light flux and guided to the objective optical system, a function as the light intensity distribution-converting element may also be given to the coupling lens by which the degree of divergence of the divergent light flux emitted from the light source is converted into a small one, and guided to the objective optical system, or a function as the light intensity distribution-converting element may also be given to the beam expander which is used for forming the optimum spots on respective information recording surfaces of the first optical disk having a plurality of information recording surfaces.

Further, in the optical pick-up apparatus described above, it is further preferable that the light flux which transmits two or more diffractive structures and is emitted from the objective optical system, is the first light flux, and the light intensity distribution-converting element is arranged in the optical path of the first light flux.

The width of the ring-shaped zone of the diffractive structure is decreased as the aberration corrected by this diffractive structure is large. The aberration generated in the optical pick-up apparatus is determined by the numerical aperture NA of the objective optical system and the wavelength of the light source, and becomes large as the larger the numerical aperture is, and/or the shorter the wavelength is.

Accordingly, because the lowering of the peripheral light amount of the transmission light flux of the diffractive structure is the maximum in the first light flux, it is most preferable that the intensity distribution-converting element for compensating the peripheral light amount lowering is arranged in the optical path of the first light flux.

In the optical pick-up apparatus of the present invention, it is preferable that the optical pick-up apparatus has two spherical aberration-compensating elements.

As described above, the spherical aberration change of the spot formed on the information recording surface of the optical disk is increased in proportion to $NA^4/\lambda$. Therefore, in the optical pick-up apparatus using the high NA objective optical system such as the blue ray disk, because the generation amount of the spherical aberration is increased, the correction-ability is insufficient by only one spherical aberration-compensating element, and there is a possibility that the spherical aberration remains in the spot. So much as the optical pick-up apparatus which has many generation factors, the total sum of the spherical aberration becomes larger, and the above-described problem is actualized. For example, when the objective optical system is formed of the plastic lens, the spherical aberration change of the plastic lens generated following the temperature change is changed, further, in the high density optical disk having two or more information recording layers, the spherical aberration generation at the time of interlayer jump, becomes large. In the optical pick-up apparatus of such a structure, when the spherical aberration correction is conducted by two spherical aberration-compensating elements, because larger amount of spherical aberration can be corrected, the performance of the optical pick-up apparatus can be improved.

Further, in the case of the structure by which the spherical aberration is corrected also when the recording/reproducing of the information is conducted for CD whose NA is small, not only for the high density optical disk, it is difficult that the spherical aberration-compensating element for the high density optical disk and the spherical aberration-compensating element for CD are communized.

A case where the liquid crystal phase-controlling element is used as the spherical aberration-compensating element, will be described below.

When, on CD side ($\lambda$ = 785 nm, NA = 0.85), the spherical aberration of ± 0.05 $\lambda$RMS is being corrected by the liquid crystal phase-controlling element for the high density optical disk, on the high density optical disk side ($\lambda$ = 405 nm, NA = 0.85), the correction-ability of ±1.23 $\lambda$RMS (= ±0.05 $\times$ {$(0.85^4/405)/(0.45^4/786)$} is required. Because the spherical aberration which can be corrected by the liquid crystal phase-controlling element is about ± 0.2 $\lambda$RMS, it is impossible that the liquid crystal phase-controlling element for the high density optical disk is commonly used as the liquid crystal phase-controlling element for CD, and when the liquid crystal phase-controlling element is used, it is preferable that the correction of the spherical aberration on CD side is conducted by the liquid crystal phase-controlling element exclusive for CD.

Further, when the movable element which can be moved in the optical axis direction by the actuator is used as the spherical aberration-compensating element, because NA of CD is small, the movement amount of the movable element necessary for obtaining the desired spherical aberration becomes large, and the size of the optical pick-up apparatus becomes large. In contrast to that, when the paraxial power of the movable element is increased so that the movement amount is decreased, because the movement amount of the movable element necessary for correcting the spherical aberration of a unit amount at the time of the spherical aberration correction on the high density optical disk side becomes large, there is a problem that the position control of the movable element becomes difficult. Accordingly, when the movable element is used, it is preferable that the correction of the spherical aberration on CD side is conducted by the movable element exclusive for CD.

By the above description, when two spherical aberration-compensating elements are mounted, and one of them conducts the spherical aberration correction on CD side, and the other one conducts the spherical aberration correction on the high density optical disk side, the correction of spherical aberration not only for the high density optical disk side, but also for CD side whose NA is small, can be finely conducted by a compact structure, and the reliability of the optical pick-up apparatus can be improved.

Further, in the above-described optical pick-up apparatus, it is further preferable that one of the twp spherical aberration-compensating elements is the liquid crystal phase-controlling element, and when the recording/reproducing of the information is conducted on the third optical disk, the liquid crystal phase-controlling element compensates the spherical aberration of the third light flux.

Generally, in the objective optical system having the compatibility for the high density optical disk, DVD and CD, in the case where the third magnification M3 when the recording/reproducing of the information is conducted on CD is made negative, and a structure in which the divergent light flux is incident on the objective optical system, is applied, the spherical aberration due to the difference of thickness of the protective layers between the high density optical disk and CD is corrected. However, in the structure in which the divergent light flux is incident on the objective optical system, because, when the objective optical system is shifted in the direction perpendicular to the optical axis, the light emitting point of the light source becomes an off-axis object point, there is a problem that the coma is generated by the tracking drive and a good tracking characteristic is not obtained. For the purpose to decrease such a coma generation and to improve the tracking characteristic, it is necessary that the absolute value of the third magnification M3 is decreased, however, a new problem that the remainder of the spherical aberration due to the difference of the protective layer thickness between the high density optical disk and CD becomes large, is generated.

Accordingly, when a structure in which the spherical aberration remained by reducing the absolute value of the third magnification M3 is corrected by the liquid crystal phase-controlling element (the first spherical aberration-compensating element), is applied, the correction of the spherical aberration due to the difference of the protective layer thickness between the high density optical disk and CD, and the reduction of the coma generation by the tracking drive, are stood together.

Further, it is preferable that the liquid crystal phase-controlling element conducts only the phase control of the third light flux, and in the two spherical aberration-compensating elements, the other spherical aberration-compensating element corrects the spherical aberration of the first light flux when it conducts the recording/reproducing of the information on the first optical disk.

For the purpose to more effectively conduct the spherical aberration correction by the liquid crystal phase-controlling element, it is preferable that a structure in which only the phase control of the third light flux is selectively conducted by the liquid crystal phase-controlling element, and the phase control of the first light flux or the second light flux is not conducted, is applied. In this manner, when the liquid crystal phase-controlling element is made a CD exclusive-use, because the phase distribution in NA of CD can be taken largely, the correction range of the spherical aberration to the third light flux can be largely secured. As the result, the absolute value of the third magnification M3 can be more reduced, and the coma generation by the tracking drive can be suppressed smaller. Further, when a structure in which the spherical aberration correction on the high density optical disk side is conducted by the second spherical aberration-compensating element, is applied, the spherical aberration correction at the time of recording/reproducing of the information for the high density optical disk whose NA is large, can be conducted. As the second spherical aberration-compensating element, it may also be the movable element which can be moved in the optical direction by the actuator, and may also be the liquid crystal phase-controlling element separated from the first spherical aberration-compensating element. Hereupon, as the movable element which can be moved in the optical direction by the actuator, it may also be any one of the collimator lens, coupling lens and expander lens.

Further, in the above-described optical pick-up apparatus, it is more preferable that at least one of the first magnification M1 and the second magnification M2 is zero, and the third magnification M3 satisfies the following relation.

$$-0.12 < M3 \leq 0$$

As described above, In the case where the absolute value of the third magnification is decreased, when a structure in which the remained spherical aberration is corrected by the liquid crystal phase-controlling element, is applied, it becomes possible that the come generation by the tracking drive can be suppressed smaller, however, when the optical pick-up apparatus is made such a structure, it is preferable that the first magnification M1 to the third magnification M3 satisfy the above-mentioned relations. When the spherical aberration to the first light flux and the second light flux of the objective optical system are optimized to the parallel light flux or substantially parallel light flux, the tracking characteristic at the time of recording/reproducing of the information for the high density optical disk and DVD can be made good, and when the third magnification M3 for the third light flux is made the magnification within the range satisfying the relation -0.12 < M3 ≤ 0, the coma generation by the tracking drive can be suppressed small.

An optical information recording and/or reproducing apparatus in which any one of the above-described optical pick-up apparatus and an optical disk supporting section being capable of supporting the first optical disk, the second optical disk and the third optical disk are mounted, is also one of preferable modes of the present invention.

In the optical pick-up apparatus of the present invention, it is one of preferable modes that $|d_{M1-M2}|$, which is the difference between the first magnification M1 and the second magnification M2, satisfies the following relation.

$$0 < |d_{M1-M2}| < 0.02$$

This relation is, in the optical pick-up apparatus having: the first light source projecting the first light flux of the first wavelength λ1; the second light source projecting the second light flux of the second wavelength λ2 (λ2 > λ1); the third light source projecting the third light flux of the third wavelength λ3 (λ3 > λ2); and the objective optical system for light converging the first light flux on the information recording surface of the first optical disk of the recording density ρ1, light converging the second light flux on the information recording surface of the second optical disk of the recording density ρ2 (ρ2 < ρ1), and light converging the third light flux on the information recording surface of the third optical disk of the recording density ρ3 (ρ3 < ρ2), it is desirable condition that the objective optical system has the phase structure, and in the case where the magnification of the objective optical system when the recording and /or reproducing of the information is conducted for the first disk is the first magnification M1, the magnification of the objective optical system when the recording and /or reproducing of the information is conducted for the second disk is the second magnification M2, and the magnification of the objective optical system when the recording and /or reproducing of the information is conducted for the third disk is the third magnification M3, the first magnification M1 and the second magnification M2 satisfy this conditional expression.

For example, in the case where a structure into which at least the first light source and the second light source are integrated, is applied, when it is a structure having the collimator lens for converting the light flux from the first light source into the parallel light flux or almost parallel light flux and for being incident on the objective optical system in the common light path of the first light flux and the second light flux, it is required that the distance from the light source to the collimator lens is changed for each of respective light fluxes depending on the chromatic aberration of the collimator lens, as the result of that, it is necessary that the collimator or the movable lens in the beam expander when the beam expander is provided between the collimator and the objective optical system, is moved in the direction parallel to the optical axis, and corresponds to it. Or, it is necessary that the chromatic aberration of the collimator lens is corrected by using the phase structure such as diffraction provided in the collimator lens. In these structures, a means to drive the lens is necessary and problems that it hinders the simplification or size reduction of the apparatus, or when the lens drive means is added, or the phase structure is processed on the lens, the molding die formation becomes difficult and it hinders the cost reduction, are generated.

When the difference between the first magnification M1 and the second magnification M2 satisfies the relation $0 < |d_{M1-M2}| < 0.02$, it becomes possible to use the collimator lens which has no phase structure and whose processing is easy, without making to move it, and it is desirable because the simplification of the apparatus, size reduction, cost reduction can be attained.

In case that the relation $0 < |d_{M1-M2}|$ 0.02 is satisfied, one of more preferable modes is that the first magnification M1 and the second magnification M2 satisfy the following relations.

$$M1 = 0$$

$$-0.02 < M2 < 0$$

Further, when the lower limit of the relation -0.02 < M2 < 0 is exceeded, because the absolute value of the lens magnification is large, the coma by lens shift generated at the time of tracking becomes a problem, and it is undesirable. Further, there is no case where the second magnification M2 normally exceeds 0 because λ2 > λ1, and it is desirable that -0.01 < M2 < -0.03 when considering the aberration correction in the objective optical system.

In case that the relation $0 < |d_{M1-M2}|$ 0.02 is satisfied, another preferable modes is that the first magnification M1 and the second magnification M2 satisfy the following relations.

$$M2 = 0$$

$$0 < M1 < 0.02$$

Further, when the upper limit of the relation $0 < M1 < 0.02$ is exceeded, because the absolute value of the lens magnification is large, the coma by lens shift generated at the time of tracking becomes a problem, and it is undesirable.

Further, when the protective layer thickness of the first optical disk is t1, the protective layer thickness of the second optical disk is t2, and the protective layer thickness of the third optical disk is t3, it is more preferable that the aberration correction of the objective optical system is conducted so that the following relation is satisfied.

$$t1 < t2 < t3$$

For example, when the design work is made under the condition of t1 = 0.1 mm, t2 = 0.6 mm, t3 = 1.2 mm, the objective optical system becomes one which can adequately conduct the recording and/or reproducing of the information for three kinds of disks whose recording densities are different, which correspond to a standard of Blu-ray disk. In this case, when t1 is set to 0.0875 mm, it becomes an advantageous structure for conducting the recording and/or reproducing of the information for the optical information recording medium having 2 recording layers, in Blu-ray disk. Further, the numerical apertures NA1 - NA3 to the light fluxes of each wavelength in this case, become NA1 = 0.85, NA2 = 0.60 - 0.65, NA3 = 0.45 - 0.53.

Further, it is also preferable that, when the protective layer thickness of the first optical disk is t1, the protective layer thickness of the second optical disk is t2, and the protective layer thickness of the third optical disk is t3, the aberration correction of the objective optical system is conducted so that the following relation is satisfied.

$$t1 = t2 < t3$$

For example, when the design work is made under the condition of t1 = t2 = 0.6 mm, t3 = 1.2 mm, the objective optical system becomes one which can adequately conduct the recording and/or reproducing of the information for three kinds of disks whose recording densities are different, which correspond to a standard of HD-DVD disk. The numerical apertures NA1 - NA3 to the light fluxes of each wavelength in this case, become NA1 = 0.65 - 0.70, NA2 = 0.60 - 0.65, NA3 = 0.45 - 0.53. Further, herein, when, for example, HD-DVD or DVD is formed into the 2-layer disk, there is a case of $t1 \neq t2$. However, the difference between t1 and t2 in the case, is smaller than 0.1 mm, and it is an area in which it can be said that t1 and t2 are almost equal.

In the optical pick-up apparatus of the present invention, it is preferable that one collimator lens which collimates one light flux of the first light flux from at least the first light source and the second light flux from the second light source is used in a common optical path of respective light fluxes, and the respective light fluxes are used by making incident on the objective optical system as the parallel light flux or approximately parallel light flux.

When the collimator lens is arranged in the common optical path of the first light flux and the second light flux, because optical parts for the first light flux and optical parts for the second light flux can be communized, the reduction of the number of parts of the optical pick-up apparatus, simplification of the structure become possible, as the result, the manufacturing cost of the optical pick-up apparatus can be reduced. Further, herein, the common optical path includes the difference level of the optical path generated due to the distance between two light sources by two-wavelength laser, for example, into which the first light source and the second light source are integrated, and for example, includes a case where the distance in the plane perpendicular to the optical axis between two light sources is about 0.05 - 0.2 mm, and referred to a case where, for example, the optical axis of the light flux is shifted by ± about 0.1 mm, or an angle formed between optical axes of 2 light fluxes is inclined by ± about 1°.

Further, in the above-described optical pick-up apparatus, it is preferable that the collimator lens is used in a immovably fixed condition.

When the collimator lens is used under the condition that it is not moved and fixed, the member to drive the collimator lens is unnecessary, and the reduction of the number of parts of the optical pick-up apparatus, and the simplification of the structure become possible, as the result, the manufacturing cost of the optical pick-up apparatus can be reduced.

Further, in the above-described optical pick-up apparatus, it is more preferable that the collimator lens satisfies the following relation.

$$0 < \Delta 2/ (fCL2 + \Delta 2) < 0.1$$

Where, $\Delta 2$: the difference between respective distances from the collimator lens to the image formation point when the collimator light fluxes of the wavelength $\lambda 1$ and the wavelength $\lambda 2$ are incident from the optical disk side surface of the collimator lens,
FCL2: a focal distance of the collimator lens to the wavelength $\lambda 2$.

The relation $0 < \Delta 2/(fCL2 + \Delta 2) < 0.1$ is a conditional expression showing the relationship of the collimator lens and its movement, when the upper limit of the relation $0 < \Delta 2/(fCL2 + \Delta 2) < 0.1$ is exceeded, the movement of the collimator lens is too much increased, and the size of apparatus is increased, or the absolute value of the second magnification M2 of the objective optical system to the wavelength $\lambda 2$ is too much increased, and because there is a case where a problem of the coma due to the lens shift at the time of the tracking is generated, it is not desirable.

Further, the chromatic aberration of the collimator lens can be decreased when the collimator lens is formed of the diffraction lens, or in the common optical path of the first light flux and the second light flux, a doublet lens composed of the positive lens and the negative lens whose wavelength dispersions are different from each other, or the chromatic aberration-compensating element, which is structured by the diffraction optical element, and has a function by which the chromatic aberration is corrected, is arranged. Hereby, the degrees of divergence of the first light flux incident on the objective optical system and the second light flux incident on the objective optical system, can be made almost equal, and the movement amount of the collimator lens can be decreased. However, when such a chromatic aberration-compensating element is used, the number of parts is increased or the processing becomes difficult, results in the complication of the apparatus and the cost-up. It is desirable that the apparatus is structured without using them.

In the structure which does not assume the diffraction or chromatic aberration-compensating element, a more desirable condition is $0.006 < \Delta 2/(fCL2 + \Delta 2) < 0.05$.

Further, it is also one of preferable modes that, between at least the first light source and the collimator lens, a beam shaping optical element, which converts an elliptical light flux from the light source into an almost circular shape, is used.

When, between at least the first light source and the collimator lens, a beam shaping optical element is arranged, the light using efficiency of the light from the semiconductor laser can be increased, and the advanced technical advantages of the pick-up can be obtained.

Such a beam shaping element may be an element composed of a single lens of a cylindrical surface shape having a curvature, for example, only in one direction, or may also be an element composed of an anamorphic surface whose radius of curvature is different in two perpendicular directions.

When the beam shaping element is arranged, for example, in the optical path of the wavelength-integrated laser such as 2-laser 1 package or 3-laser 1 package, in the beam shaping element composed of, for example, a cylindrical surface, it is preferable that the direction in which the surface of the beam shaping element does not have a curvature, is made coincident with the aligning direction of the 2 or 3 laser light emitting points, and in the beam shaping element composed of, for example, an anamorphic surface, the direction in the curvature becomes large, and the aligning direction of the 2 or 3 laser light emitting points are made coincident with each other. When the positional relationship of the beam shaping element and the 2 or 3 laser light emitting points is made as described above, it becomes possible that the influence of the aberration due to the beam shaping element is eliminated, or reduced.

However, depending on the relationship between the alignment of the laser light emitting points and the elliptical light flux major axis direction of the semiconductor laser, it is not limited to the above description, it is necessary that the direction in which the beam shaping element conducts the beam shaping, and the direction of the semiconductor elliptical light flux are accepted as the desired directions, and the apparatus copes with a plurality of light sources.

In the above-described optical pick-up apparatus, in the light detecting section for detecting the reflected light from the information recording surface of the optical disk, it is preferable for the light detecting section to use a common detecting section for the first light flux from at least the first light source and the second light flux from the second light source.

When the light detecting section is a common one, it is desirable because there is an effect in the simplification of the apparatus by the reduction of the number of parts, and cost reduction.

Further, in the above-described optical pick-up apparatus, it is preferable that the distance from the surface of the protective layer of the first optical disk to the first light source, and the distance from the surface of the protective layer of the second optical disk to the second light source, are same.

In the case where the distance from the surface of the protective layer of the first optical disk to the first light source, and the distance from the surface of the protective layer of the second optical disk to the second light source are made same, for example, in the first light source and the second light source, when it is formed into the light source unit in which, for example, the light emitting point generating the first light flux and the light emitting point generating the second light flux are formed on the same substrate, or the light source unit in which, for example, a semiconductor chip for generating the first light flux and a semiconductor chip for generating the second light flux are housed in a casing, when 2-laser 1 package into which 2 light sources are integrated, or further, 3-laser 1 package into which 3 light sources are integrated, is used, because the distance from the light source to the optical disk comes off without being changed, depending on the kind of optical disk, when the using condition is changed from a certain kind of optical disk to an another kind of optical disk, the apparatus can correspond to disks without moving the optical disk position or other collimators. Because the apparatus can correspond to a plurality of optical disks without these movement mechanisms, it is effective for the simplification of the apparatus and the cost reduction.

Further, in the above-described optical pick-up apparatus, it is preferable that, for the first light flux from at least the first light source and the second light flux from the second light source, one collimator lens which collimates one light flux of them is used in common optical path of respective light fluxes, and the distance from the surface of the protective layer of the first optical disk to the collimator lens, and the distance from the surface of the protective layer of the second optical disk to the collimator lens, are same.

In the case where the distance from the surface of the protective layer of the first optical disk to the collimator lens, and the distance from the surface of the protective layer of the second optical disk to the collimator lens, are made same, when the using condition is changed from a certain kind of optical disk to another kind of optical disk, for the light sources in which the distances from the surfaces of the protective layers of the optical disks to the collimator lens, are made same, while using the collimator lens common to them, the apparatus can correspond to a plurality of optical disks without moving it. Because the apparatus can correspond to a plurality of optical disks without the apparatus having the movement mechanism of the collimator lens, it is effective for the simplification of the apparatus and cost reduction.

In the optical pick-up apparatus of the present invention, it is also one of the preferable modes that the third magnification M3 of the objective optical system satisfies the following relation.

$$-0.03 < M3 < 0$$

This conditional expression is, in the optical pick-up apparatus having: the first light source projecting the first light flux of the first wavelength $\lambda 1$; the second light source projecting the second light flux of the second wavelength $\lambda 2$ ($\lambda 2 > \lambda 1$); the third light source projecting the third light flux of the third wavelength $\lambda 3$ ($\lambda 3 > \lambda 2$); and the objective optical system for light converging the first light flux on the information recording surface of the first optical disk of the recording density $\rho 1$, light converging the second light flux on the information recording surface of the second optical disk of the recording density $\rho 2$ ($\rho 2 < \rho 1$), and light converging the third light flux on the information recording surface of the third optical disk of the recording density $\rho 3$ ($\rho 3 < \rho 2$), it is desirable condition that the objective optical system has the phase structure, and in the case where the magnification of the objective optical system when the recording and /or reproducing of the information is conducted for the first disk is the first magnification M1, the magnification of the objective optical system when the recording and/or reproducing of the information is conducted for the second disk is the second magnification M2, and the magnification of the objective optical system when the recording and/or reproducing of the information is conducted for the third disk is the third magnification M3, the third magnification M3 satisfies this conditional expression.

For example, when all light sources of the first light source, second light source and third light source are integrated into 3-laser 1 package structure, or when the second light source and the third light source are integrated into 2-laser 1 package structure, for example, in the 3-laser 1 package, in the case where it is a structure in which it has the collimator lens by which the light flux from the first light source is made incident on the objective optical system as the parallel light flux or almost parallel light flux, in the common optical path of the first light flux to the third light flux, when the first magnification M1 to the third magnification M3 of the first light flux to the third light flux are intended to be approximately M1 = M2 = M3 = 0, the necessity that the distance from the light source to the collimator lens is changed for respective light fluxes is generated by the chromatic aberration of the collimator lens, as the result, when the collimator, or the beam expander is provided between the collimator and the objective optical system, it becomes necessary that the movable lens in the beam expander is moved in the direction parallel to the optical axis, and corresponds to the condition. Or, it becomes necessary that the chromatic aberration of the collimator lens is corrected by using the phase structure such as the diffraction provided on the collimator lens.

In these structures, problems that a means for the lens drive is necessary, and the simplification or size reduction of the apparatus is hindered, or when the phase structure is processed on the collimator lens, the molding die preparation becomes difficult, and the cost reduction is hindered, are generated.

Further, in 2-laser 1 package into which the second light source and the third light source are integrated, in the case where it is a structure in which it has the collimator lens by which the light flux from the second light source is made the parallel light flux or almost parallel light flux, and made incident on the objective optical system, in the common optical path of the second light flux and the third light flux, when, for example, the second magnification M2 and the third magnification M3 of the second light flux and the third light flux are intended to be approximately M2 = M3 = 0, the necessity that the distance from the light source to the collimator lens is changed for respective light fluxes is generated by the chromatic aberration of the collimator lens, as the result, when the collimator, or the beam expander is provided between the collimator and the objective optical system, it becomes necessary that the movable lens in the beam expander is moved in the direction parallel to the optical axis, and corresponds to the condition. Or, it becomes necessary that the chromatic aberration of the collimator lens is corrected by using the phase structure such as the diffraction provided on the collimator lens. Also in these structures, problems that a means for the lens drive is necessary, and the simplification or size reduction of the apparatus is hindered, or an addition of the lens drive means or when the phase structure is processed on the lens, the molding die preparation becomes difficult, resulting in a hindrance of the cost reduction, are generated.

When the third magnification M3 satisfies the relation -0.03 < M3 < 0, it becomes possible that the collimator lens which does not have the phase structure and whose processing is easy, is used without being moved, and because the simplification of the apparatus, size reduction, and cost reduction can be attained, it is desirable.

Further, when the lower limit of the relation -0.03 < M3 < 0 is exceeded, because the absolute value of the lens magnification is large, the coma by the lens shift generated at the time of tracking is a problem, it is not desirable.

Further, because the third magnification M3 does not, normally, exceed 0, because of $\lambda 1 > \lambda 2 > \lambda 1$, and when considering the aberration correction in the objective optical system, it is desirable that it is -0.015 < M3 < - 0.003.

Further, in the above-described optical pick-up apparatus, when the protective layer thickness of the first optical disk is t1, the protective layer thickness of the second optical disk is t2 and the protective layer thickness of the third optical disk is t3, it is preferable that the aberration correction of the objective optical system is conducted so that the following relation is satisfied.

$$t1 < t2 < t3$$

For example, when the design work is made under the condition that t1 = 0.1 mm, t2 = 0.6 mm, t3 = 1.2 mm, the objective optical system which can adequately conduct the recording and/or reproducing of the information for 3 kinds of disks whose recording densities are different, and which correspond to a standard of Blu-ray disk, is formed. In this case, when t1 is set to 0.0785 mm, it becomes an advantageous structure for conducting the recording and/or reproducing of the information for the optical information recording medium having 2 recording layers in the Blu-ray disk. Further, the numerical apertures NA1 - NA3 for the light fluxes of each of wavelengths in this time, are NA1 = 0.85, NA2 = 0.60 - 0.65, NA3 = 0.45 - 0.53.

Further, when the protective layer thickness of the first optical disk is t1, the protective layer thickness of the second optical disk is t2 and the protective layer thickness of the third optical disk is t3, it is also preferable that the aberration correction of the objective optical system is conducted so that the following expression (18) is satisfied.

$$t1 = t2 < t3$$

For example, when the design work is made under the condition that t1 = t2 = 0.6 mm, t3 = 1.2 mm, the objective optical system which can adequately conduct the recording and/or reproducing of the information for 3 kinds of disks whose recording densities are different, and which correspond to a standard of HD-DVD disk, is formed. the numerical apertures NA1 - NA3 for the light fluxes of each of wavelengths in this time, are NA1 = 0.65 - 0.70, NA2 = 0.60 - 0.65, NA3 = 0.45 - 0.53. Further, herein, for example, when HD-DVD or DVD is made two-layers disk, there is also a case of t1 ≠ t2. However, the difference between t1 and t2 at that time, is smaller than 0.1 mm, and it is an area in which it can be said that t1 and t2 are about equal.

In the above-described optical pick-up apparatus, it is preferable that, the collimator lens is positioned in a common optical path of the first light flux and the second light flux, and the collimator lens makes one of the first magnification M1 and the second magnification M2 to zero.

Herein, "common optical path" includes that optical axes of two light fluxes are an almost same condition, for example, includes a case where the distance in the plane perpendicular to the optical axis between two light sources is about 0.05 - 0.2 mm, for example, the optical axis of the light flux is shifted by about ± 0.1 mm, or a case where an angle formed between optical axes of two light fluxes is inclined by about ± 1°.

Hereby, the number of parts can be decreased by the communization of the collimator parts, and there is an advantage in the simplification of the apparatus, and cost reduction. In that case, when respective light fluxes are made incident on the objective optical system as the parallel light flux, almost parallel light flux, and used, because a structure in which the coma is hardly generated by the lens shift at the time of tracking, can be formed, it is desirable.

In the above-described optical pick-up apparatus, it is further preferable that the collimator lens is used in an immovably fixed state.

When the collimator lens is used in a fixed condition without being moved, because there is no movement mechanism, it is effective in the simplification of the apparatus and the cost reduction.

Further, in the above-described optical pick-up apparatus, it is preferable that the collimator lens satisfies the following relation.

$$0 < \Delta 3/(fCL3 + \Delta 3) < 0.1$$

Where, $\Delta 3$: the difference between respective distances from the collimator lens to the image formation point when, from the surface of the optical disk side of the collimator lens, the collimator light fluxes of the wavelength $\lambda 1$ and the wavelength $\lambda 3$ are incident on it,

FCL3: the focal distance of the collimator lens to the wavelength $\lambda 3$.

The relation $0 < \Delta 3/(fCL3 + \Delta 3) < 0.1$ is a conditional expression showing the relationship of the collimator lens and its movement, when the upper limit of the relation $0 < \Delta 3/(fCL3 + \Delta 3) < 0.1$ is exceeded, the movement of the collimator lens is too much increased, and the size of apparatus is increased, or the absolute value of the third magnification M3 of the objective optical system to the wavelength $\lambda 3$ is too much increased, and because there is a case where a problem of the coma due to the lens shift at the time of the tracking is generated, it is not desirable.

Further, the chromatic aberration of the collimator lens can be decreased when the collimator lens is formed of the diffraction lens, or when the doublet lens composed of the positive lens and negative lens whose wavelength dispersions are different from each other, or the chromatic aberration-compensating element composed of the diffraction optical element, having a function by which the chromatic aberration is corrected, is arranged in the common optical path of the first light flux, and/or the second light flux and the third light flux. Hereby, the degrees of divergence of the first light flux incident on the objective optical system, and/or the second light flux, and the third light flux incident on the objective optical system, can be made almost the same, thereby, the movement amount of the collimator lens can be decreased. However, when such a chromatic aberration-compensating element is used, the number of parts is increased, or the processing becomes difficult, resulting in the complexity of the apparatus and cost-up. It is preferable that it is composed without using them.

In the structure for which the diffraction or chromatic aberration-compensating element is not assumed, the more desirable condition is

$$0.005 < \Delta 3/(fCL3 + \Delta 3) < 0.06.$$

In the above-described optical pick-up apparatus, it is preferable that, between at least the first light source and the collimator lens, a beam shaping optical element which converts an elliptical light flux from the light source into an almost circular shape, is used.

When, between at least the first light source and the collimator lens, the beam shaping optical element is arranged, the light utilization efficiency of the light from the semiconductor laser can be improved, and the advanced technical advantages of the pick-up can be attained.

Such a beam shaping element may be an element composed of a single lens of a cylindrical surface shape having a curvature, for example, only in one direction, or may also be an element composed of an anamorphic surface whose radius of curvature is different in two perpendicular directions.

As in the structure used in the present example, for example, in the optical path of the wavelength-integrated laser such as 2-laser 1 package or 3-laser 1 package, when the beam shaping element is arranged, in the positional relationship of 2 or 3 laser light emitting points and the beam shaping element, for example, for the beam shaping element composed of a cylindrical surface, it is preferable that the direction in which the surface of the beam shaping element does not have a curvature, is made coincident with the aligning direction of the 2 or 3 laser light emitting points. When the positional relationship of the beam shaping element and 2 or 3 laser light emitting points is made as described above, it becomes possible that the influence of the aberration due to the beam shaping element is eliminated, or reduced.

However, depending on the relationship between the alignment of the laser light emitting points and the elliptical light flux major axis direction of the semiconductor laser, it is not limited to the above description, it is necessary that the direction in which the beam shaping element conducts the beam shaping, and the direction of the semiconductor elliptical light flux are accepted as the desired directions, and the apparatus copes with a plurality of light sources.

In the above-described optical pick-up apparatus, in the light detecting section for detecting the reflected light from the information recording surface of the optical disk, it is also one of preferable modes that the light detecting section uses a common detecting section for at least 2 light fluxes in the first light flux from the first light source and the second light flux from the second light source, and the third light flux from the third light source.

When the light detecting section is a common one, it is desirable because there is an effect in the simplification of the apparatus by the reduction of the number of parts, and cost reduction.

In the optical pick-up apparatus of the present invention, it is also one of preferable modes that, in the direction from the surface of the protective layer of the first optical disk to the first light source, and the direction from the surface of the protective layer of the second optical disk to the second light source, and the direction from the surface of the protective layer of the third optical disk to the third light source, at least 2 directions are the same.

In the case where the direction from the surface of the protective layer of the first optical disk to the first light source, and the direction from the surface of the protective layer of the second optical disk to the second light source, and the direction from the surface of the protective layer of the third optical disk to the third light source, are made the same, when at least 2 light sources, for example, in the first light source to the third light source, are formed into a light source unit in which, for example, the light emitting point generating the first light flux, and the light emitting point generating the second light flux, are formed on the same substrate, or a light source unit in which, for example, the semiconductor chip generating the first light flux and the semiconductor chip generating the second light flux are housed in one casing, 2-laser 1 package into which 2 light sources are integrated, or furthermore, 2-laser 1 package in which they are made the second light flux and the third light flux, 3-laser 1 package into which the third light source is also integrated, is used, because the distance from the light source to the optical disk comes off without being changed corresponding to the kind of optical disk, when the using condition is changed from a certain kind of optical disk to a different kind of optical disk, the apparatus can correspond to it without moving the optical disk position or the other collimator. Because the apparatus can correspond to a plurality of optical disks without these movement mechanisms, there is an effect in the simplification of the apparatus and cost reduction.

Further, in the above-described optical pick-up apparatus, it is preferable that, in the distance from the surface of the protective layer of the first optical disk to the collimator lens, and the distance from the surface of the protective layer of the second optical disk to the collimator lens, and the distance from the surface of the protective layer of the third optical disk to the collimator lens, at least 2 distances are the same.

In the case where, in the distance from the surface of the protective layer of the first optical disk to the collimator lens, and the distance from the surface of the protective layer of the second optical disk to the collimator lens, and the distance from the surface of the protective layer of the third optical disk to the collimator lens, at least 2 distances are the same, when the using condition is changed from a certain kind of optical disk to a different kind of optical disk, for at least two light sources in which the distances from the surfaces of the protective layers of the optical disks to the collimator lens are made the same, while they uses the common collimator lens, the apparatus can correspond to the condition without moving the lens. Because apparatus can correspond to a plurality of optical disks without the movement mechanism of the collimator lens, there is an effect for the simplification of the apparatus and cost reduction.

## PREFERRED EMBODIMENTS OF THE INVENTION

Referring to the drawings, the preferred embodiments of the present invention will be described below.

(The first embodiment)

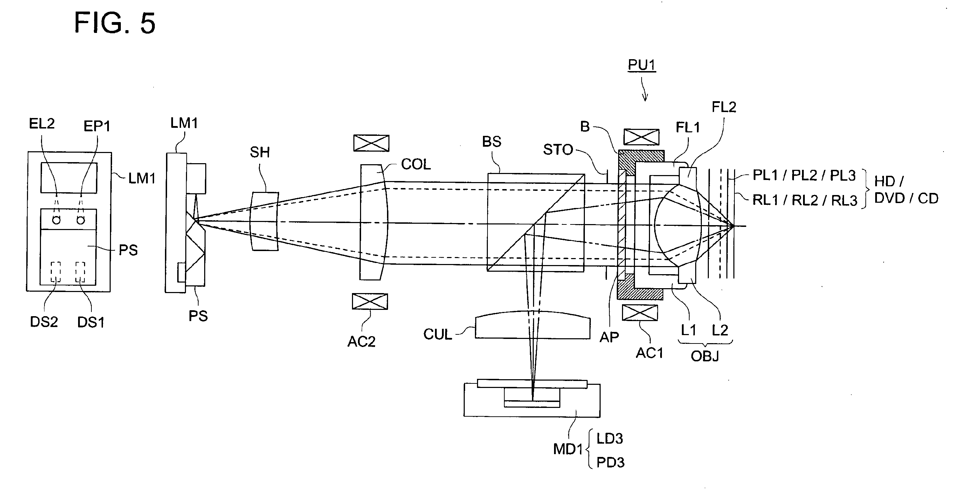

Fig. 5 is a view schematically showing a structure of the first optical pick-up apparatus PU1 which can adequately conducts the recording/reproducing of the information by a simple structure for any one of a high density optical disk HD (the first optical disk) and DVD (the second optical disk) and CD (the third optical disk). The optical specification of the high density optical disk HD is, the first wavelength $\lambda1 = 408$ nm, the thickness t1 of the first protective layer PL1 = 0.0875 mm, numerical aperture NA1 = 0.85, the optical specification of DVD is, the second wavelength $\lambda2 = 685$ nm, the thickness t2 of the second protective layer PL2 = 0.6 mm, numerical aperture NA2 = 0.60, and the optical specification of CD is, the third wavelength $\lambda3 = 785$ nm, the thickness t3 of the third protective layer PL3 = 1.2 mm, numerical aperture NA3 = 0.45.

Recording densities ($\rho1$ - $\rho3$) of the first optical disk - third optical disk is $\rho3 < \rho2 < \rho1$, and magnifications (the first magnification M1 - the third magnification M3) of an objective optical system OBJ when the recording and/or reproducing of the information is conducted for the first optical disk - the third optical disk, are M1 = M2 = 0, -0.17 < M3 < -0.025. However, a combination of the wavelength, thickness of the protective layer, numerical aperture, recording density, and magnification is not limited to this.

The optical pick-up apparatus PU1 is structured by: the first light emitting point EP1 (the first light source) which projects the laser light flux (the first light flux) of 408 nm light-emitted when the recording/reproducing of the information is conducted on the high density optical disk HD; the second light emitting point EP2 (the second light source) which projects the laser light flux (the second light flux) of 658 nm light-emitted when the recording/reproducing of the information is conducted on DVD; the first light receiving section DS1 which light-receives the reflected light flux from the information recording surface RL1 of the high density optical disk HD; the second light receiving section DS2 which light-receives the reflected light flux from the information recording surface RL2 of DVD; the laser module LM1 for the high density optical disk HD/DVD structured by a prism PS; the module MD1 for CD in which the infrared semiconductor laser LD3 (the third light source) which projects the laser light flux (the third light flux) of 785 nm light-emitted when the recording/reproducing of the information is conducted on CD, and the light detector PD3 are integrated; an aberration correction element L1 in which the diffractive structure as the phase structure is formed on its optical surface; the objective optical system OBJ composed of the light converging element L2 whose both surfaces are aspherical, having a function by which the laser light flux transmitted this aberration correction element L1 is light-converged onto the information recording surfaces RL1, RL2, RL3; an aperture limiting element AP; a 2-axis actuator AC1; a 1 axis actuator AC2; a stop STO corresponding to the numerical aperture NA1 of the high density optical disk HD; a polarizing beam splitter BS; a collimator lens (moving element); a coupling element CUL; and a beam shaping element SH.

In the optical pick-up apparatus PU1, when the recording/reproducing of the information is conducted on the high density optical disk HD, the laser module LM1 for the high density optical disk HD/DVD is actuated and the first light emitting point EP1 is light emitted. When the divergent light flux projected from the first light emitting point EP1 is, as its light path is drawn by the solid line in Fig. 5, reflected by the prism PS and transmitted the beam shaping element, its sectional shape is shaped from the ellipse to a circle, and after it is made the parallel light flux via the collimator lens COL, it is transmitted the polarizing beam splitter BS, the light flux diameter is limited by the stop STO, it is transmitted the aperture limiting element AP, and becomes a spot formed on the information recording surface RL1 through the first protective layer PL1 by the objective optical system OBJ. The objective optical system OBJ conducts the focusing or tracking by the 2-axis actuator AC1 arranged in its periphery. The reflected light flux modulated by the information pit on the information recording surface RL1 transmits again the objective optical system OBJ, aperture limiting element AP, polarizing beam splitter BS, and is made the converging light flux by the collimator lens COL, after it transmits the beam shaping element SH, it is reflected 2 times in the prism PS, and is light-converged on the light receiving section DS1. Then, when the output signal of the light receiving section DS1 is used, the information recorded in the high density optical disk HD can be read.

Further, in the optical pick-up apparatus PU1, when the recording/reproducing of the information is conducted on DVD, the collimator lens COL is moved by the 1 axis actuator AC2 in such a manner that the distance between the objective optical system OBJ and the collimator lens is smaller than in a case where the recording/reproducing of the information is conducted on the high density optical disk HD, so that the second light flux is projected from the collimator lens COL under a condition of the parallel light flux. After that, the objective optical system OBJ and the first laser module M1 for the high density optical disk HD/DVD are actuated, and the second light emitting point EP2 is light-emitted. The divergent light flux projected from the second light emitting point EP2 is, as its light path is drawn by a dotted line in Fig. 5, reflected by the prism PS, and when it is transmitted the beam shaping element SH, its sectional shape is shaped from the ellipse to a circle, and after it is made the parallel light flux via the collimator lens COL, it is transmitted the polarizing beam splitter BS, and transmitted the aperture limiting element AP, and becomes a spot formed on the information recording surface RL2 through the second protective layer PL2 by the objective optical system OBJ. The objective optical system OBJ conducts the focusing or tracking by the 2-axis actuator AC1 arranged in its periphery. The reflected light flux modulated by the information pit on the information recording surface RL2 transmits again the objective optical system OBJ, aperture limiting element AP, polarizing beam splitter BS, and is made the converging light flux by the collimator lens COL, after it transmits the beam shaping element SH, it is reflected 2 times in the prism PS, and is light-converged on the light receiving section DS2. Then, when the output signal of the light receiving section DS2 is used, the information recorded in DVD can be read.

Further, when the recording/reproducing of the information is conducted on CD, as its light path is drawn by a two-dotted chain line in Fig. 5, the module MD1 for CD is actuated, and the infrared semiconductor laser LD3 is light emitted. In the divergent light flux projected from the infrared semiconductor laser LD3, after its divergent angle is converted, it is reflected by the polarizing beam splitter BS, the light flux diameter is limited by the aperture limiting element AP, and it becomes a spot formed on the information recording surface RL3 through the third protective layer PL3 by the objective optical system OBJ. The objective optical system OBJ conducts the focusing or tracking by the 2-axis actuator AC1 arranged in its periphery. The reflected light flux modulated by the information pit on the information recording surface RL3 is, after it transmits again the objective optical system OBJ, aperture limiting element AP, reflected by the polarizing beam splitter BS, the divergent angle is converted by the coupling lens CUL, and is light-converged on the light receiving surface of the light detector PD3 of the module MD1 for CD. Then, when the output signal of the light detector PD3 is used, the information recorded in CD can be read.

Next, the structure of the objective optical system OBJ will be described. The aberration correction element L1 is, the refractive index nd in d-line is 1.5091, and the plastic lens whose Abbe's number vd is 56.5, and the refractive index to λ1 is 1.5242, the refractive index to λ2 is 1.5064, the refractive index to λ3 is 1.5050. Further, the light converging element L2 is, the refractive index nd in d-line is 1.5435, and the plastic lens whose Abbe's number vd is 56.3. Further, in the periphery of respective optical function sections (an area of the aberration correction element L1 and the light converging element L2 which the first light flux passes), it has flange sections FL1, FL2 which are integrally molded with the optical function section, and when both of one portion of such a flange section FL1 and one portion of F12 are mutually jointed, they are integrated.

Hereupon, when the aberration correction element L1 and the light conversing element L2 are integrated, the both may also be integrated through a mirror frame of a separated member.

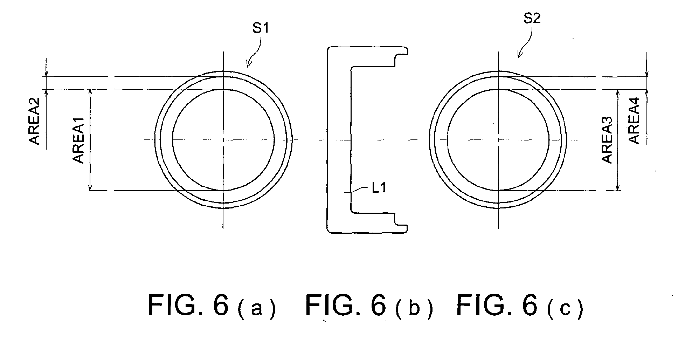

The optical surface S1 on the semiconductor light source side of the aberration correction element L1 is, as shown in Fig. 6, divided into the first area AREA 1 including the optical axis corresponding to an area in NA2 and the second area AREA 2 corresponding to an area from NA2 to NA1, and in the first area AREA 1, as shown in Fig. 3, a diffractive structure (hereinafter, this diffractive structure is referred as "diffractive structure HOE") which is a structure in which a plurality of ring-shaped zones inside of which the step structure is formed, are aligned around the optical axis, is formed.

In the diffractive structure HOE formed in the first area AREA 1, the depth D of the step structure formed in each of ring-shaped zones is set to a value calculated by D ·(N-1)/λ1 = 2·q (9), and the number of divisions P in each of ring-shaped zones is set to 5. Where, λ1 is a value in which the wavelength of the laser light flux projected from the first light emitting point EP1 is expressed in micron unit, (herein, λ1 = 0.408 μm), and q is a natural number.

When, on the step structure in which the depth D in the optical axis direction is set in this manner, the first light flux of the first wavelength λ1 is incident, the optical path difference of 2 × λ1 (μm) is generated between the adjoining step structures, and because the phase difference is not practically given to the first light flux, the flux is not diffracted, and transmitted as it is, (in the present specification, it is referred as "0th-order diffraction light").

Further, when, on this step structure, the third light flux of the first wavelength λ3 (herein, λ3 = 0.785 μm) is incident, the optical path difference of (2 × λ1/λ3) × λ3 (μm) is generated between the adjoining step structures. Because the third wavelength λ3 is about 2 times of λ1, the optical path difference of 1 × λ3 (μm) is generated between the adjoining step structures, and also in the third light flux, in the same manner as the first light flux, because the phase difference is not practically given to the third light flux, the flux is not diffracted and transmitted as it is (0- order diffraction light).

On the one hand, when, on this step structure, the second light flux of the second wavelength λ2 (herein, λ2 = 0.658 μm) is incident, the optical path difference of 2 × 0.408 × (1.5064 - 1)/(1.5242 =1) - 0.658 = 0.13 (μm) is generated between the adjoining step structures. Because the divided number P in each of ring-shaped zones is set to 5, the optical path difference for 1 wavelength of the second wavelength λ2 is generated between the adjoining mutual ring-shaped zones, (0.13 × 5 = 0.65 ≈ 1 × 0.658), and the second light flux is diffracted in the direction of +1st-order (+1st-order diffraction light). The diffraction efficiency of +1st-order diffraction light of the second light flux in this case is 87.5 %, and it is a sufficient light amount for the recording/reproducing of the information for DVD.

The light converging element L2 is designed in such a manner that the spherical aberration is minimum for a combination of the first wavelength λ1, the magnification M1 = 0, and the first protective layer PL1. Therefore, as in the present embodiment, when the first magnification M1 for the first light flux and the second magnification M2 for the second light flux is made the same, by the difference of the thickness between the first protective layer PL1 and the second protective layer PL2, the spherical aberration of the second light flux transmitted the light converging element L2 and the second protective layer P12 is in the over-correction direction.

The width of each ring-shaped zone of the diffractive structure HOE is set in such a manner that, when the second light flux is incident on it, the spherical aberration in the under-correction direction is added to +1st-order diffraction light by the diffraction action. When the addition amount of the spherical aberration by the diffractive structure HOE and the spherical aberration in the over-correction direction generated due to the difference of the thickness between the first protective layer PL1 and the second protective layer PL2 are cancelled with each other, the second light flux which transmits the diffractive structure HOE and the second protective layer PL2 forms a good spot on the information recording surface RL2 of DVD.

Further, the optical surface S2 on the optical disk side of the aberration correction element L1 is, as shown in Fig. 6, divided into the third area AREA 3 including the optical axis corresponding to an area in NA2, and the fourth area AREA 4 corresponding to an area from NA2 to NA1 and, as shown in Fig. 1, the diffractive structures composed of a plurality of ring-shaped zones whose sectional shape including the optical axis is a saw-toothed shape are respectively formed in the third AREA 3 and the fourth AREA 4. Hereinafter, the diffractive structures formed on the AREA 3 and AREA 4 are referred as diffractive structures DOE1 and DOE2, respectively.

The diffractive structures DOE1, DOE2 are structures for suppressing the chromatic aberration of the objective optical system OBJ in the blue violet area and the spherical aberration following the temperature change.

In the diffractive structure DOE1, the height d1 of the step difference closest to the optical axis is designed in such a manner that the diffraction efficiency is 100 % to the wavelength 300 nm (the refractive index of the aberration correction element L1 to wavelength 390 nm is 1.5273). When the first light flux is incident on the diffractive structure DOE1 in which the depth of step difference is set in this manner, +2nd-order diffraction light is generated at the diffraction efficiency of 96.8 %, when the second light flux is incident on it, +1st-order diffraction light is generated at the diffraction efficiency of 93.9 %, and when the third light flux is incident on it, +1st-order diffraction light is generated at the diffraction efficiency of 99.2 %, therefore, the sufficient diffraction efficiency can be obtained even in any wavelength area, and even when the chromatic aberration is corrected in the blue violet area, the chromatic aberration in the wavelength areas of the second light flux and the third light flux does not become too excessive.

On the one hand, because the diffractive structure DOE2 is optimized to the first wavelength $\lambda1$, when the first light flux is incident on the diffractive structure DOE2, +2nd-order diffraction light is generated at the diffraction efficiency of 100 %.

In the objective optical system OBJ in the present embodiment, when the diffractive structure DOE1 is optimized to the wavelength 390 nm, the diffraction efficiency is distributed to the first light flux to the third light flux, however, also in the diffractive structure DOE1, in the same manner as in the diffractive structure DOE2, by optimizing it to the first wavelength $\lambda1$, a structure in which a serious view is taken of the diffraction efficiency of the first light flux, may also be applied.

Further, the diffractive structures DOE1, DOE2 have the wavelength dependency of the spherical aberration in which, in the blue violet area, when the wavelength of the incident light flux is increased, the spherical aberration is changed to the under correction direction, and when the wavelength of the incident light flux is decreased, the spherical aberration is changed to the over correction direction. Hereby, when the spherical aberration change generated in the light converging element following the environmental temperature change is cancelled, the temperature range in which the objective optical system OBJ which is a high NA plastic lens, can be used, is extended.

In the aberration correction element L1 of the present embodiment, the structure is formed in such a manner that the diffractive structure HOE is formed on the optical surface S1 on the semiconductor laser light source side, and the diffractive structure DOE is formed on the optical surface S2 on the optical disk side, however, in contrast with this, a structure in which the diffractive structure DOE is formed on the optical surface S1, and the diffractive structure HOE is formed on the optical surface S2, may also be applied.

Further, because the objective optical system OBJ of the present embodiment is an optical system in which the sinusoidal condition is corrected to the infinity object point, the sinusoidal condition to the finite object point is not satisfied. Therefore, when the divergent light flux is incident on the objective optical system as in the case where the recording/reproducing of the information is conducted on CD, when the objective optical system OBJ conducts the tracking, because the light emitting point of the infrared semiconductor laser LD3 is an off-axis object point, the coma is generated.

The coupling lens CUL is a coma correction element having a function by which such a coma is decreased, and in the effective diameter which the third light flux passes under the condition that the light emitting point of the infrared semiconductor laser LD3 is positioned on the optical axis of the objective optical system, the spherical aberration is corrected so that it is less than the diffraction limit, and outside this effective diameter, the coupling lens is designed so that the spherical aberration is generated in the over correction direction.

Hereby, when the objective optical system OBJ conducts the tracking, because the third light flux passes an area which is designed so that it has a large spherical aberration, the coma is added to the third light flux passed the coupling lens CUL and the objective optical system OBJ. The direction of the spherical aberration and the largeness outside from the effective diameter of the coupling lens CUL is determined so that this coma, and the coma caused by that the light emitting point of the infrared semiconductor laser LD3 becomes an off-axis object point, are cancelled.

When it is used in combination with the coupling lens designed in such a manner, the tracking characteristic of the objective lens OBJ which does not satisfy the sinusoidal condition to the finite object point, to CD can be made a good one.

Hereupon, when the coupling lens CUL as the coma correction element, is not provided and the objective lens OBJ is tilt-driven in timed relationship with the tracking of the objective optical system OBJ, a structure by which the coma generated by the tracking of the objective optical system and the coma generated in the case of tilt-driven are made to be cancelled each other, may also be applied. As a method by which the objective optical system OBJ is tilt-driven, when it is tilt-driven by a 3-axis actuator, a structure by which the coma generated by the tracking of the objective optical system OBJ and the coma generated in the case of tilt-driven are made to be cancelled each other, may also be applied.

Further, in the 2-axis actuator, when the spring rigidity of suspensions to hold bobbins arranged at the upper and lower 2 stages, to the fixed section, are made different on the upper side and the lower side, the objective optical system OBJ can be tilted by a predetermined amount corresponding to the tracking amount. When the 2-axis actuator is structured in this manner, a structure by which the coma generated by the tracking of the objective optical system OBJ and the coma generated when the OBJ is tilted, are made to be cancelled each other, may also be applied.

Further, when the collimator lens COL is driven in the direction perpendicular to the optical axis by the 2-axis actuator, in timed relationship with the tracking of the objective optical system OBJ, a structure by which the tracking characteristic of the objective optical system OBJ to CD is made a good one, may also be applied.

Further, the collimator lens COL is structured in such a manner that its position can move in the optical axis direction by the 1-axis actuator AC2, and as described above, absorbs the chromatic aberration between the first wavelength λ1 and the second wavelength λ2, and the light flux of any wavelength can also be projected under the condition of parallel light flux from the collimator lens COL. Further, in the case where the recording/reproducing of the information is conducted on the high density optical disk HD, when the collimator lens COL is moved in the optical axis direction, because the spherical aberration of the spot formed on the information recording surface RL1 of the high density optical disk HD can be corrected, always good recording/reproducing characteristic for the high density optical disk HD can be maintained.

The causes of generation of the spherical aberration corrected by the position adjustment of the collimator lens COL are, for example, the wavelength dispersion due to the manufacturing error of the blue violet semiconductor laser LD1, refractive index change or refractive index distribution of the objective optical system OBJ following the temperature change, focus jump between layers at the time of the recording/reproducing on the multi-layer disk such as 2-layer disk, 4-layer disk, or thickness dispersion or thickness distribution due to the manufacturing error of the protective layer PL1.

In the above description, a case where the spherical aberration of the spot formed on the information recording surface RL1 of the high density optical disk is corrected, is described, however, the spherical aberration of the spot formed on the information recording surface RL2 of DVD may also be corrected by the position adjustment of the collimator lens COL.

Further, in the present embodiment, as an aperture element to conduct the aperture limit corresponding to NA3, an aperture limiting element AP integrated with the objective optical system OBJ through the joint member B is provided. Then, the aperture limiting element AP and the objective optical system OBJ are integrally tracking-driven by the 2- axis actuator AC1.

On the optical surface of the aperture limiting element AP, a wavelength selection filter WF having the wavelength selectivity of the transmission is formed. Because this wavelength selection filter WF has the wavelength selectivity of the transmission by which, in an area in NA3, all wavelengths of the first wavelength λ1 to the third wavelength λ3 are made to transmit, in an area from NA3 to NA1, only the third wavelength λ3 is shut off, and the first wavelength λ1 and the second wavelength λ2 are transmitted, the aperture limit corresponding to NA3 can be conducted by such a wavelength selectivity.

Hereupon, the wavelength select filter WF may also be formed on the optical function surface of the aberration correction element L1, or may also be formed on the optical function surface of the light converging element L2.

Further, because the diffractive structure HOE is formed in the first area AREA 1 corresponding to NA2, the second light flux passing the second area AREA 2 becomes a flare component which does not contribute to the spot formation onto the information recording surface RL2 of DVD. This is equivalent to a fact that the objective optical system OBJ has an aperture limit function corresponding to NA2, and by this function, the aperture limit corresponding to NA2 is conducted.

Further, as the limit method of the aperture, not only a method using the wavelength selection filter WF, but also a method by which the stop is mechanically switched, or a method using a liquid crystal phase-controlling element LCD which will be described later, may be applied.

(The second embodiment)

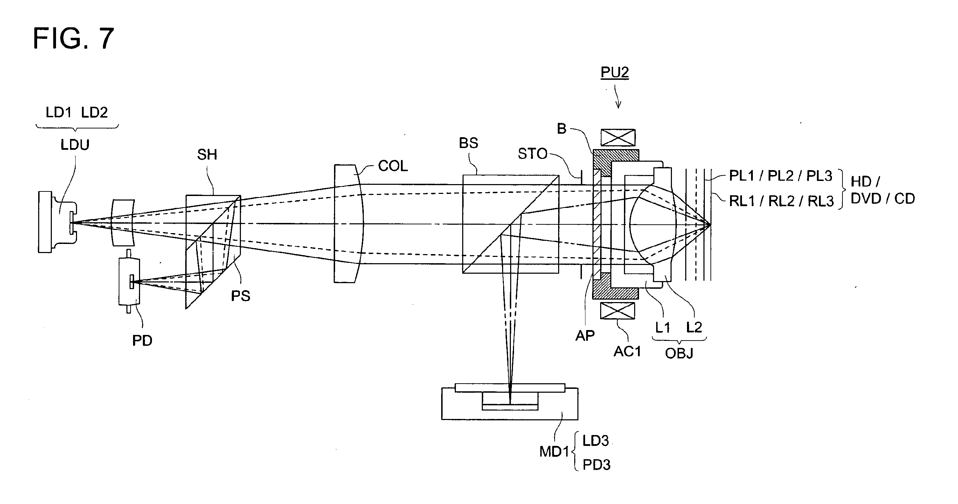

Fig. 7 is a view generally showing the structure of the second optical pick-up apparatus PU2 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength λ1 = 408 nm, the thickness t1 of the first protective layer PL1 t1 = 0.0875 mm, numerical aperture NA1 = 0.85, the optical specification of DVD is, the second wavelength λ2 = 658 nm, the thickness t2 of the second protective layer PL2 t2 = 0.6 mm, numerical aperture NA2 = 0.67, and the optical specification of CD is, the third wavelength λ3 = 785 nm, the thickness t3 of the third protective layer PL3 t3 = 1.2 mm, numerical aperture NA3 = 0.45.

Recording densities (ρ1 - ρ3) of the first optical disk - the third optical disk are ρ3 < ρ2 < ρ1, and magnifications (the first magnification M1 - the third magnification M3) of the objective optical system when the recording and/or reproducing of the information is conducted for the first optical disk - the third optical disk, are M1 =0, 0.015 < M2 < 0, -0.17 < M3 < -0.025. That is, in the objective optical system OBJ in the present embodiment, it is a structure on which the second light flux is incident under the condition of loose divergent light flux. However, a combination of the wavelength, thickness of protective layer, numerical aperture, recording density and magnification, is not limited to this.

The optical pick-up apparatus PU2 comprises of: the light source unit LDU into which the blue violet semiconductor laser LD1 (the first light source) which projects the laser light flux (the first light flux) of 408 nm which is light emitted when the recording/reproducing of the information is conducted on the high density optical disk HD, and the red semiconductor laser LD2 (the second light source) which projects the laser light flux (the second light flux) of 658 nm which is light emitted when the recording/reproducing of the information is conducted on DVD, are integrated; light detector PD for both of the high density optical disk and DVD; prism PS; module for CD MD1 into which the infrared semiconductor laser LD3 (the third light source) which projects the laser light flux (the third light flux)of 785 nm which is light emitted when the recording/reproducing of the information is conducted on CD, and the light detector PD3 are integrated; objective optical system OBJ consists of the aberration correcting element L1 in which the diffractive structure as the phase structure is formed on its optical surface, and the light converging element L2 both surfaces of which are aspherical surfaces, having a function by which the laser light fluxes transmitted this aberration correcting element L1 are light-converged on the information recording surfaces RL1, RL2, RL3; aperture limiting element AP; 2-axis actuator AC1; stop STO corresponding to the numerical aperture NA1 of the high density optical disk HD; polarizing beam splitter BS; collimator lens COL; and beam shaping element SH.

Hereupon, an integrated unit in which the above light source unit LDU, beam shaping element SH, light detector PD, and prism PS are integrated and housed in one casing, may also be used.

In the optical pick-up apparatus PU2, when the recording/reproducing of the information is conducted on the high density optical disk HD, initially, the blue violet semiconductor laser LD2 is light emitted. When the divergent light flux projected from the red semiconductor laser LD2 is, as its light path is drawn by the dotted line in Fig. 7, when it transmits the beam shaping element SH, its sectional shape is shaped from an ellipse to a circle, transmits the prism PS, and after it is made the loose parallel light flux in the collimator lens COL, transmits the polarizing beam splitter BS, transmits the aperture limiting element AP, and becomes a spot formed on the information recording surface RL2 through the second protective layer PL2 by the objective optical system OBJ. The objective optical system OBJ conducts the focusing or tracking by the 2-axis actuator AC1 arranged in its periphery. The reflected light flux modulated by the information pit on the information recording surface RL2 transmits again the objective optical system OBJ, aperture limiting element AP, polarizing beam splitter BS, and is made the converging light flux by the collimator lens COL, it is reflected 2 times in the prism PS, and is light-converged on the light detector PD. Then, when the output signal of the light detector PD is used, the information recorded in the high density optical disk HD can be read.

Further, In the optical pick-up apparatus PU2, when the recording/reproducing of the information is conducted on the DVD, initially, the red semiconductor laser LD2 is light emitted. When the divergent light flux projected from the red semiconductor laser LD2 is, as its light path is drawn by the dotted line in Fig. 7, when it transmits the beam shaping element SH, its sectional shape is shaped from an ellipse to a circle, transmits the prism PS, and after it is made into the loose parallel light flux in the collimator lens COL, transmits the polarizing beam splitter BS, transmits the aperture limiting element AP, and becomes a spot formed on the information recording surface RL2 through the second protective layer PL2 by the objective optical system OBJ. The objective optical system OBJ conducts the focusing or tracking by the 2-axis actuator AC1 arranged in its periphery. The reflected light flux modulated by the information pit on the information recording surface RL2 transmits again the objective optical system OBJ, aperture limiting element AP, polarizing beam splitter BS, and is made into the converging light flux by the collimator lens COL, it is reflected 2 times in the prism PS, and is light-converged on the light detector PD. Then, when the output signal of the light detector PD is used, the information recorded in DVD can be read.

Further, when the recording/reproducing of the information is conducted on CD, as its light path is drawn by the two-dotted chain line in Fig. 7, the module MD1 for CD is actuated and the infrared semiconductor laser LD3 is light emitted. The divergent light flux projected from the infrared semiconductor laser LD3 is, reflected by the polarizing beam splitter BS, the light flux diameter is regulated by the aperture limiting element AP, and becomes a spot formed on the information recording surface RL3 through the third protective layer PL3 by the objective optical system OBJ. The objective optical system OBJ conducts the focusing or tracking by the 2-axis actuator AC1 arranged in its periphery. The reflected light flux modulated by the information pit on the information recording surface RL3 is, after it transmits again the objective optical system OBJ, aperture limiting element AP, reflected by the polarizing beam splitter BS, and is converged on the light receiving surface of the light detector PD3 of the module MD1 for CD. Then, when the output signal of the light detector PD3 is used, the information recorded in CD can be read.

Because the function or structure of the objective optical system OBJ is the same as the objective optical system in the first embodiment except that the second light flux is incident under the condition of loose divergent light flux, a detailed description is omitted herein.

Further, because the structure or function of the aperture limiting element AP is the same as the aperture limiting element AP in the first embodiment, a detailed description is omitted herein.

In the present embodiment, in the collimator lens COL, because its refractive index or surface shape is designed so that the first light flux which is incident as the divergent light flux is projected as the parallel light flux, the second light flux which is incident on the collimator lens COL as the divergent light flux is not perfectly made into parallel light flux in the collimator lens COL by the influence of the chromatic aberration of the collimator lens COL, and is projected under the condition of a loose divergent light flux and incident on the objective optical system OBJ. In the case where the designed magnification for the second light flux of the objective optical system OBJ is 0, when the second light flux of the divergent light flux is incident on the objective optical system OBJ, the spherical aberration is generated. However, because the designed magnification for the second light flux of the objective optical system OBJ in the present embodiment satisfies the relation -0.015 < M2 < 0, even when the second light flux is incident on the objective optical system OBJ as the divergent light flux, the generation of the spherical aberration does not occur.

(The third embodiment)

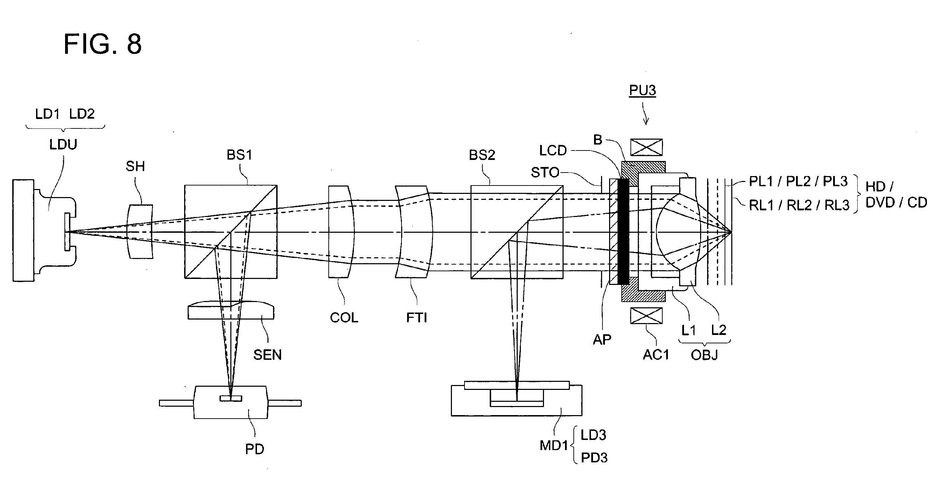

Fig. 8 is a view generally showing the structure of the third optical pick-up apparatus PU3 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength λ1 = 408 nm, the thickness t1 of the first protective layer PL1 t1 = 0.0875 mm, numerical aperture NA1 = 0.85, the optical specification of DVD is, the second wavelength λ2 = 658 nm, the thickness t2 of the second protective layer PL2 t2 = 0.6 mm, numerical aperture NA2 = 0.67, and the optical specification of CD is, the third wavelength λ3 = 785 nm, the thickness t3 of the third protective layer PL3 t3 = 1.2 mm, numerical aperture NA3 = 0.45.

Recording densities (ρ1 - ρ3) of the first optical disk - the third optical disk are ρ3 < ρ2 < ρ1, and magnifications (the first magnification M1 - the third magnification M3) of the objective optical system when the recording and/or reproducing of the information is conducted for the first optical disk - the third optical disk, are M1 = M2 =0, -0.17 < M3 < -0.025. However, a combination of the wavelength, thickness of protective layer, numerical aperture, recording density and magnification, is not limited to this.

The optical pick-up apparatus PU3 comprises of: the light source unit LDU into which the blue violet semiconductor laser LD1 which projects the laser light flux (the first light flux) of 408 nm which is light emitted when the recording/reproducing of the information is conducted on the high density optical disk HD, and the red semiconductor laser LD2 which projects the laser light flux (the second light flux)of 658 nm which is light emitted when the recording/reproducing of the information is conducted on DVD, are integrated; light detector PD for both of the high density optical disk and DVD; module MD1 for CD into which the infrared semiconductor laser LD3 which projects the laser light flux (the third light flux)of 785 nm which is light emitted when the recording/reproducing of the information is conducted on CD, and the light detector PD3 are integrated; objective optical system OBJ consisting of the aberration correcting element L1 in which the diffractive structure as the phase structure is formed on its optical surface, and the light converging element L2 both surfaces of which are aspherical surfaces, having a function by which the laser light fluxes transmitted this aberration correcting element L1 are light-converged on the information recording surfaces RL1, RL2, RL3; aperture limiting element AP; liquid crystal phase-controlling element LCD; 2-axis actuator AC1; stop STO corresponding to the numerical aperture NA1 of the high density optical disk HD; first polarizing beam splitter BS1; second polarizing beam splitter BS2; collimator lens COL; light intensity distribution conversion element FTI; sensor lens SEN for dividing the reflected light flux from the information recording surfaces RL1 and RL2; and beam shaping element SH.

In the optical pick-up apparatus PU3, when the recording/reproducing of the information is conducted on the high density optical disk HD, as its light path is drawn by the solid line in Fig. 8, the blue violet semiconductor laser LD1 is light emitted. When the divergent light flux projected from the blue violet semiconductor laser LD1, after, by transmitting the beam shaping element SH, its sectional shape is shaped from an ellipse to a circle, transmits the first polarizing beam splitter BS1, is converted into the parallel light flux by the collimator lens COL, and by transmitting the light intensity distribution conversion element FTI, the intensity distribution is converted, and after transmitting the second polarizing beam splitter BS2, the light flux diameter is regulated by the stop STO, transmits the aperture limiting element AP, liquid crystal phase-controlling element LCD, and becomes a spot formed on the information recording surface RL1 through the first protective layer PL1 by the objective optical system OBJ. The objective optical system OBJ conducts the focusing or tracking by the 2-axis actuator AC1 arranged in its periphery.

The reflected light flux modulated by the information pit on the information recording surface RL1 is, after it transmits again the objective optical system OBJ, liquid crystal phase-controlling element LCD, aperture limiting element AP, second polarizing beam splitter BS2, light intensity distribution conversion element FT1, collimator lens COL, reflected by the first polarizing beam splitter BS1, and light flux-divided by the sensor lens SEN, and converted into the converging light flux, and converged on the light receiving surface of the light detector PD. Then, when the output signal of the light detector PD is used, the information recorded in the high density optical disk can be read.

Further, when the recording/reproducing of the information is conducted on DVD, as its light path is drawn by a dotted line in Fig. 8, the red semiconductor laser LD2 is light emitted. When the divergent light flux projected from the red semiconductor laser LD2 is, when it transmits the beam shaping element SH, after its sectional shape is shaped from an ellipse to a circle, transmits the first polarizing beam splitter BS1, converted into the parallel light flux by the collimator lens COL, and by transmitting the light intensity distribution conversion element FTI, the intensity distribution is converted, and after transmits the second polarizing beam splitter BS2, transmits the aperture limiting element AP, liquid crystal phase-controlling element LCD, and becomes a spot formed on the information recording surface RL2 through the second protective layer PL2 by the objective optical system OBJ. The objective optical system OBJ conducts the focusing or tracking by the 2-axis actuator AC1 arranged in its periphery.

The reflected light flux modulated by the information pit on the information recording surface RL2 is, after it transmits again the objective optical system OBJ, liquid crystal phase-controlling element LCD, aperture limiting element AP, second polarizing beam splitter BS2, light intensity distribution conversion element FTI, collimator lens COL, and is made the converging light flux by the collimator lens COL, reflected by the first polarizing beam splitter BS1, and light flux-divided by the sensor lens SEN, and converted into the converging light flux, and is converged on the light receiving surface of the light detector PD. Then, when the output signal of the light detector PD is used, the information recorded in DVD can be read.

Further, when the recording/reproducing of the information is conducted on CD, as its light path is drawn by the two-dotted chain line in Fig. 8, the module MD1 for CD is actuated and the infrared semiconductor laser LD3 is light emitted. The divergent light flux projected from the infrared semiconductor laser LD3 is, after reflected by the second polarizing beam splitter BS2, the light flux diameter is regulated by the aperture limiting element AP, transmits the liquid crystal phase-controlling element LCD, and becomes a spot formed on the information recording surface RL3 through the third protective layer PL3 by the objective optical system OBJ. The objective optical system OBJ conducts the focusing or tracking by the 2-axis actuator AC1 arranged in its periphery.

The reflected light flux modulated by the information pit on the information recording surface RL3 is, after it transmits again the objective optical system OBJ, liquid crystal phase-controlling element LCD, aperture limiting element AP, reflected by the second polarizing beam splitter BS2, and is converged on the light receiving surface of the light detector PD3 of the module MD1 for CD. Then, when the output signal of the light detector PD3 is used, the information recorded in CD can be read.

The sensor lens SEN has a function by which the reflected light fluxes from the information recording surfaces RL1 and RL2 is divided into the light flux in the vicinity of the optical axis, and the peripheral light flux apart from the optical axis, and the respective divided light fluxes are light converged on the different light receiving surfaces on the light detector PD. Because the spherical aberration is the difference of the focal distance between the light flux of the vicinity of optical axis and the peripheral light flux, when the difference of the focal distance between the light flux of the vicinity of optical axis and the peripheral light flux is detected, the spherical aberration of the spot light converged on the information recording surfaces RL1 and RL2 is detected, and the spherical aberration signal can be generated. When this spherical aberration signal is fed-back to the drive circuit (not shown) of the liquid crystal phase-controlling element LCD, the spherical aberration change of the spot light converged on the information recording surfaces RL1 and RL2 by the liquid crystal phase-controlling element LCD so that the spherical aberration signal is 0, is corrected.

Further, the light detector PD detects the focus signal or tracking signal other than the spherical aberration signal, and the objective optical system OBJ is driven by the 2-axis actuator AC1.

Hereupon, excepting the detection method of the above spherical aberration, the detection method as written in the following Patent Document 2 may also be used.

Patent Document 2: Tokkai No. 2002-304763

The liquid crystal phase-controlling element LCD of the present embodiment consists of, drawing is not shown, a liquid crystal layer which generates the phase change to the transmitting light flux by the impression of the voltage, electrode layers opposing to each other, for impressing the voltage on the liquid crystal element, a power source for supplying the voltage to the electrode layers, and a drive circuit. At least one of electrode layers opposing each other is divided into a predetermined pattern, and when the voltage is impressed on this electrode layer, the orientation condition of the liquid crystal element is changed, and a predetermined phase can add to the transmitting light flux. Hereby, because the spherical aberration of the spot formed on the information recording surface RL1 of the high density optical disk HD can be corrected, the good recording/reproducing characteristic can be maintained always to the high density optical disk HD.

The causes of generation of the spherical aberration corrected by the liquid crystal phase-controlling element are, for example, the wavelength dispersion due to the manufacturing error of the blue violet semiconductor laser LD1, the refractive index change or refractive index distribution of the objective optical system OBJ following the temperature change, the focus jump between layers at the time of the recording/reproducing for the multi-layer disk such as 2-layer disk, 4-layer disk, the thickness dispersion or thickness distribution by the manufacturing error of the protective layer PL1.

Then, by the optical pick-up apparatus PU3 provided with such a structure, the spherical aberration of the spot formed on the information recording surface RL1 of the high density optical disk HD is corrected, however, other than that, the spherical aberration of the spot formed on the information recording surface RL2 of DVD, or the spherical aberration of the spot formed on the information recording surface RL3 of CD may also be corrected by the liquid crystal control element LCD. Particularly, in the case where the recording/reproducing of the information is conducted on CD, when the spherical aberration generated due to the difference of the thickness between the first protective layer PL1 and the third protective layer PL3 is corrected by the liquid crystal control element LCD, because the third magnification M3 of the objective optical system OBJ for the third light flux can be set larger, the generation of the coma at the time of the tracking drive can be suppressed small. Alternatively, a structure by which, in the case where the recording/ reproducing of the information is conducted on CD, when the liquid crystal control element LCD is actuated following the tracking of the objective optical system, the coma generated by the tracking of the objective optical system is cancelled, may also be applied.

Further, in the present embodiment, the structure in which the aperture limit corresponding to NA3 is conducted by the aperture limiting element AP, is applied, however, this aperture limit may also be conducted by the liquid crystal control element LCD. The technology in which the aperture limit is conducted by the liquid crystal control element LCD, is written in the following document, and is the publicly known technology, therefore, the detailed description is omitted herein.

OPTICS DESIGN. No. 21, 50-55 (2000)

Hereupon, the objective optical system OBJ and the liquid crystal control element LCD are integrated through the joint member B.

Because the structure or function of the objective optical system OBJ is the same as the objective optical system OBJ in the first embodiment, the detailed description is omitted herein.

Further, because the structure or function of the aperture limiting element AP is the same as the aperture limiting element AP in the first embodiment, the detailed description is omitted herein.

Further, in the present embodiment, on the optical surface of the collimator lens COL, the diffractive structure DOE3 as typically shown in Fig. 1 is formed, and because the chromatic aberration due to the wavelength difference between the first light flux and the second light flux is corrected by this diffractive structure DOE3, the second light flux incident on the collimator lens COL as the divergent light flux is made into the parallel light flux and it is incident on the objective optical system OBJ.

In the optical pick-up apparatus PU3 of the present embodiment, the collimator lens COL is provided with one diffractive structure, and the objective optical system OBJ is provided with two diffractive structures (HOE and DOE), and 3 diffractive structures are provided in the optical path of the first light flux and the second light flux. Therefore, in the light flux transmitted these 3 diffractive structures, the light amount of the periphery of the effective diameter is lower than the light amount in the vicinity of the optical axis. Because the light intensity distribution conversion element FTI has a function to compensate such a lowering of the peripheral light amount, and make the light amount distribution constant, an increase of the spot diameters on the information recording surfaces RL1 and RL2 by the apodization can be prevented.

Hereupon, in the optical pick-up apparatus PU3 of the present embodiment, the structure in which the collimator lens COL and the light intensity distribution conversion element FTI are separately arranged, is applied, however, these optical elements may also be integrated.

(The fourth embodiment)

Fig. 8 is a view generally showing the structure of the fourth optical pick-up apparatus PU4 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength $\lambda1$ = 408 nm, the thickness t1 of the first protective layer PL1 t1 = 0.0875 mm, numerical aperture NA1 = 0.85, the optical specification of DVD is, the second wavelength $\lambda2$ = 658 nm, the thickness t2 of the second protective layer PL2 t2 = 0.6 mm, numerical aperture NA2 = 0.67, and the optical specification of CD is, the third wavelength $\lambda3$ = 785 nm, the thickness t3 of the third protective layer PL3 t3 = 1.2 mm, numerical aperture NA3 = 0.45.

Recording densities ($\rho1$ - $\rho3$) of the first optical disk - the third optical disk are $\rho3 < \rho2 < \rho1$, and magnifications (the first magnification M1 - the third magnification M3) of the objective optical system when the recording and/or reproducing of the information is conducted for the first optical disk - the third optical disk, are M1 = M2 =0, -0.17 < M3 < -0.025. However, a combination of the wavelength, thickness of protective layer, numerical aperture, recording density and magnification, is not limited to this.

The optical pick-up apparatus PU4 comprises of: the light source unit LDU into which the blue violet semiconductor laser LD1 which projects the laser light flux (the first light flux) of 408 nm which is light emitted when the recording/reproducing of the information is conducted on the high density optical disk HD, and the red semiconductor laser LD2 which projects the laser light flux (the second light flux)of 658 nm which is light emitted when the recording/ reproducing of the information is conducted on DVD, are integrated; light detector PD for both of the high density optical disk and DVD; module MD1 for CD into which the infrared semiconductor laser LD3 which projects the laser light flux (the third light flux)of 785 nm which is light emitted when the recording/reproducing of the information is conducted on CD, and the light detector PD3 are integrated; objective optical system OBJ consisting of the aberration correcting element L1 in which the diffractive structure as the phase structure is formed on its optical surface, and the light converging element L2 both surfaces of which are aspherical surfaces, having a function by which the laser light fluxes transmitted this aberration correcting element L1 are light-converged on the information recording surfaces RL1, RL2, RL3; aperture limiting element AP; 2-axis actuator AC1; stop STO corresponding to the numerical aperture NA1 of the high density optical disk HD; first polarizing beam splitter BS1; second polarizing beam splitter BS2; collimator lens COL; beam expander EXP composed of a negative lens and a positive lens; sensor lens SEN for dividing the reflected light flux from the information recording surfaces RL1 and RL2; beam shaping element SH, and 1-axis actuator AC2.

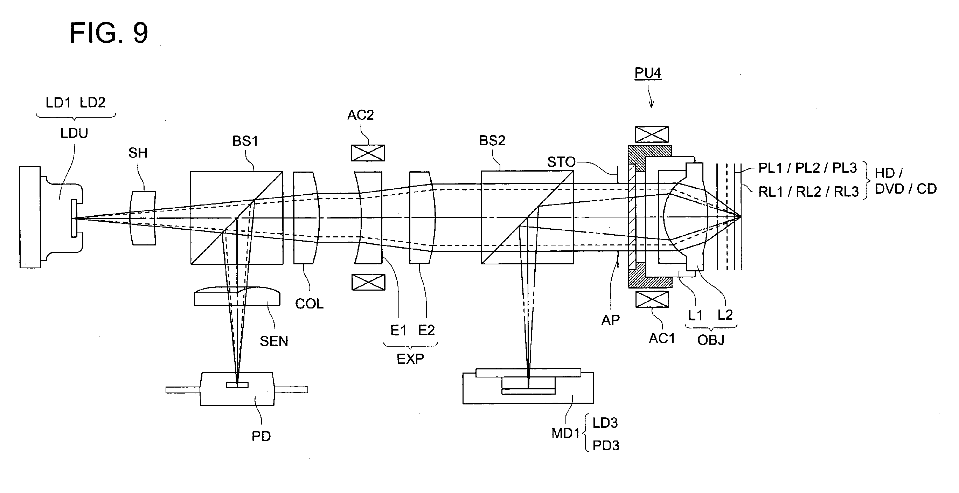

In the optical pick-up apparatus PU4, when the recording/reproducing of the information is conducted on the high density optical disk HD, as its light path is drawn by the solid line in Fig. 9, the blue violet semiconductor laser LD1 is light emitted. When the divergent light flux projected from the blue violet semiconductor laser LD1, after, by transmitting the beam shaping element SH, its sectional shape is shaped from an ellipse to a circle, transmits the first polarizing beam splitter BS1, is converted into the parallel light flux by the collimator lens COL, and after transmitting the beam expander EXP, the second polarizing beam splitter BS2, the light flux diameter is regulated by the stop STO, transmits the aperture limiting element AP, and becomes a spot formed on the information recording surface RL1 through the first protective layer PL1 by the objective optical system OBJ. The objective optical system OBJ conducts the focusing or tracking by the 2-axis actuator AC1 arranged in its periphery.

The reflected light flux modulated by the information pit on the information recording surface RL1 is, after it transmits again the objective optical system OBJ, aperture limiting element AP, second polarizing beam splitter BS2, beam expander EXP, collimator lens COL, reflected by the first polarizing beam splitter BS1, and light flux-divided by the sensor lens SEN, and converted into the converging light flux, and converged on the light receiving surface of the light detector PD. Then, when the output signal of the light detector PD is used, the information recorded in the high density optical disk can be read.

Further, when the recording/reproducing of the information is conducted on DVD, the negative lens E1 is moved by the 1-axis actuator AC2 in such a manner that the distance between the negative lens E1 and the positive lens E2 of the beam expander EXP is larger than a case where the recording/reproducing of the information is conducted on the high density optical disk, so that the second light flux is projected from the beam expander EXP under the condition of the parallel light flux. After that, as its light path is drawn by a dotted line in Fig. 9, the red semiconductor laser LD2 is light emitted. When the divergent light flux projected from the red semiconductor laser LD2, when it transmits the beam shaping element SH, after its sectional shape is shaped from an ellipse to a circle, transmits the first polarizing beam splitter BS1, converted into the weak divergent light flux by the collimator lens COL, converted into the parallel light flux by the beam expander EXP, and after transmitting the second polarizing beam splitter BS2, the aperture limiting element AP, it becomes a spot formed on the information recording surface RL2 through the second protective layer PL2 by the objective optical system OBJ. The objective optical system OBJ conducts the focusing or tracking by the 2-axis actuator AC1 arranged in its periphery.

The reflected light flux modulated by the information pit on the information recording surface RL2 is, after it transmits again the objective optical system OBJ, aperture limiting element AP, second polarizing beam splitter BS2, beam expander EXP, collimator lens COL, reflected by the first polarizing beam splitter BS1, and light flux-divided by the sensor lens SEN, and converted into the converging light flux, and converged on the light receiving surface of the light detector PD. Then, when the output signal of the light detector PD is used, the information recorded in DVD can be read.

Further, when the recording/reproducing of the information is conducted on CD, as its light path is drawn by the two-dotted chain line in Fig. 9, the module MD1 for CD is actuated and the infrared semiconductor laser LD3 is light emitted. The divergent light flux projected from the infrared semiconductor laser LD3 is, after reflected by the second polarizing beam splitter BS2, the light flux diameter is regulated by the aperture limiting element AP, and becomes a spot formed on the information recording surface RL3 through the third protective layer PL3 by the objective optical system OBJ. The objective optical system OBJ conducts the focusing or tracking by the 2-axis actuator AC1 arranged in its periphery.

The reflected light flux modulated by the information pit on the information recording surface RL3 is, after it transmits again the objective optical system OBJ, aperture limiting element AP, reflected by the second polarizing beam splitter BS2, and is converged on the light receiving surface of the light detector PD3 of the module MD1 for CD. Then, when the output signal of the light detector PD3 is used, the information recorded in CD can be read.

Because the structure or function of the objective optical system OBJ is the same as the objective optical system OBJ in the first embodiment, the detailed description is omitted herein.

Further, because the structure or function of the aperture limiting element AP is the same as the aperture limiting element AP in the first embodiment, the detailed description is omitted herein.

Further, because detection of the spherical aberration by the sensor lens SEN or the light detector PD is the same as the detection of the spherical aberration in the third embodiment, the detailed description is omitted herein.

In the present embodiment, on the optical function surface of the collimator lens COL, the diffractive structure HOE whose structure is the same as the diffractive structure HOE of the objective optical system OBJ, is formed, and the collimator lens COL passes the first flux as 0-order diffraction light, that is, passes without practically giving the phase difference to it, and projects the second light flux as the 1st-order diffraction light.

In the present embodiment, a sign of the temperature characteristic of the objective optical system OBJ to the first light flux and a sign of the temperature characteristic of the objective optical system OBJ to the second light flux are designed so that they are different from each other. Then, the correction of the temperature characteristic to the first light flux is conducted by using the divergence change of the projecting light from the collimator lens following the temperature change. Herein, from the reason that the sign of the temperature characteristic to the second light flux is reversal to the sign of the temperature characteristic to the first light flux, because the temperature characteristic to the second light flux is deteriorated by the divergence change of the projecting light from the collimator lens COL following the temperature change, the deterioration of the temperature characteristic to the second light flux is corrected by using the diffractive structure HOE2 designed so that the diffraction action is given only to the second light flux.

Further, the negative lens E1 of the beam expander EXP is structured so that its position can be sifted in the optical axis direction by the 1-axis actuator AC2, as described above, the chromatic aberration between the first wavelength $\lambda1$ and the second wavelength $\lambda2$ is absorbed, and also the light flux of any wavelength can be projected from the beam expander EXP under the condition of the parallel light flux. Further, when the negative lens E1 is shifted in the optical axis direction at the time of the recording/reproducing of the information for the high density optical disk HD, because the spherical aberration of the spot formed on the information recording surface RL1 of the high density optical disk HD can be corrected, a good recording/reproducing characteristic can be maintained always for the high density optical disk HD.

The causes of the generation of the spherical aberration corrected by the position adjustment of the negative lens E1 are, for example, the wavelength dispersion due to the manufacturing error of the blue violet semiconductor laser LD1, refractive index change or refractive index distribution of the objective optical system OBJ following the temperature change, focus jump between layers at the time of recording/reproducing for the multi-layer disk such as 2-layer disk, 4-layer disk, thickness dispersion or thickness distribution due to the manufacturing error of the protective layer PL1.

In the above description, a case where the spherical aberration of the spot formed on the information recording surface RL1 of the high density optical disk is corrected, is described, however, the spherical aberration of the spot formed on the information recording surface RL2 of DVD may also be corrected by the position adjustment of the negative lens E1.

Further, when the negative lens E1 is driven in the direction perpendicular to the optical axis in timed relationship with the tracking of the objective optical system OBJ by the 2-axis actuator, a structure by which the tracking characteristic of the objective optical system OBJ to CD is made a good one, may also be applied.

(The fifth embodiment)

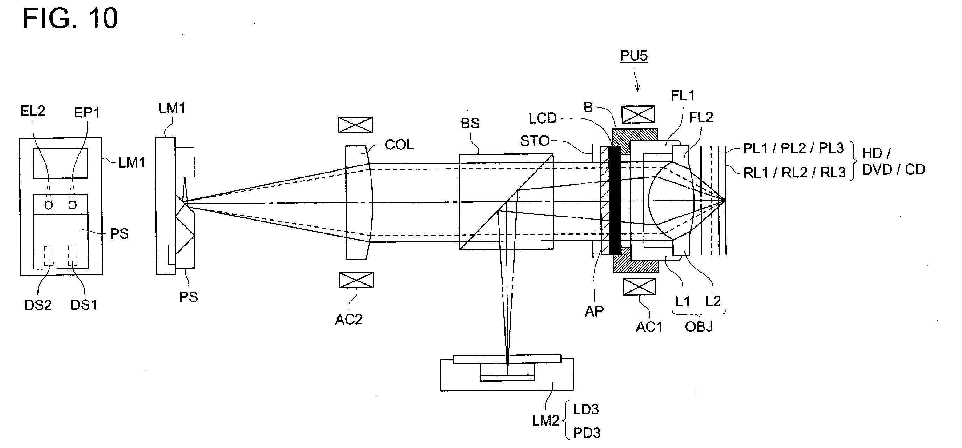

Fig. 10 is a view generally showing the structure of the fifth optical pick-up apparatus PU5 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength $\lambda1 = 408$ nm, the thickness t1 of the first protective layer PL1 t1 = 0.0875 mm, numerical aperture NA1 = 0.85, the optical specification of DVD is, the second wavelength $\lambda2 = 658$ nm, the thickness t2 of the second protective layer PL2 t2 = 0.6 mm, numerical aperture NA2 = 0.67, and the optical specification of CD is, the third wavelength $\lambda3 = 785$ nm, the thickness t3 of the third protective layer PL3 t3 = 1.2 mm, numerical aperture NA3 = 0.45.

Recording densities ($\rho1 - \rho3$) of the first optical disk - the third optical disk are $\rho3 < \rho2 < \rho1$, and magnifications (the first magnification M1 - the third magnification M3) of the objective optical system when the recording and/or reproducing of the information is conducted for the first optical disk - the third optical disk, are M1 = M2 =0, -0.12 < M3 < 0. However, a combination of the wavelength, thickness of protective layer, numerical aperture, recording density and magnification, is not limited to this.

The optical pick-up apparatus PU5 comprises of: the first light emitting point EP1 (the first light source) which is light emitted when the recording/reproducing of the information is conducted on the high density optical disk HD, and which projects the laser light flux (the first light flux)of 408 nm; the second light emitting point EP2 (the second light source) which is light emitted when the recording/reproducing of the information is conducted on DVD, and which projects the laser light flux (the second light flux)of 658 nm; the laser module LM1 for the high density optical disk HD/ DVD consisting of the first light detecting section DS1 for light receiving the reflected light flux from the information recording surface RL1 of the high density optical disk HD, the second light detecting section DS2 for light receiving the reflected light flux from the information recording surface RL2 of DVD, and the prism PS; the laser module LM2 for CD into which the infrared semiconductor laser LD3 (the third light source) which is light emitted when the recording/ reproducing of the information is conducted on CD, and which projects the laser light flux (the third light flux)of 785 nm, and the light detector PD3 are integrated; the objective optical system OBJ consisting of the aberration correcting element L1 in which the diffractive structure as the phase structure is formed on its optical surface, and the light converging element L2 both surfaces of which are aspherical surfaces, having a function by which the laser light fluxes transmitted this aberration correcting element L1 are light-converged on the information recording surfaces RL1, RL2, RL3; aperture limiting element AP; 2-axis actuator AC1; 1-axis actuator AC2; stop STO corresponding to the numerical aperture NA1 of the high density optical disk HD; polarizing beam splitter BS; liquid crystal phase-controlling element LCD (the first spherical aberration correcting element); and collimator lens COL (the second spherical aberration correcting element).

In the optical pick-up apparatus PU5, when the recording/reproducing of the information is conducted on the high density optical disk HD, the laser module LM1 for the high density optical disk HD/DVD is light emitted. When the divergent light flux projected from the first light emitting point EP1 is, as its light path is drawn by the solid line in Fig. 10, reflected by the prism PS, and after it is made into the parallel light flux via the collimator lens COL, transmits the polarizing beam splitter BS, the light flux diameter is regulated by the stop STO, transmits the aperture limiting element AP, and becomes a spot formed on the information recording surface RL1 through the first protective layer PL1 by the objective optical system OBJ. The objective optical system OBJ conducts the focusing or tracking by the 2-axis actuator AC1 arranged in its periphery. The reflected light flux modulated by the information pit on the information recording surface RL1 transmits again the objective optical system OBJ, aperture limiting element AP, polarizing beam splitter BS, and after it is made into the converging light flux by the collimator lens COL, it is reflected 2 times in the prism PS, and is light-converged on the light receiving section DS1. Then, when the output signal of the light receiving section DS1 is used, the information recorded in the high density optical disk HD can be read.

Further, when the recording/reproducing of the information is conducted on DVD, the collimator lens COL is moved by the 1-axis actuator AC2 in such a manner that the distance between the objective optical system and the collimator lens COL is smaller than a case where the recording/reproducing of the information is conducted on the high density optical disk HD, so that the second light flux is projected from the collimator lens COL under the condition of the parallel light flux. After the laser module LM1 for the first high density optical disk HD/DVD is actuated and the second light emitting point EP2 is light emitted. When the divergent light flux projected from the second light emitting point EP2, as its light path is drawn by a dotted line in Fig. 10, is reflected by the prism PS, and after it is made into the parallel light flux via the collimator lens COL, transmits the polarizing beam splitter BS, the aperture limiting element AP, it becomes a spot formed on the information recording surface RL2 through the second protective layer PL2 by the objective optical system OBJ. The objective optical system OBJ conducts the focusing or tracking by the 2-axis actuator AC1 arranged in its periphery. The reflected light flux modulated by the information pit on the information recording surface RL2 is, after it transmits again the objective optical system OBJ, aperture limiting element AP, polarizing beam splitter BS, and converted into the converging light flux by the collimator lens COL, reflected two times in the prism PS, and light-converged on the light receiving section DS2. Then, when the output signal of the light receiving section DS2 is used, the information recorded in DVD can be read.

Further, when the recording/reproducing of the information is conducted on CD, initially, the liquid crystal phase-controlling element LCD is actuated so that the spherical aberration due to the difference of thickness between the first protective layer PL1 and the third protective layer PL3 remained when the absolute value of the third magnification M3 is reduced, is corrected. After that, as its light path is drawn by the two-dotted chain line in Fig. 10, the module MD2 for CD is actuated and the infrared semiconductor laser LD3 is light emitted. The divergent light flux projected from the infrared semiconductor laser LD3 is, reflected by the polarizing beam splitter BS, the light flux diameter is regulated by the aperture limiting element AP, and becomes a spot formed on the information recording surface RL3 through the third protective layer PL3 by the objective optical system OBJ. The objective optical system OBJ conducts the focusing or tracking by the 2-axis actuator AC1 arranged in its periphery. The reflected light flux modulated by the information pit on the information recording surface RL3 is, after it transmits again the objective optical system OBJ, aperture limiting element AP, reflected by the polarizing beam splitter BS, and is converged on the light receiving surface of the light detector PD3 of the module MD2 for CD. Then, when the output signal of the light detector PD3 is used, the information recorded in CD can be read.

In the present embodiment, when a structure by which the spherical aberration remained when the absolute value of the third magnification M3 is reduced, is corrected by the CD-exclusive liquid crystal phase-controlling element LCD which conducts the phase control only for the third light flux, is applied, the coma generation by the tracking drive at the time of the recording/reproducing of the information on CD, is suppressed small, and irrespective of the structure in which the divergent light flux is incident on the objective optical system, a good tracking characteristic is obtained. Hereupon, because the structure of the liquid crystal phase-controlling element LCD of the present embodiment is the same as the liquid crystal phase-controlling element LCD in the third embodiment, the detailed description is omitted herein.

Further, in the present embodiment, as the second spherical aberration correcting element, the collimator lens COL structured so that its position can be shifted in the optical axis direction by the 1-axis actuator AC2, is used, however, because the structure or function is the same as the collimator lens COL in the first embodiment, the detailed description is omitted herein. Hereupon, as the second spherical aberration correcting element, other than the above-described collimator lens COL, the expander lens may also be used in the same manner as the fourth embodiment, or the liquid crystal phase-controlling element separated from the liquid crystal phase-controlling element LCD for CD in the third embodiment, may also be used.

Because the structure or function of the objective optical system OBJ is the same as the objective optical system OBJ in the first embodiment, the detailed description is omitted herein.

Further, because the structure or function of the aperture limiting element AP is the same as the aperture limiting element AP in the first embodiment, the detailed description is omitted herein.

In the above first to fifth embodiment, in the first light source to the third light source, the structure in which the first light source and the second light source are integrated, and the third light source is arranged as the separated light source, is applied, however, not limited to this, all of the first light source to the third light source may also be integrated, or a structure in which all of the first light source to the third light source are separately arranged, may also be applied.

Further, in the first to the fifth embodiments, the beam shaping element SH used for shaping the sectional shape of the first light flux projected from the first light source, from an ellipse to a circle, may also be a structure having the spherical or aspheric cylindrical surface having the curvature only in a short axis direction of the section of the first light flux, or a structure using triangle prism pair may also be applied. Further, when the diffractive structure is formed on the optical surface of the beam shaping element SH, a structure in which the astigmatism generation following the temperature change, or the astigmatism generation following the chromatic aberration between the first wavelength $\lambda 1$ and the second wavelength $\lambda 2$ is compensated, may also be applied.

Hereupon, in the first to the fifth embodiments, for the purpose to increase the signal detecting accuracy of the light detector PD for light-receiving the reflected light flux from the information recording surface RL1 of the high density optical disk HD, it is preferable that the transmission T for the first light flux of the objective optical system OBJ is not smaller than 60 % on the half-way, and not smaller than 70 % is more preferable. "Transmission T" herein referred, indicates a ratio of the intensity $I_1$ (which is the intensity in the airy disk) of the spot on the information recording surface RL1 to the intensity $I_0$ of the first light flux incident on the objective optical system OBJ through the stop corresponding to NA1.

Further, in the first to the fifth embodiments, the objective optical system OBJ is composed of 2 plastic lenses of the aberration correcting element L1 and the light converging element L2, however, the objective optical system OBJ may also be composed of the aberration correcting element L1 which is the plastic lens, and the light converging element L2 which is the glass lens.

Further, in the first to the fifth embodiments, the objective optical system OBJ is 2-group composition, however, it may also be composed of lens groups not smaller than 3, or it may also be a 1-group composition composed of only the light converging element.

Further, in the first to the fifth embodiments, as the optical specification of the high density optical disk HD, the following is applied that the thickness t1 of the first protective layer is about 0.1 mm, numerical aperture NA1 is 0.85, however, other than the optical disk (for example, blu-ray disk) of such a specification, the optical pick-up apparatus PU1 to PU4 can be applied also for the optical disk (for example, HD, DVD) in which the thickness t1 of the first protective layer is about 0.6 mm, numerical aperture NA1 is 0.65 to 0.67.

Further, in the objective optical system OBJ of the first to the fifth embodiment, as the phase structure, as typically shown in Fig. 3, the structure forming the diffractive structure HOE which is a structure in which a plurality of ring-shaped zones inside of which the step structures are formed, are arranged around the optical axis, is used, however, it is not limited to this, as typically shown in Fig. 1, the diffractive structure DOE structured by a plurality of ring-shaped zones whose sectional shape including the optical axis is saw-toothed shape, may also be formed, as typically shown in Fig. 2, the diffractive structure structured by a plurality of ring-shaped zones whose sectional shape including the optical axis is a step shape, may also be formed, or as typically shown in Fig. 4, the optical path difference addition structure may also be formed.

Hereupon, although the drawing is neglected, when the optical pick-up apparatus shown in the above first to the fifth embodiment, the rotation drive apparatus to rotatably hold the optical disk, the control apparatus to control the drive of each kind of these apparatus are mounted, an optical information recording reproducing apparatus by which at least one of the recording of the optical information for the optical disk, and the reproducing of information recorded in the optical disk, can be conducted, can be obtained.

(The sixth embodiment)

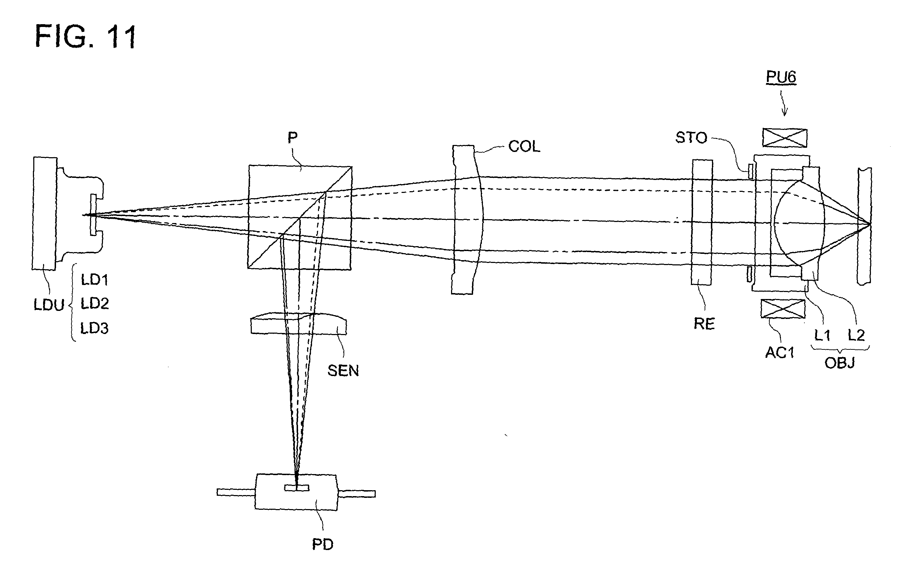

Fig. 11 is a view generally showing the structure of the sixth optical pick-up apparatus PU6 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength $\lambda 1$ = 408 nm, the thickness t1 of the first protective layer PL1 t1 = 0.0875 mm, numerical aperture NA1 = 0.85, the optical specification of DVD is, the second wavelength $\lambda 2$ = 658 nm, the thickness t2 of the second protective layer PL2 t2 = 0.6 mm, numerical aperture NA2 = 0.67, and the optical specification of CD is, the third wavelength $\lambda 3$ = 785 nm, the thickness t3 of the third protective layer PL3 t3 = 1.2 mm, numerical aperture NA3 = 0.45.

Recording densities ($\rho 1$ - $\rho 3$) of the first optical disk - the third optical disk are $\rho 3 < \rho 2 < \rho 1$, and magnifications (the first magnification M1 - the third magnification M3) of the objective optical system when the recording and/or reproducing of the information is conducted for the first optical disk - the third optical disk, are M1 = 0, -0.02 < M2 <0.0, -0.03 < M3 < -0.0. That is, in the objective optical system OBJ in the present embodiment, a structure on which the second light flux and the third light flux are incident under the condition of a loose divergent light flux, is applied. However, a combination of the wavelength, thickness of protective layer, numerical aperture, recording density and magnification, is not limited to this.

The optical pick-up apparatus PU6 comprises of: the light source unit LDU into which the blue violet semiconductor laser LD1 which is light emitted when the recording/reproducing of the information is conducted on the high density optical disk HD, and which projects the laser light flux (the first light flux) of 408 nm, the red semiconductor laser LD2 which is light emitted when the recording/reproducing of the information is conducted on DVD, and which projects the laser light flux (the second light flux)of 658 nm, and the infrared semiconductor laser LD3 which is light emitted when the recording/reproducing of the information is conducted on CD, and which projects the laser light flux (the third light flux)of 785 nm, are integrated; light detector PD used for all of the high density optical disk HD, DVD and CD; objective optical system OBJ consisting of the aberration correcting element L1 in which the diffractive structure as the phase structure is formed on its optical surface, and the light converging element L2 both surfaces of which are aspherical surfaces, having a function by which the laser light fluxes transmitted this aberration correcting element L1 are light-converged on the information recording surfaces RL1, RL2, RL3; 2-axis actuator AC1; stop STO corresponding to the numerical aperture NA1 of the high density optical disk HD; polarizing prism P; collimator lens COL; and sensor lens SEN for diving the reflected light fluxes from the information recording surfaces RL1, RL2 and RL3.

In the optical pick-up apparatus PU6, when the recording/reproducing of the information is conducted on the high density optical disk HD, as its light path is drawn by the solid line in Fig. 11, the blue violet semiconductor laser LD1 is light emitted. When the divergent light flux projected from the blue violet semiconductor laser LD1 transmits the polarizing prism P, and is converted into the parallel light flux by the collimator lens COL, after transmits a 1/4 wavelength plate RE, the light flux diameter is regulated by the stop STO, and becomes a spot formed on the information recording surface RL1 through the first protective layer PL1 by the objective optical system OBJ. The objective optical system OBJ conducts the focusing or tracking by the 2-axis actuator AC1 arranged in its periphery.

The reflected light flux modulated by the information pit on the information recording surface RL1 is, after transmits again the objective optical system OBJ, 1/4 wavelength plate RE, collimator lens COL, reflected by the polarizing prism P, light flux-divided by the sensor lens SEN, and converted into converging light flux, and is converged on the light receiving surface of the light detector PD. Then, when the output signal of the light detector PD is used, the information recorded in the high density optical disk HD can be read.

Further, when the recording/reproducing of the information is conducted on DVD, as its light path is drawn by a doted line in Fig. 8, the red semiconductor laser LD2 is light emitted. When the divergent light flux projected from the red semiconductor laser LD2 transmits the polarizing prism P, and is made into a loose divergent light flux in the collimator lens COL, and after transmits the 1/4 wavelength plate RE, the light flux diameter is regulated by the stop STO, and it becomes a spot formed on the information recording surface RL2 through the second protective layer PL2 by the objective optical system OBJ. The objective optical system OBJ conducts the focusing or tracking by the 2-axis actuator AC1 arranged in its periphery.

The reflected light flux modulated by the information pit on the information recording surface RL1 is, after it transmits again the objective optical system OBJ, 1/4 wavelength plate RE, collimator lens COL, reflected by the polarizing prism P, and light flux-divided by the sensor lens SEN, and converted into the converging light flux, and converged on the light receiving surface of the light detector PD. Then, when the output signal of the light detector PD is used, the information recorded in DVD can be read.

Further, when the recording/reproducing of the information is conducted on CD, as its light path is drawn by the two-dotted chain line in Fig. 11, the infrared semiconductor laser LD3 is light emitted. The divergent light flux projected from the infrared semiconductor laser LD3, transmits the polarizing prism P, is made into a loose divergent light flux in the collimator lens COL, and after transmits the 1/4 wavelength plate RE, becomes a spot formed on the information recording surface RL3 through the third protective layer PL3 by the objective optical system OBJ. The objective optical system OBJ conducts the focusing or tracking by the 2-axis actuator AC1 arranged in its periphery. The reflected light flux modulated by the information pit on the information recording surface RL1 is, after it transmits again the objective optical system OBJ, 1/4 wavelength plate RE, collimator lens COL, reflected by the polarizing prism P, and is light flux-divided by the sensor lens SEN, and converted into a converging light flux, and converged on the light receiving surface of the light detector PD. Then, when the output signal of the light detector PD is used, the information recorded in CD can be read.

Because the function or structure of the objective optical system OBJ is the same as the objective optical system OBJ in the first embodiment, excepting that the second light flux and the third light flux are incident under the condition of a loose divergent light flux, the detailed description is omitted herein.

As the present embodiment, in the case where 3-laser 1- package structure into which all of the first light source, the second light source and the third light source are integrated is used, and a structure in which the collimator lens COL for making the light flux from the first light source incident on the objective optical system as the parallel light flux, is provided in the common optical path of the first light flux to the third light flux, is applied, temporarily, when the first magnification M1 to the third magnification M3 of the first light flux to the third light flux are M1 = M2 = M3 = 0, because it becomes necessary that, by the chromatic aberration of the collimator lens COL, the distance from the light source to the collimator COL is changed corresponding to the respective light fluxes, for example, it is necessary that the collimator lens COL, or the beam expander is provided between the collimator lens COL and the objective lens OBJ, the movable lens in the beam expander is moved in the parallel direction to the optical axis and corresponds to the condition, further, it becomes necessary that the chromatic aberration of the collimator lens COL is corrected by using the phase structure such as the diffraction provided in the collimator lens COL. Hereby, the lens drive means becomes necessary, and a problem that results in the hindrance for the simplification of the apparatus or size reduction, or a problem that the metallic mold making becomes difficult when the lens drive means is added, or the phase structure is processed on the lens, resulting in the hindrance in the cost reduction, is generated.

Accordingly, when the structure of the present embodiment like that the second magnification satisfies the relation -0.02 < M2 < 0, and the third magnification satisfies the relation -0.03 < M3 < 0 is used, it is preferable because the collimator lens which does not have the phase structure and in which the processing is easy, can be used without moving it, and the simplification of the apparatus, size reduction, and cost reduction can be attained.

(The seventh embodiment)

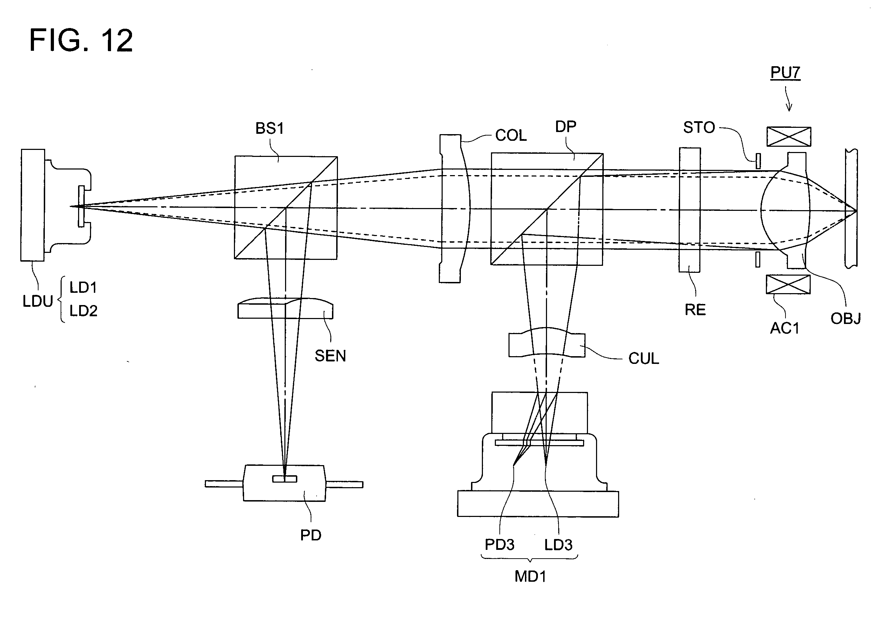

Fig. 12 is a view generally showing the structure of the seventh optical pick-up apparatus PU7 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength $\lambda 1$ = 408 nm, the thickness t1 of the first protective layer PL1 t1 = 0.0875 mm, numerical aperture NA1 = 0.85, the optical specification of DVD is, the second wavelength $\lambda 2$ = 658 nm, the thickness t2 of the second protective layer PL2 t2 = 0.6 mm, numerical aperture NA2 = 0.67, and the optical specification of CD is, the third wavelength $\lambda 3$ = 785 nm, the thickness t3 of the third protective layer PL3 t3 = 1.2 mm, numerical aperture NA3 = 0.45.

Recording densities ($\rho 1$ - $\rho 3$) of the first optical disk - the third optical disk are $\rho 3 < \rho 2 < \rho 1$, and magnifications (the first magnification M1 - the third magnification M3) of the objective optical system when the recording and/or reproducing of the information is conducted for the first optical disk - the third optical disk, are M1 = 0, -0.02 < M2 <0.0, -0.17 < M3 < -0.025. That is, in the objective optical system OBJ in the present embodiment, a structure on which the second light flux is incident under the condition of a loose divergent light flux, is applied. However, a combination of the wavelength, thickness of protective layer, numerical aperture, recording density and magnification, is not limited to this.

The optical pick-up apparatus PU7 comprises of: the light source unit LDU into which the blue violet semiconductor laser LD1 which is light emitted when the recording/reproducing of the information is conducted on the high density optical disk HD, and which projects the laser light flux (the first light flux) of 408 nm, and the red semiconductor laser LD2 which is light emitted when the recording/reproducing of the information is conducted on DVD, and which projects the laser light flux (the second light flux)of 658 nm, are integrated; light detector PD commonly used for both of the high density optical disk HD and DVD; module MD1 for CD into which the infrared semiconductor laser LD3 which is light emitted when the recording/reproducing of the information is conducted on CD, and which projects the laser light flux (the third light flux)of 785 nm, and the light detector PD3 are integrated; objective optical system OBJ which has a function to light-converge the laser light flux on the information recording surfaces RL1, RL2, RL3 and both surfaces of which are aspherical surfaces; 2-axis actuator AC1; stop STO corresponding to the numerical aperture NA1 of the high density optical disk HD; first polarizing beam splitter BS1; dichroic prism DP; collimator lens COL; and sensor lens SEN for diving the reflected light fluxes from the information recording surfaces RL1 and RL2.

In the optical pick-up apparatus PU7, when the recording/reproducing of the information is conducted on the high density optical disk HD, as its light path is drawn by the solid line in Fig. 12, the blue violet semiconductor laser LD1 is light emitted. When the divergent light flux projected from the blue violet semiconductor laser LD1 transmits the first polarizing beam splitter BS1, and is converted into the parallel light flux by the collimator lens COL, after transmits the dichroic prism DP, the light flux diameter is regulated by the stop STO, transmits the 1/4 wavelength plate RE and becomes a spot formed on the information recording surface RL1 through the first protective layer PL1 by the objective optical system OBJ. The objective optical system OBJ conducts the focusing or tracking by the 2-axis actuator AC1 arranged in its periphery.

The reflected light flux modulated by the information pit on the information recording surface RL1 is, after transmits again the objective optical system OBJ, 1/4 wavelength plate RE, dichroic prism DP, collimator lens COL, reflected by the first polarizing beam splitter BS1, light flux-divided by the sensor lens SEN, and converted into converging light flux, and is converged on the light receiving surface of the light detector PD. Then, when the output signal of the light detector PD is used, the information recorded in the high density optical disk HD can be read.

Further, when the recording/reproducing of the information is conducted on DVD, as its light path is drawn by a doted line in Fig. 12, the red semiconductor laser LD2 is light emitted. When the divergent light flux projected from the red semiconductor laser LD2 transmits the first polarizing beam splitter BS1, and is made into a loose divergent light flux in the collimator lens COL, and after transmits the dichroic prism DP, the light flux diameter is regulated by the stop STO, transmits the 1/4 wavelength plate RE, and it becomes a spot formed on the information recording surface RL2 through the second protective layer PL2 by the objective optical system OBJ. The objective optical system OBJ conducts the focusing or tracking by the 2-axis actuator AC1 arranged in its periphery.

The reflected light flux modulated by the information pit on the information recording surface RL2 is, after it transmits again the objective optical system OBJ, 1/4 wavelength plate RE, dichroic prism DP, collimator lens COL, reflected by the first polarizing beam splitter BS1, and light flux-divided by the sensor lens SEN, and converted into the converging light flux, and converged on the light receiving surface of the light detector PD. Then, when the output signal of the light detector PD is used, the information recorded in DVD can be read.

Further, when the recording/reproducing of the information is conducted on CD, as its light path is drawn by the two-dotted chain line in Fig. 12, the module MD1 for CD is actuated and the infrared semiconductor laser LD3 is light emitted. The divergent light flux projected from the infrared semiconductor laser LD3, after the divergent angle is converted by the coupling lens CUL, and after the light flux is reflected by the dichroic prism DP, transmits the 1/4 wavelength plate RE, and becomes a spot formed on the information recording surface RL3 through the third protective layer PL3 by the objective optical system OBJ. The objective optical system OBJ conducts the focusing or tracking by the 2-axis actuator AC1 arranged in its periphery.

The reflected light flux modulated by the information pit on the information recording surface RL3 is, after it transmits again the objective optical system OBJ, 1/4 wavelength plate RE, reflected by the dichroic prism DP, and the divergent angle is converted by the coupling lens CUL, its rack is changed when it transmits the hologram of the module MD1 for CD, and converged on the light receiving surface of the light detector PD3. Then, when the output signal of the light detector PD is used, the information recorded in CD can be read.

Because the function or structure of the objective optical system OBJ is the same as the objective optical system OBJ in the first embodiment excepting that the second light flux is incident under the condition of a loose divergent light flux, the detailed description is omitted herein.

Further, because also the function or structure of the coupling lens CUL is the same as the coupling lens CUL in the first embodiment, the detailed description is omitted herein.

As in the present embodiment, in the case where 2-laser 1-package structure into which the first light source and the second light source are integrated is used, and a structure in which the collimator lens COL for making the light flux from the first light source incident on the objective optical system OBJ as the parallel light flux, is provided in the common optical path of the first light flux and the second light flux, is applied, temporarily, when the first magnification M1 and the second magnification M2 of the first light flux and the second light flux are M1 = M2 = 0, because it becomes necessary that, by the chromatic aberration of the collimator lens COL, the distance from the light source to the collimator COL is changed corresponding to the respective light fluxes, for example, it is necessary that the collimator lens COL, or the beam expander is provided between the collimator lens COL and the objective lens OBJ, and the movable lens in the beam expander is moved in the parallel direction to the optical axis and corresponds to the condition, further, it becomes necessary that the chromatic aberration of the collimator lens COL is corrected by using the phase structure such as the diffraction provided in the collimator lens COL. Hereby, the lens drive means becomes necessary, and a problem that it results in the hindrance for the simplification of the apparatus or size reduction, or a problem that the metallic mold making becomes difficult when the lens drive means is added, or the phase structure is processed on the lens, resulting in the hindrance in the cost reduction, is generated.

Accordingly, when the structure of the present embodiment like that the second magnification satisfies the relation -0.02 < M2 < 0 is used, it is preferable because the collimator lens which does not have the phase structure and in which the processing is easy, can be used without moving it, and the simplification of the apparatus, size reduction, and cost reduction can be attained.

(The eighth embodiment)

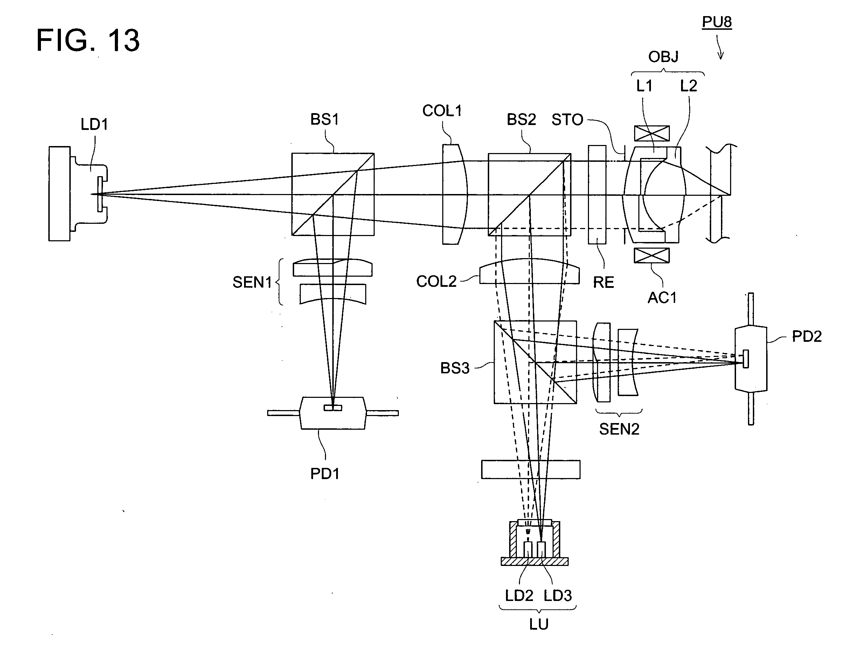

Fig. 13 is a view generally showing the structure of the seventh optical pick-up apparatus PU7 by which the recording/reproducing of the information can be adequately conducted by a simple structure also for any one of the high density optical disk HD (the first optical disk), DVD (the second optical disk) and CD (the third optical disk). The optical specification of the high density optical disk HD is, the first wavelength $\lambda1$ = 408 nm, the thickness t1 of the first protective layer PL1 t1 = 0.0875 mm, numerical aperture NA1 = 0.85, the optical specification of DVD is, the second wavelength $\lambda2$ = 658 nm, the thickness t2 of the second protective layer PL2 t2 = 0.6 mm, numerical aperture NA2 = 0.67, and the optical specification of CD is, the third wavelength $\lambda3$ = 785 nm, the thickness t3 of the third protective layer PL3 t3 = 1.2 mm, numerical aperture NA3 = 0.45.

Recording densities ($\rho1$ - $\rho3$) of the first optical disk - the third optical disk are $\rho3 < \rho2 < \rho1$, and magnifications (the first magnification M1 - the third magnification M3) of the objective optical system when the recording and/or reproducing of the information is conducted for the first optical disk - the third optical disk, are M1 = M2 = 0, -0.03 < M3 < -0.0. That is, in the objective optical system OBJ in the present embodiment, a structure on which the third light flux is incident under the condition of a loose divergent light flux, is applied. However, a combination of the wavelength, thickness of protective layer, numerical aperture, recording density and magnification, is not limited to this.

The optical pick-up apparatus PU7 comprises of: the light source unit LDU into which the blue violet semiconductor laser LD1 which is light emitted when the recording/reproducing of the information is conducted on the high density optical disk HD, and which projects the laser light flux (the first light flux) of 407 nm, the light detector PD1 for the first light flux, the red semiconductor laser LD2 which is light emitted when the recording/reproducing of the information is conducted on DVD, and which projects the laser light flux (the second light flux)of 655 nm, and the infrared semiconductor laser LD3 which is light emitted when the recording/reproducing of the information is conducted on CD, and which projects the laser light flux (the third light flux)of 785 nm, are integrated; light detector PD2 used for both of the second light flux and the third light flux; first collimator lens which is transmitted only by the first light flux; second collimator lens COL2 which is transmitted by the second light flux and the third light flux; objective optical system OBJ consisting of the aberration correcting element L1 in which the diffractive structure as the phase structure is formed on its optical surface, and the light converging element L2 both surfaces of which are aspherical surfaces, having a function by which the laser light fluxes transmitted this aberration correcting element L1 are light-converged on the information recording surfaces RL1, RL2, RL3; first beam splitter BS1; second beam splitter BS2; third beam splitter BS3; stop STO; and sensor lenses SEN1 and SEN2.

In the optical pick-up apparatus PU, when the recording/reproducing of the information is conducted on the high density optical disk HD, as its light path is drawn by the solid line in Fig. 1, initially, the blue violet semiconductor laser LD1 is light emitted. When the divergent light flux projected from the blue violet semiconductor laser LD1 transmits the beam splitter BS1, and arrives at the first collimator lens COL1.

Then, when it transmits the first collimator lens COL1, the first light flux is converted into the parallel light flux, transmits the second beam splitter BS2 and the 1/4 wavelength plate RE, and arrives at the objective optical system OBJ, and becomes a spot formed on the information recording surface RL1 through the first protective layer PL1 by the objective optical system OBJ. The objective optical system OBJ conducts the focusing or tracking by the 2-axis actuator AC1 arranged in its periphery.

The reflected light flux modulated by the information pit on the information recording surface RL1, transmits again the objective optical system OBJ, 1/4 wavelength plate RE, second beam splitter BS2, first collimator lens COL1, and is branched by the first beam splitter BS1, and the astigmatism is given by the sensor lens SEN1, and is converged on the light receiving surface of the light detector PD1. Then, when the output signal of the light detector PD1 is used, the information recorded in the high density optical disk HD can be read.

Further, when the recording/reproducing of the information is conducted on DVD, as its light path is drawn by a doted line in Fig. 13, initially, the red semiconductor laser LD2 is light emitted. When the divergent light flux projected from the red semiconductor laser LD2 transmits the third beam splitter BS3, and arrives at the second collimator lens COL2.

Then, when it transmits the second collimator lens COL2, it is converted into a parallel light flux, reflected by the second beam splitter BS2, transmits the 1/4 wavelength plate RE, and arrives at the objective optical system OBJ, and it becomes a spot formed on the information recording surface RL2 through the second protective layer PL2 by the objective optical system OBJ. The objective optical system OBJ conducts the focusing or tracking by the 2-axis actuator AC1 arranged in its periphery.

The reflected light flux modulated by the information pit on the information recording surface RL2, transmits again the objective optical system OBJ, 1/4 wavelength plate RE, after reflected by the second beam splitter BS2, transmits the collimator lens COL2, and is branched by the third beam splitter BS3, and is converged on the light receiving surface of the light detector PD2. Then, when the output signal of the light detector PD2 is used, the information recorded in DVD can be read.

Further, when the recording/reproducing of the information is conducted on CD, as its light path is drawn by the dotted line in Fig. 1, initially, the infrared semiconductor laser LD3 is light emitted. The divergent light flux projected from the infrared semiconductor laser LD3, transmits the third beam splitter BS3, and arrives at the second collimator lens COL2.

Then, when it transmits the second collimator lens COL2, it is converted into a loose divergent light flux, reflected by the second beam splitter BS2, transmits the 1/4 wavelength plate RE, arrives at the objective optical system OBJ, and becomes a spot formed on the information recording surface RL3 through the third protective layer PL3 by the objective optical system OBJ. The objective optical system OBJ conducts the focusing or tracking by the 2-axis actuator AC1 arranged in its periphery.

The reflected light flux modulated by the information pit on the information recording surface RL3 transmits again the objective optical system OBJ, 1/4 wavelength plate RE, after reflected by the second beam splitter BS2, transmits the collimator COL2, branched by the third beam splitter BS3, and converged on the light receiving surface of the light detector PD2. Then, when the output signal of the light detector PD2 is used, the information recorded in CD can be read.

As in the present embodiment, in the case where 2-laser 1-package structure into which the second light source and the third light source are integrated is used, and a structure in which the second collimator lens COL2 for making the light flux from the second light source into the parallel light flux and incident on the objective optical system OBJ, is provided in the common optical path of the second light flux and the third light flux, is applied, temporarily, when the second magnification M2 and the third magnification M3 of the second light flux and the third light flux are made M2 = M3 = 0, because it becomes necessary that, by the chromatic aberration of the second collimator lens COL2, the distance from the light source to the second collimator COL2 is changed corresponding to the respective light fluxes, for example, it is necessary that the second collimator lens COL2, or the beam expander is provided between the second collimator lens COL2 and the objective lens OBJ, and the movable lens in the beam expander is moved in the parallel direction to the optical axis and corresponds to the condition, further, it becomes necessary that the chromatic aberration of the second collimator lens COL2 is corrected by using the phase structure such as the diffraction provided in the second collimator lens COL2. Hereby, the lens drive means becomes necessary, and a problem that it results in the hindrance for the simplification of the apparatus or size reduction, or a problem that the metallic mold making becomes difficult when the lens drive means is added, or the phase structure is processed on the lens, resulting in the hindrance in the cost reduction, is generated.

Accordingly, when the structure of the present embodiment like that the third magnification satisfies the relation -0.03 < M3 < 0 is used, it is preferable because the collimator lens which does not have the phase structure and in which the processing is easy, can be used without moving it, and the simplification of the apparatus, size reduction, and cost reduction can be attained.

Hereupon, also in the optical pick-up apparatus PU6 to PU8 of the sixth to the eighth embodiments, in the same manner as in the first to the fourth embodiments, a structure in which the beam shaping optical element is arranged between the first light source and the collimator lens COL, may be applied. Hereby, the light using efficiency of the light from the light source can be improved, and the technical advantage offering of the pick-up can be attained. The beam shaping element is composed of a single lens of cylindrical surface shape, having the curvature, for example, only in one direction, or an element which is composed of the anamorphotic surface whose radius of curvatures are different in 2 perpendicular directions, may also be allowed.

When the beam shaping element is arranged in the optical path of the wavelength-integrated laser such as 3- laser 1-package, or 2-laser 1-package as in the sixth to the eighth embodiments, the positional relationship of 2 or 3 laser light emitting points and the beam shaping element is, for the beam shaping element composed of, for example, the cylindrical surface, it is preferable that the direction in which the surface of the beam shaping element does not have the curvature, and the alignment direction of 2 or 3 laser light emitting points are coincident to each other, for example, for the beam shaping element composed of, for example, the anmorphotic surface, it is preferable that the direction in which the curvature of the surface of the beam shaping element is increased, and the alignment direction of the 2 or 3 laser light emitting points are coincident to each other. When the positional relationship of the beam shaping element and the 2 or 3 laser light emitting points is made as described above, the influence of the aberration by the beam shaping element can be erased, or decreased. However, depending on the relationship between the alignment of the laser light emitting points and the long axis direction of the elliptic light flux of the semiconductor laser, it is not limited to the above description, and it is necessary that the direction of beam shaping by the beam shaping element and the direction of the elliptic light flux of the semiconductor laser are made the desirable direction, and the apparatus corresponds to a plurality of light sources.

Further, when the beam shaping element is arranged in the optical path of the wavelength-integrated laser such as 3-laser 1-package, or 2-laser 1-package as in the sixth to the eighth embodiments, because the wavelengths of each of lasers are different, a problem that the distance from the light source to the beam shaping element which is desirable for the wave-front aberration correction, is different in respective wavelengths, is generated. As a means to solve this problem, there is a method by which, for example, by using the actuator to move the beam shaping element in the optical axis direction, the beam shaping element is moved, and the distance from the light source to the beam shaping element is changed for each of lasers. Further, there is also a method by which, when the beam shaping element is arranged in an inclined manner to the optical axis in the same direction as the alignment direction of each laser light emitting point in 3-laser 1-package or 2-laser 1-package, the distance from each laser light emitting point to the beam shaping element is changed, or a method in which the apparatus corresponds to the condition by making the beam shaping element as the wedge shape.

Further, when the wavelength-integrated laser such as 3-laser 1-package or 2-laser 1-package as in the sixth to the eighth embodiments, is used as the light source, because there is a possibility that, when any one of the light emitting point is arranged on the optical axis, a trouble such as the generation of the coma due to a case where the light flux projected from the other light emitting point becomes the off-axis light, is generated, it is preferable that a light path composition element for making coincident the light path of each light flux, or a light path length correcting element for correcting the light path difference generated between each of light fluxes is arranged.

As the optical path composition element, for example, an element by which the optical path of each light flux is changed by using a prism or diffraction action is listed, and as the optical path length correcting element, for example, an element whose optical axis is arranged under an inclined condition to the optical axis of the objective lens OBJ is listed.

Further, also in the sixth to the eighth embodiments, a structure in which the aperture limit element AP, which is same as in the first - the fifth embodiments, is arranged, and by the 2-axis actuator AC1, the aperture limit element AP and the objective optical system OBJ are integrally tracking-driven, may also be applied.

**EXAMPLES**

Next, 4 examples (Example 1 - 4) of examples of the above optical pick-up apparatus will be described.

The aspheric surface in each example is, when a deformation amount from a flat surface tangent to a top of the surface is X (mm), height in the direction perpendicular to the optical axis is h (mm), radius of curvature is r (mm), expressed by the formula in which aspheric surface coefficients $A_{2i}$ in Table 1 - Table 4 are substituted into the following math-2. Where, $\kappa$ is a conical coefficient. [Math-2]

ASPHERIC SURFACE SHAPE FORMULA

$$X(h) = \frac{(h^2/R)}{1+\sqrt{1-(1+\kappa)(h/R)^2}} + \sum_{i=0}^{9} A_{2i}h^{2i}$$

Further, a superposition type diffractive structure (diffractive structue HOE) and the diffractive structure DOE in each example is expressed by the light path difference added to the transmission wave-front by these structures. Such a light path difference is expressed by the optical path difference function $\varphi_b$ (mm) defined by the following math-3 when $\lambda$ is the wavelength of the incident light flux, $\lambda_B$ is the manufactured wavelength, the height in the direction perpendicular to the optical axis is h (mm), $B_{2i}$ is the optical path difference function coefficient, and n is the diffraction order. (Math-3)

OPTICAL PATH DIFFERENCE FUNCTION

$$\phi(h) = \sum_{i=0}^{5} B_{2i}h^{2i}$$

In numeric data Tables of the Example 1 - 3 shown in the following, NA1, $f_1$, $f_{1c}$ are, respectively, the numerical aperture of the objective lens when the high density optical disk is used, focal distance of the objective lens, and focal distance of the collimator lens, and NA2, $f_2$, $f_{2c}$ are, respectively, the numerical aperture of the objective lens when DVD is used, focal distance of the objective lens, and focal distance of the collimator lens, and NA3, $f_3$, $f_{3c}$ are, respectively, the numerical aperture of the objective lens when CD is used, focal distance of the objective lens, and focal distance of the collimator lens.

Further, R (mm) is the radius of curvature, d (mm) is a lens interval, n is a refractive index of the lens to each wavelength ($\lambda$1 - $\lambda$3).

The numerical data of Example 1 is shown in Table 1.

(Table 1)

| Example | | | | | | | | |
|---|---|---|---|---|---|---|---|---|
| Collimator lens | | | | | | | | |
| Focal distance $f_{1c}$ = 21.7mm, $f_{2c}$ = 22.36 mm, $f_{3c}$ = 22.50 mm | | | | | | | | |
| Objective lens | | | | | | | | |
| Focal distance $f_1$ = 3.10 mm, $f_2$ = 3.19 mm, $f_3$ = 3.23 mm | | | | | | | | |
| Optical system magnification -1/7.00, -1/7.01, -1/6.97 | | | | | | | | |
| Numerical aperture NA1 = 0.65, NA2 = 0.65, NA3 = 0.50 | | | | | | | | |
| i-surface | Ri | di (407 nm) | ni (407 nm) | di (658 nm) | ni (658 nm) nm) | di (785 nm) | ni (785 nm) | note |
| 0 | | 20.657 | | 20.657 | | 20.657 | | |
| 1 | 124.05295 | 1.75 | 1.52994 | 1.75 | 1.51427 | 1.75 | 1.51108 | **1 |
| 2 | -12.61278 | 5.635 | 1.0 | 5.573 | 1.0 | 5.916 | 1.0 | *1 |
| 3 | ∞ | 0.00 | 1.0 | 0.00 | 1.0 | 0.00 | 1.0 | *2 |
| 4 | ∞ | 0.80 | 1.55981 | 0.80 | 1.54062 | 0.80 | 1.53724 | *3 **2 |
| 5 | ∞ | 0.10 | 1.0 | 0.10 | 1.0 | 0.10 | 1.0 | |
| 6 | 1.93657 | 1.73 | 1.55981 | 1.73 | 1.54062 | 1.73 | 1.53724 | *4 |
| 7 | -11.34980 | 1.735 | 1.0 | 1.797 | 1.0 | 1.454 | 1.0 | *5 |
| 8 | ∞ | 0.6 | 1.61869 | 0.6 | 1.577315 | 1.2 | 1.57063 | |
| 9 | ∞ | | | | | | | |

*di expresses the dislocation from the i-th surface to the (i+1)-th surface.
*1: aspheric surface
*2: stop
*3: diffraction surface
*4: aspheric surface · diffraction surface
*5: aspheric surface]
**1: collimator lens
**2: objective lens

Aspheric surface ·diffraction surface data

| The second surface Aspheric surface coefficient | |
|---|---|
| $\kappa$ | -1.0007E+00 |
| A4 | -1.7342E-05 |

| The fourth surface Coefficients of the optical path difference function (the fourth surface) | |
| --- | --- |
| B2 | -1.6302E+00 |
| B4 | -1.0103E-01 |
| B6 | 6.7517E-02 |
| B8 | -8.0932E-03 |

*step shape m1 =5, m1: division number d1 =2, d1: the wavelength difference at $\lambda 1$ per one step of the step shape. The phase difference is given only to $\lambda 2$ and it is diffracted. Because the phase difference is hardly generated in $\lambda 1$, $\lambda 3^-$, they are not diffracted.

| The sixth surface Aspheric surface coefficient | |
| --- | --- |
| $\kappa$ | -1.2732E+00 |
| A4 | 1.0740E-02 |
| A6 | 3.2020E-04 |
| A8 | 2.6844E-04 |
| A10 | -1.4918E-04 |
| A12 | 4.0856E-05 |
| A14 | -5.3878E-06 |

| Coefficients of the optical path difference function (the sixth surface) | |
| --- | --- |
| B2 | -4.8906E+00 |
| B4 | -3.9618E-01 |
| B6 | 2.0333E-01 |
| B8 | -2.5356E-02 |

*Saw-tooth shape
Diffraction order L = 3, M = N = 2

| The seventh surface Aspheric surface coefficient | |
| --- | --- |
| $\kappa$ | -1.8439E+00 |
| A4 | 9.4757E-03 |
| A6 | 9.3834E-04 |
| A8 | -9.8769E-04 |
| A10 | 1.6945E-04 |
| A12 | -1.1458E-05 |

Example 1 is an example which corresponds to the optical pick-apparatus PU6 shown in Fig. 11, and the optical surface (the second surface) on the optical disk side of the collimator lens, optical surface on the light source side (the sixth surface) and the optical surface on the optical disk side (the seventh surface) of the light converging element, are aspheric surfaces.

Further, the diffractive structure HOE is formed on the optical surface (the fourth surface) on the light source side of the aberration correcting element, and the diffractive structure DOE is formed on the optical surface (the sixth surface) on the light source side of the light converging element.

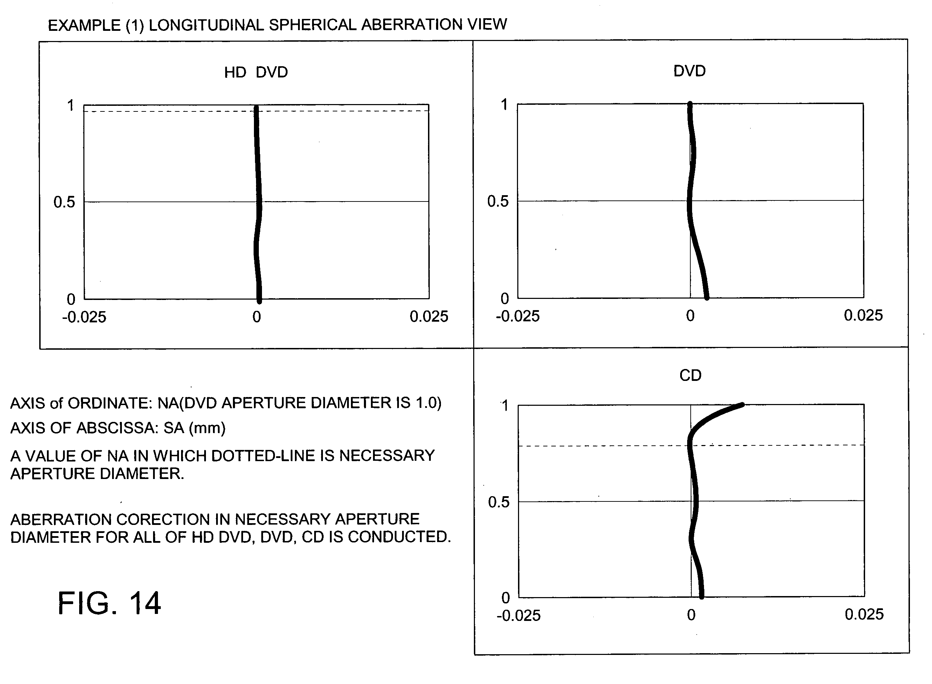

Fig. 14 is a longitudinal spherical aberration view of the present example, and it can be seen that, for any one of the high density optical disk HD/DVD/CD, in the necessary aperture diameter, the aberration is corrected in the degree of practically no-hindrance.

Numerical data of Example 2 is shown in Table 2.

(Table 2)

| Example | | | | | | | | |
|---|---|---|---|---|---|---|---|---|
| Objective lens | | | | | | | | |
| Focal distance   $f_1$ = 3.00 mm, $f_2$ = 3.08 mm, $f_3$ = 3.06 mm | | | | | | | | |
| Optical system magnification   0, -0.004, -0.039 | | | | | | | | |
| Numerical aperture   NA1 = 0.65, NA2 = 0.65, NA3 = 0.50 | | | | | | | | |
| i-surface | Ri | di (407 nm) | ni (407 nm) | di (658 nm) | ni (658 nm) | di (785 nm) | ni (785 nm) | note |
| 0 | | ∞ | | 800.000 | | 81.700 | | |
| 1 | ∞ | 0.00 | 1.0 | 0.00 | 1.0 | 0.00 | 1.0 0 | *2 |
| 2 | 1.93607 | 1.85 | 1.52439 | 1.85 | 1.50651 | 1.85 | 1.50324 | *3 |
| 3 | -8.34827 | 1.563 | 1.0 | 1.797 | 1.0 | 1.328 | 1.0 | *1 |
| 4 | ∞ | 0.6 | 1.61869 | 0.6 | 1.577315 | 1.2 | 1.57063 | |
| 5 | ∞ | | | | | | | |

*di expresses the dislocation from the i-th surface to the (i+1)-th surface.
*1: aspheric surface
*2: stop
*3: aspheric surface · diffraction surface

Aspheric surface ·diffraction surface data

| The second surface Aspheric surface coefficient | |
|---|---|
| κ | -3.7470E-01 |
| A4 | -1.2865E-03 |
| A6 | -1.5983E-03 |
| A8 | 3.9883E-04 |
| A10 | -7.7016E-05 |
| A12 | 4.4977E-06 |
| A14 | -1.6085E-06 |

| Coefficients of the optical path difference function | |
|---|---|
| B2 | -2.7014E+01 |
| B4 | -1.4987E+00 |
| B6 | -7.9045E-01 |
| B8 | 1.8463E-01 |
| B10 | -2.5031E-02 |

*Saw-tooth shape diffraction order
L = 3, M = N = 2

| The third surface Aspheric surface coefficient | |
|---|---|
| κ | -1.4341E+02 |

(continued)

| The third surface Aspheric surface coefficient | |
|---|---|
| A4 | -7.0354E-03 |
| A6 | 1.0117E-02 |
| A8 | -4.8860E-03 |
| A10 | 1.2161E-03 |
| A12 | -1.6031E-04 |
| A14 | 9.0452E-06 |

Example 2 is an example which corresponds to the optical pick-apparatus PU7 shown in Fig. 12, and the optical surface (the second surface) on the light source side and optical surface (the third surface)on the optical disk side of the objective lens, are aspheric surfaces. Further, the diffractive structure DOE is formed on the optical surface (the second surface) on the light source side of the objective lens.
The numerical data of Example 3 is shown in Table 3.

(Table 3)
Example
Focal distance of collimator lens for DVD/CD common use
$f_{2c}$ = 22.0 mm, $f_{3c}$ = 22.15 mm
Focal distance of objective lens
$f_1$ = 3.00 mm, $f_2$ = 3.08 mm, $f_3$ = 3.00 mm
Numerical aperture on the image surface side
NA1: 0.65, NA2 = 0.65, NA3 = 0.51

| i-surface | ri | di (407 nm) | ni (407 nm) | i-th surface | ri | di (655 nm) | ni (655 nm) | di (785 nm) | ni (785 nm) |
|---|---|---|---|---|---|---|---|---|---|
| 0 | | ∞ | | 0 | | 16.01 | | 16.01 | |
| 1 | ∞ | | | 1 | ∞ | 6.25 | 1.514362 | 6.25 | 1.51108 |
| 2 | ∞ | | | 2 | ∞ | 1 | 1.0 | 1 | 1.0 |
| 3 | ∞ | | | 3 | 53.53209 | 1.7 | 1.539142 | 1.7 | 1.535365 |
| 4 | ∞ | | | 4 | −15.06776 | 5 | 1.0 | 5 | 1.0 |
| 5 | ∞ | | | 5 | ∞ | 2.8 | 1.514362 | 2.8 | 1.51108 |
| 6 | ∞ | | | 6 | ∞ | 12.635 | 1.0 | 16.10 | 1.0 |
| 7 (stop) | ∞ | 0.1 (φ3.9mm) | | | | 0.1 (φ4.004mm) | | 0.1 (φ3.06mm) | |
| 8 | 19.11291 | 0.50 | 1.542771 | | | 0.50 | 1.52915 | 0.50 | 1.52541 |
| 9 | ∞ | 0.05 | 1.0 | | | 0.05 | 1.0 | 0.05 | 1.0 |
| 9' | ∞ | 0.00 | 1.0 | | | 0.00 | 1.0 | 0.00 | 1.0 |
| 10 | 1.89795 | 2.20 | 1.542771 | | | 2.20 | 1.52915 | 2.20 | 1.52541 |
| 11 | −64.69400 | 1.17 | 1.0 | | | 1.22 | 1.0 | 0.76 | 1.0 |
| 12 | ∞ | 0.60 | 1.61869 | | | 0.6 | 1.57752 | 1.2 | 1.57063 |
| 13 | ∞ | | | | | | | | |

*di expresses the dislocation from the i-th surface to the (i+1)-th surface.

EP 1 562 187 A2

Aspheric surface data and optical path difference function data

| Collimator for DVD/CD<br>The fourth surface<br>Aspheric surface coefficient | |
|---|---|
| κ | -9.9960×E-1 |
| A4 | +4.7953xE-6 |

| The objective lens<br>The eighth surface<br>(HD-DVD: 10-order, DVD: 6-order, CD: 5-order, blazed wavelength :1nm)<br>Aspheric surface coefficient | |
|---|---|
| κ | +2.0683×E+1 |
| A4 | -8.9078xE-4 |
| A6 | +3.5215xE-4 |
| A8 | +5.8700xE-5 |
| A10 | -8.5380xE-6 |

| Optical path difference function | |
|---|---|
| B2 | -2.4339 |
| B4 | +1.9191xE-2 |
| B6 | +4.5213xE-2 |
| B8 | +7.3521xE-3 |
| B10 | -1.6475xE-3 |

| The ninth surface<br>(0 mm ≤ h ≤ 1.512 mm, HD-DVD: 0-order, DVD: 0-order, CD: 1- order, blazed wavelength: 1nm)<br>Optical path difference function | |
|---|---|
| B2 | -6.9927 |
| B4 | -6.3924xE-1 |
| B6 | -6.3509xE-2 |

| The 9' surface (1.512 mm < h)<br>The tenth surface<br>Aspheric surface coefficient | |
|---|---|
| κ | -3.9364xE-1 |
| A4 | +2.5764×E-3 |
| A6 | +2.3395×E-4 |
| A8 | +6.1839xE-5 |
| A10 | -1.2650xE-5 |
| A12 | +1.5620xE-5 |
| A14 | -2.1750xE-6 |

| The eleventh surface Aspheric surface coefficient | |
|---|---|
| κ | -1.0000×E+2 |
| A4 | +2.3002×E-2 |
| A6 | -1.5522×E-2 |
| A8 | +1.6292×E-2 |
| A10 | -1.0010×E-2 |
| A12 | +3.0245×E-3 |
| A14 | -3.6062×E-4 |

Example 3 is an example which corresponds to the optical pick-apparatus PU8 shown in Fig. 13, and the optical surface (the fourth surface) on the optical disk side of the second collimator lens, the optical surface (the eighth surface) on the light source side of the aberration correcting element, and the optical surface (the tenth surface) on the light source side and the optical surface (the eleventh surface) on the optical disk side of the light converging element are aspheric surfaces.

Further, the diffractive structure DOE is formed in the area in the range in which the height h from the optical axis is 0 mm < h < 1.512 mm, in the optical surface (the eighth surface) on the light source side of the aberration correcting element, and the optical surface (the ninth surface) on the optical disk side of the aberration correcting element.

Example 4 is an example, which corresponds to the optical pick-up apparatus PU6 shown in Fig. 11.

In Table 4, $f1_{obj}$, NA1, $\lambda1$, $m1_{obj}$, m1, t1 are respectively, the focal distance of the objective lens when the high density optical disk HD is used, numerical aperture of the objective lens, designed wavelength of the optical system, magnification of the objective lens, magnification of the optical system, thickness of the protective layer, and $f2_{obj}$, NA2, $\lambda2$, $m2_{obj}$, m2, t2 are like values at the time of use of DVD, and $f3_{obj}$, NA3, $\lambda3$, $m3_{obj}$, m3, t3 are like values at the time of use of CD.

Further, r (mm) is the radius of curvature, d (mm) is lens interval, $N\lambda1$, $N\lambda2$, $N\lambda3$ are, respectively, refractive indexes of the lens for the wavelength $\lambda1$, wavelength $\lambda2$, wavelength $\lambda3$, vd is Abbe's number of the lens of d-line.

Further, n1, n2, n3 are, respectively, diffraction order of the diffraction light of the first light flux, the second light flux, the third light flux generated in the superposition type diffractive structure.

The optical system of the present example is an optical system composed of the collimator lens, which is a plastic lens, the aberration correcting lens, which is a plastic lens, and the objective lens, which is composed of the light converging lens, which is a plastic lens.

Hereupon, the focal distance of the collimator lens is 10 mm. Its specific numerical data is shown in Table 4.

(Table 4)

| (Specification of the optical system) | | | | | | | |
|---|---|---|---|---|---|---|---|
| $fl_{OBJ}$=2.200, NA1= 0.85, $\lambda1$=408 nm, $m1_{OBJ}$= -0.0000, | | | | | | | |
| ml=-0.2199, d6=0.7187, d7(t1)=0.0875, | | | | | | | |
| $f2_{OBJ}$=2.278, NA2= 0.65, $\lambda2$=658 nm, $m2_{OBJ}$=0.0069, | | | | | | | |
| m2=-0.2199, d6=0.4990, d7(t2)=0.6 | | | | | | | |
| $f3_{OBJ}$=2.275 NA3= 0.45, $\lambda3$=785nm, $m3_{OBJ}$=0.0086, | | | | | | | |
| m3=-0.2319, d6=0.3209, d7(t3)=1.2 | | | | | | | |
| (Paraxial data) | | | | | | | |
| *1 r(mm) | r(mm) | d(mm) | $N\lambda1$ | $N\lambda2$ | $N\lambda3$ | vd | note |
| OBJ | | 9.1152 | | | | | *2 |
| 1 | 49.6901 | 1.5000 | 1.5242 | 1.5064 | 1.5032 | 56.5 | *3 |
| 2 | -5.8030 | 10.0000 | | | | | |

*1: surface number    *2: light emitting point

*3: collimator lens    *4: stop

(Table 4)   (continued)

| (Specification of the optical system) | | | | | | | |
|---|---|---|---|---|---|---|---|
| *1 r(mm) | r(mm) | d(mm) | Nλ1 | Nλ2 | Nλ3 | vd | note |
| STO | | 0.5000 | | | | | *4 |
| 3 | ∞ | 1.0000 | 1.5242 | 1.5064 | 1.5032 | 56.5 | *5 |
| 4 | ∞ | 0.1000 | | | | | |
| 5 | 1.4492 | 2.6200 | 1.5596 | 1.5406 | 1.5372 | 56.3 | |
| 6 | -2.8750 | d6 | | | | | |
| 7 | ∞ | d7 | 1.6211 | 1.5798 | 1.5733 | 30.0 | *6 |
| 8 | ∞ | | | | | | |

*1: surface number    *2: light emitting point

*5: objective lens    *6: protective layer

| (Aspheric surface coefficient) | | | | |
|---|---|---|---|---|
| | 1st- surface | 2nd-surface | 5th-surface | 6th- surface |
| κ | -0.66274E+02 | -0.83772E+00 | -0.65249E+00 | -0.43576E+02 |
| A4 | 0.00000E+00 | -0.12184E-03 | 0.77549E-02 | 0.97256E-01 |
| A6 | 0.00000E+00 | 0.00000E+00 | 0.29588E-03 | -0.10617E+00 |
| A8 | 0.00000E+00 | 0.00000E+00 | 0.19226E-02 | 0.81812E-01 |
| A10 | 0.00000E+00 | 0.00000E+00 | -1.2294E-02 | -0.41190E-01 |
| A12 | 0.00000E+00 | 0.00000E+00 | 0.29138E-03 | 0.11458E-01 |
| A14 | 0.00000E+00 | 0.00000E+00 | 0.21569E-03 | -0.13277E-02 |
| A16 | 0.00000E+00 | 0.00000E+00 | -0.16850E-03 | 0.00000E+00 |
| A18 | 0.00000E+00 | 0.00000E+00 | 0.44948E-04 | 0.00000E+00 |
| A20 | 0.00000E+00 | 0.00000E+00 | -0.43471E-05 | 0.00000E+00 |

(Table 1-3)

| (optical path difference function coefficient) | | |
|---|---|---|
| | 3rd-surface | 4th-surface |
| n1/n2/n3 | 0/1/0 | 0/0/1 |
| λB | 658 nm | 785 nm |
| B2 | 3.4000E-03 | 2.0476E-02 |
| B4 | -9.4218E-04 | -1.6910E-03 |
| B6 | -2.2028E-05 | 7.5611E-04 |
| B8 | -5.6731E-05 | -2.5220E-04 |
| B10 | 5.7463E-07 | 1.4140E-05 |

The objective lens is a HD/DVD/CD comparable lens by which, by an action of the first superposition type diffractive structure HOE formed on the optical surface (the third surface in Table 4) on the light source side of the aberration correcting lens, the spherical aberration due to the difference of thickness of the protective layer between the high density optical disk HD and CD is conducted. Hereupon, the light converging lens is a plastic lens in which the spherical aberration correction is optimized for the high density optical disk HD.

The first superposition type diffractive structure is structured by a plurality of ring-shaped zones, and each ring-shaped zone is divided into 5, stepwise. The step difference $\Delta$ of the step structure in each ring-shaped zone, is set to the height to satisfy $\Delta = 2 \cdot \lambda 1/(N\lambda 1 - 1)$. Herein, $N\lambda 1$ is a refractive index of the aberration correcting lens in the wavelength $\lambda 1$. Because the optical path difference added to the first light flux by this step structure, is $2 \times \lambda 1$, the first light flux is not received any action of the first superposition type diffractive structure, and transmits as it is. Further, because the optical path difference added to the third light flux by this step structure, is $1 \times \lambda 3$, the third light flux is also not received any action of the first superposition type diffractive structure, and transmits as it is. On the one hand, because the optical path difference added to the second light flux by this step structure, is about $0.2 \times \lambda 2$, and in one rig-shaped zone divided into 5, the optical path difference of just $1 \times \lambda 2$ is added to it, and the 1-order diffraction light is generated. In this manner, when only the second light flux is selectively diffracted, the spherical aberration due to the difference between t1 and t2 is corrected. Hereupon, the diffraction efficiency of the 0- order diffraction light (transmission light) of the first light flux generated in the first superposition type diffractive structure is 100 %, the diffraction efficiency of the 1-order diffraction light of the second light flux is 87 %, the diffraction efficiency of the 0-order diffraction light (transmission light) of the third light flux is 100 %, therefore, the high diffraction efficiency is obtained also for any light flux.

Further, the second superposition type diffractive structure is structured by a plurality of ring-shaped zones, and each ring-shaped zone is divided into 2, stepwise. The step difference $\Delta$ of the step structure in each ring-shaped zone, is set to the height to satisfy $\Delta = 5 \cdot \lambda 1/(N\lambda 1 - 1)$. Herein, $N\lambda 1$ is a refractive index of the aberration- correcting lens in the wavelength $\lambda 1$. Because the optical path difference added to the first light flux by this step structure, is $5 \times \lambda 1$, the first light flux is not received any action by the second superposition type diffractive structure, and transmits as it is. Further, because the optical path difference added to the second light flux by this step structure, is $3 \times \lambda 3$, the second light flux is also not received any action by the second superposition type diffractive structure, and transmits as it is. On the one hand, because the optical path difference added to the third light flux by this step structure, is about $0.5 \times \lambda 3$, and in one rig-shaped zone divided into 2, the optical path difference is shifted by just half-wavelength, almost all of the light amounts of the third light flux incident on the second superposition type diffractive structure, are distributed to 1-order diffraction light, and -1-order diffraction light. The second superposition type diffractive structure is designed so that the 1-order diffraction light of them is light converged on the information recording surface of CD, and when this diffraction action is used, the spherical aberration due to the difference between t1 and t2 is corrected.

Hereupon, the diffraction efficiency of the 0-order diffraction light (transmission light) of the first light flux generated in the second superposition type diffractive structure is 100 %, the diffraction efficiency of the 0-order diffraction light (transmission light) of the second light flux is 100 %, the diffraction efficiency of the 1-order diffraction light of the third light flux is 40.5 %, therefore, the high diffraction efficiency is obtained for the high density optical disk HD and DVD for which the speed- up at the time of recording is required.

Because the collimator lens of the present example is designed so that the first light flux is projected under the condition of a parallel light flux, the second light flux or the third light flux is projected under the condition of a weak divergent light flux by the influence of the chromatic aberration from the collimator lens. When the spherical aberration of the objective lens to the first wavelength $\lambda 1$ and the second wavelength $\lambda 2$ is optimized for the light flux of the parallel incidence, by the change of the parallelism of the light flux projected from the collimator lens, because the magnification of the objective lens is changed, the spherical aberration is generated.

When, by the collimator lens and the combination of the present example, The above amount of the spherical aberration is calculated, the spherical aberration is about 50 m$\lambda$RMS on DVD side (NA$_2$ = 0.65), about 35 m$\lambda$RMS on CD side (NA$_3$ = 0.45).

When, in the object lens of the present example, the designed magnification m2$_{obj}$ to the second light flux is set to -0.0069, and the designed magnification m3$_{obj}$ to the third light flux is set to -0.0086, it becomes a design in which the above-described generation of the spherical aberration is suppressed.

**EFFECTS OF THE INVENTION**

According to the present invention, in the optical pick-up apparatus in which the objective optical system, which has the phase structure, and in which the blue violet laser light source is used, and which can adequately conduct the recording/reproducing of the information for 3 kinds of disks whose recording densities are different, including the high density optical disk, DVD and CD, is mounted, the optical pick-up apparatus which can realize the simplification of the structure, and the cost reduction, and the optical information recording reproducing apparatus, can be obtained.

**Claims**

**1.** An optical pickup apparatus comprising:

a first light source emitting first light flux having first wavelength of $\lambda 1$;

a second light source emitting second light flux having second wavelength of $\lambda 2$, which is longer than $\lambda 1$;

a third light source emitting third light flux having third wavelength of $\lambda 3$, which is longer than $\lambda 2$; and

an objective optical system converging the first light flux onto an information recording surface of a first optical disk, which has a recording density $\rho 1$, converging the second light flux onto an information recording surface of a second optical disk, which has a recording density $\rho 2$ being larger than $\rho 1$, and converging the second light flux onto an information recording surface of a third optical disk, which has a recording density $\rho 3$ being larger than $\rho 2$,

wherein the objective optical system has a phase structure, and

wherein when a first magnification of the objective optical system for conducting reproducing information from and/or recording information on the first optical disk is represented by M1, a second magnification of the objective optical system for conducting reproducing information from and/or recording information on the second optical disk is represented by M2 and a third magnification of the objective optical system for conducting reproducing information from and/or recording information on the third optical disk is represented by M3, $|d_{M1-M2}|$, which represents an absolute value of a difference between M1 and M2, satisfies the following relation.

$$|d_{M1-M2}| < 0.02$$

2. The optical pickup apparatus of claim 1, wherein the first light source and the second light source are integrated into one unit.

3. The optical pickup apparatus of claim 2, wherein $|d_{M1-M3}|$, which represents an absolute value of a difference between M1 and M3 and $|d_{M2-M3}|$, which represents an absolute value of a difference between M2 and M3, satisfy the following relations.

$$0.02 < |d_{M1-M3}|$$

$$0.02 < |d_{M2-M3}|$$

4. The optical pickup apparatus of claim 2, wherein the phase structure is diffractive structure.

5. The optical pickup apparatus of claim 2, further comprising a chromatic aberration compensating element on a common optical path of the first light flux and the second light flux.

6. The optical pickup apparatus of claim 5, wherein the chromatic aberration compensating element is a diffraction optical element.

7. The optical pickup apparatus of claim 2, wherein at least one of M1 and M2 is zero, and M3 satisfies the following relation.

$$-0.17 < M3 < -0.025$$

8. The optical pickup apparatus of claim 2, wherein M1, M2 and M3 satisfy the following relations, respectively.

$$M1 = 0$$

$$-0.015 < M2 < 0$$

$$-0.17 < M3 < -0.025$$

9. The optical pickup apparatus of claim 2, further comprising a movable element, which is capable of being moved by an actuator in a direction of an optical axis of the movable element, on a common optical path of the first light flux and the second light flux.

10. The optical pickup apparatus of claim 9, wherein the movable element is one of a collimator lens, a coupling lens and a beam expander.

11. The optical pickup apparatus of claim 2, wherein the objective optical element includes at least a plastic lens, and
wherein the optical pickup apparatus further comprises a diffraction optical element on a common optical path of the first light flux and the second light flux, the diffraction optical element having a diffractive structure composed of plural ring-shaped zones, and each of the ring-shaped zones including a stepwise structure thereon,
wherein the diffraction optical element generates a phase difference to one of the first light flux and the second light flux and generates no phase difference to the other of the first light flux and the second light flux,
the diffraction optical element compensates a temperature characteristics of the objective optical element for the one of the first light flux and the second light flux, and
the objective optical system compensates a temperature characteristics of the objective optical element for the other of the first light flux and the second light flux.

12. The optical pickup apparatus of claim 2, wherein the objective optical element includes at least a plastic lens, and
wherein the optical pickup apparatus further comprises:

a diffraction optical element on a common optical path of the first light flux and the second light flux, the diffraction optical element having a diffractive structure composed of plural ring-shaped zones, and each of the ring-shaped zones including a stepwise structure thereon; and
a temperature characteristics-compensating element,

wherein the diffraction optical element generates a phase difference to one of the first light flux and the second light flux and generates no phase difference to the other of the first light flux and the second light flux,
the diffraction optical element compensates a temperature characteristics of the objective optical element for the one of the first light flux and the second light flux, and
the temperature characteristics-compensating element compensates a temperature characteristics of the other of the first light flux and the second light flux.

13. The optical pickup apparatus of claim 11, wherein a sign of the temperature characteristics of the objective optical system for the first light flux and a sign of the temperature characteristics of the objective optical system for the second light flux are different from each other.

14. The optical pickup apparatus of claim 12, wherein a sign of the temperature characteristics of the objective optical system for the first light flux and a sign of the temperature characteristics of the objective optical system for the second light flux are different from each other.

15. The optical pickup apparatus of the claim 11, wherein when a divided number of the stepwise structure in each of the ring shaped zones of the diffractive structure is represented by P, a depth of each steps of the stepwise structure in each of the ring shaped zones of the diffractive structure is represented by D, a refractive index of the diffraction optical element for the first wavelength $\lambda 1$ is represented by N, the following relations are satisfied,

$$0.35 \ \mu m < 11 < 0.45 \ \mu m$$

$$0.63 \ \mu m < 12 < 0.68 \ \mu m$$

$$D \cdot (N-1) / 11 = 2 \cdot q$$

where q represents a natural number and P represents a number selected from 4, 5 and 6.

16. The optical pickup apparatus of the claim 12, wherein when a divided number of the stepwise structure in each of the ring shaped zones of the diffractive structure is represented by P, a depth of each steps of the stepwise structure in each of the ring shaped zones of the diffractive structure is represented by D, a refractive index of the diffraction optical element for the first wavelength λ1 is represented by N, the following relations are satisfied,

$$0.35 \ \mu m < 11 < 0.45 \ \mu m$$

$$0.63 \ \mu m < 12 < 0.68 \ \mu m$$

$$D \cdot (N-1) \ / \ 11 = 2 \cdot q$$

where q represents a natural number and P represents a number selected from 4, 5 and 6.

17. The optical pickup apparatus of claim 2, further comprising a spherical aberration-compensating element on an optical path of the first light flux.

18. The optical pickup apparatus of claim 17, wherein the spherical aberration-compensating element is a movable element, which is capable of being moved by an actuator in a direction of an optical axis of the movable element.

19. The optical pickup apparatus of claim 18, wherein the movable element is one of a collimator lens, a coupling lens and a beam expander.

20. The optical pickup apparatus of claim 17, wherein the spherical aberration-compensating element is a liquid crystal phase controlling element.

21. The optical pickup apparatus of claim 17, further comprising a spherical aberration-detecting device to detect a spherical aberration of a spot formed on the information recording surface of the first optical disk,
    wherein the optical pickup apparatus is capable of compensating a change of the spherical aberration of the spot formed on the information recording surface of the first optical disk by moving the spherical aberration-compensating element in accordance with a detected result obtained by the spherical aberration-detecting device.

22. The optical pickup apparatus of claim 17, wherein the objective optical system includes at least a plastic lens, and
    wherein the optical pickup apparatus further comprises a temperature-detecting device to detect a temperature near the objective optical system or a temperature in the optical pickup apparatus, and
    wherein the optical pickup apparatus is capable of compensating a change of a spherical aberration of the plastic lens by moving the spherical aberration-compensating element in accordance with a detected result by the temperature-detecting device.

23. The optical pickup apparatus of claim 2, further comprising a light intensity distribution-converting element to converting a light intensity distribution of incident light flux,
    wherein at least one of the first light flux, the second light flux and the third light flux is emitted from the objective optical system after passing through two or more diffractive structure.

24. The optical pickup apparatus of claim 23, wherein the light intensity distribution-converting element is positioned on an optical path of the first light flux, and the first light flux is emitted from the objective optical system after passing through two or more diffractive structure.

25. The optical pickup apparatus of claim 2, further comprising two spherical aberration-compensating elements.

26. The optical pickup apparatus of claim 25, wherein at least one of the two spherical aberration-compensating elements is a liquid crystal phase controlling element, and the liquid crystal phase controlling element compensates a spherical aberration of the third light flux when information recording and/or information reproducing for the third optical disk is conducted.

27. The optical pickup apparatus of claim 26, wherein the other of the two spherical aberration-compensating elements compensates a spherical aberration of the first light flux when information recording and/or information reproducing for the first optical disk is conducted.

**28.** The optical pickup apparatus of claim 26, wherein at least one of M1 and M2 is zero, and M3 satisfiess the following relation.

$$-0.12 < M3 \leq 0$$

**29.** The optical pickup apparatus of claim 2, wherein when the thickness of a protective layer of the first optical disk is represented by t1, the thickness of a protective layer of the second optical disk is represented by t2, and the thickness of a protective layer of the third optical disk is represented by t3, the following relation is satisfied.

$$t1 < t2 < t3$$

**30.** The optical pickup apparatus of claim 2, wherein when the thickness of a protective layer of the first optical disk is represented by t1, the thickness of a protective layer of the second optical disk is represented by t2, and the thickness of a protective layer of the third optical disk is represented by t3, the following relation is satisfied.

$$t1 = t2 < t3$$

**31.** The optical pickup apparatus of claim 2, wherein $\lambda 1$, $\lambda 2$ and $\lambda 3$ satisfy the following relations, respectively.

$$0.35 \ \mu m < \lambda 1 < 0.45 \ \mu m$$

$$0.63 \ \mu m < \lambda 2 < 0.68 \ \mu m$$

$$0.75 \ \mu m < \lambda 3 < 0.81 \ \mu m$$

**32.** An optical information recording and/or reproducing apparatus comprising:

the optical pickup apparatus described in claim 2; and
an optical disk supporting section being capable of supporting the first optical disk, the second optical disk and the third optical disk.

**33.** The optical pickup apparatus of claim 1, wherein $|d_{M1-M2}|$, which represents an absolute value of a difference between M1 and M2, satisfies the following relation.

$$0 < |d_{M1-M2}| \ 0.02$$

**34.** The optical pickup apparatus of claim 33, further comprising a collimator lens on a common optical path of the first light flux and the second light flux,
wherein the collimator lens makes one of M1 and M2 to zero.

**35.** The optical pickup apparatus of claim 34, wherein M1 and M2 satisfy the following relations.

$$M1 = 0$$

$$-0.02 < M2 < 0$$

**36.** The optical pickup apparatus of claim 34, wherein M1 and M2 satisfy the following relations.

$$M2 = 0$$

$$0 < M1 < 0.02$$

**37.** The optical pickup apparatus of claim 35, wherein the collimator lens is utilized in an immovably fixed state.

**38.** The optical pickup apparatus of claim 37, wherein the collimator lens satisfies the following relation:

$$0 < \Delta2 / (fCL2 + \Delta2) < 0.1$$

where $\Delta2$ represents a difference between a distance from the collimator lens to a focusing point when a parallel light flux having a wavelength of $\lambda1$ is incident to an optical disk side surface of the collimator lens and a distance from the collimator lens to a focusing point when a parallel light flux having a wavelength of $\lambda2$ is incident to an optical disk side surface of the collimator lens; and fCL2 represents a focal length of the collimator lens for the light flux having the wavelength of $\lambda2$.

**39.** The optical pickup apparatus of claim 36, wherein the collimator lens is utilized in an immovably fixed state.

**40.** The optical pickup apparatus of claim 39, wherein the collimator lens satisfies the following relation:

$$0 < \Delta2 / (fCL2 + \Delta2) < 0.1$$

where $\Delta2$ represents a difference between a distance from the collimator lens to a focusing point when a parallel light flux having a wavelength of $\lambda1$ is incident to an optical disk side surface of the collimator lens and a distance from the collimator lens to a focusing point when a parallel light flux having a wavelength of $\lambda2$ is incident to an optical disk side surface of the collimator lens; and fCL2 represents a focal length of the collimator lens for the light flux having the wavelength of $\lambda2$.

**41.** The optical pickup apparatus of claim 34, further comprising a beam shaping optical element to convert an elliptic light flux emitted from a light source to a circular light flux between the first light source and the collimator lens.

**42.** The optical pickup apparatus of claim 33, further comprising a first photo detector,
wherein the first photo detector is capable of detecting the first light flux reflected by the first optical disk and detecting the second light flux reflected by the second optical disk.

**43.** The optical pickup apparatus of claim 33, wherein a distance from a surface of a protective layer of the first optical disk to the first light source is equal to a distance from a surface of a protective layer of the second optical disk to the second light source.

**44.** The optical pickup apparatus of claim 34, wherein a distance from a surface of a protective layer of the first optical disk to the collimator lens is equal to a distance from a surface of a protective layer of the second optical disk to the collimator lens.

**45.** The optical pickup apparatus of claim 34, wherein the collimator lens is positioned on a common optical path of the first light flux, the second light flux and the third light flux, and M3 satisfies the following relation.

$$-0.03 < M3 < 0$$

**46.** The optical pickup apparatus of claim 45, wherein the collimator lens is utilized in an immovably fixed state.

**47.** The optical pickup apparatus of claim 46, wherein the collimator lens satisfies the following relation:

$$0 < \Delta 3 / (fCL3 + \Delta 3) < 0.1$$

where $\Delta 3$ represents a difference between a distance from the collimator lens to a focusing point when a parallel light flux having a wavelength of $\lambda 1$ is incident to an optical disk side surface of the collimator lens and a distance from the collimator lens to a focusing point when a parallel light flux having a wavelength of $\lambda 3$ is incident to an optical disk side surface of the collimator lens; and fCL3 represents a focal length of the collimator lens for the light flux having the wavelength of $\lambda 3$.

48. The optical pickup apparatus of claim 45, further comprising a beam shaping optical element to convert an elliptic light flux emitted from a light source to a circular light flux between the first light source and the collimator lens.

49. The optical pickup apparatus of claim 33, wherein when the thickness of a protective layer of the first optical disk is represented by t1, the thickness of a protective layer of the second optical disk is represented by t2, and the thickness of a protective layer of the third optical disk is represented by t3, the following relation is satisfied.

$$t1 < t2 < t3$$

50. The optical pickup apparatus of claim 33, wherein when the thickness of a protective layer of the first optical disk is represented by t1, the thickness of a protective layer of the second optical disk is represented by t2, and the thickness of a protective layer of the third optical disk is represented by t3, the following relation is satisfied.

$$t1 = t2 < t3$$

51. The optical pickup apparatus of claim 45, further comprising a photo detector,
   wherein the photo detector capable of detecting at least two among the first light flux reflected by the first optical disk, the second light flux reflected by the second optical disk and the third light flux reflected by the third optical disk.

52. The optical pickup apparatus of claim 45, wherein at least two among a distance from a surface of a protective layer of the first optical disk to the first light source, a distance from a surface of a protective layer of the second optical disk to the second light source and a distance from a surface of a protective layer of the third optical disk to the third light source are conform.

53. The optical pickup apparatus of claim 45, wherein at least two among a distance from a surface of a protective layer of the first optical disk to the collimator lens, a distance from a surface of a protective layer of the second optical disk to the collimator lens and a distance from a surface of a protective layer of the third optical disk to the collimator lens are conform.

# FIG. 1 ( a )

DOE  100  100  100  100  100  100

OPTICAL AXIS

# FIG. 1 ( b )

DOE  100  100  100  100

OPTICAL AXIS

FIG. 2 ( a )

DOE

101

101

101

101

101

102

102

102

102

102

OPTICAL AXIS

FIG. 2 ( b )

DOE

101

101

101

101

102

102

102

102

102

OPTICAL AXIS

# FIG. 3 (a)

HOE

103    103    103

OPTICAL AXIS

# FIG. 3 (b)

103    103    103    HOE

103

OPTICAL AXIS

# FIG. 4 ( a )

DOE / NPS

104
104
104 104 104 104

105
105 105
105 105 105 105 105

OPTICAL AXIS

# FIG. 4 ( b )

DOE / NPS

104
104
104 104
104

105 105

OPTICAL AXIS

# FIG. 5

FIG. 6 (a)　FIG. 6 (b)　FIG. 6 (c)

FIG. 7

EP 1 562 187 A2

## FIG. 8

FIG. 9

EP 1 562 187 A2

FIG. 10

EP 1 562 187 A2

FIG. 11

EP 1 562 187 A2

# FIG. 12

EP 1 562 187 A2

# FIG. 13

EP 1 562 187 A2

EXAMPLE (1) LONGITUDINAL SPHERICAL ABERRATION VIEW

AXIS of ORDINATE: NA(DVD APERTURE DIAMETER IS 1.0)

AXIS OF ABSCISSA: SA (mm)

A VALUE OF NA IN WHICH DOTTED-LINE IS NECESSARY APERTURE DIAMETER.

ABERRATION CORECTION IN NECESSARY APERTURE DIAMETER FOR ALL OF HD DVD, DVD, CD IS CONDUCTED.

FIG. 14

EP 1 562 187 A2